(19) Europäisches Patentamt
European Patent Office
Office européen des brevets

(11) EP 4 059 999 A1

(12) EUROPEAN PATENT APPLICATION
published in accordance with Art. 153(4) EPC

(43) Date of publication:
**21.09.2022 Bulletin 2022/38**

(21) Application number: **20887579.9**

(22) Date of filing: **16.11.2020**

(51) International Patent Classification (IPC):
***C08L 33/06*** (2006.01) ***H01M 4/13*** (2010.01)
***H01M 4/36*** (2006.01) ***H01M 4/62*** (2006.01)
***H01M 4/66*** (2006.01) ***H01M 4/70*** (2006.01)
***C08K 3/08*** (2006.01)

(52) Cooperative Patent Classification (CPC):
**C08K 3/08; C08L 33/06; H01M 4/13; H01M 4/36; H01M 4/62; H01M 4/66; H01M 4/70;** Y02E 60/10

(86) International application number:
**PCT/JP2020/042598**

(87) International publication number:
**WO 2021/095883 (20.05.2021 Gazette 2021/20)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.11.2019 JP 2019206338**
**25.12.2019 JP 2019234961**
**22.01.2020 JP 2020008560**
**10.03.2020 JP 2020040905**

(71) Applicant: **APB Corporation**
**Tokyo 101-0041 (JP)**

(72) Inventors:
- **NISHIMURA, Hideki**
**Kyoto-shi, Kyoto 605-0995 (JP)**
- **NEKOHASHI, Yuki**
**Kyoto-shi, Kyoto 605-0995 (JP)**
- **MIZUNO, Yusuke**
**Kyoto-shi, Kyoto 605-0995 (JP)**
- **MINAMI, Kazuya**
**Kyoto-shi, Kyoto 605-0995 (JP)**
- **KITABA, Moe**
**Kyoto-shi, Kyoto 605-0995 (JP)**
- **HORIE, Hideaki**
**Tokyo 101-0041 (JP)**

(74) Representative: **Hoefer & Partner Patentanwälte mbB**
**Pilgersheimer Straße 20**
**81543 München (DE)**

# (54) LITHIUM ION BATTERY COLLECTOR, PRODUCTION METHOD FOR LITHIUM ION BATTERY COLLECTOR, AND LITHIUM ION BATTERY ELECTRODE

(57) A lithium ion battery current collector which is used in a lithium ion battery in contact with an electrode active material at one principal surface, characterized in that the current collector is provided with a surface layer on the principal surface in contact with the electrode active material, and an uneven structure is provided on a surface in which the surface layer is in contact with the electrode active material, the uneven structure is any of a plurality of recesses composed of closed figures as seen from above, a network structure, or a pattern of recesses and protrusions, which is provided in an outermost layer of the surface layer, and a depth of the recess is 10 to 45 μm, a length of a shortest portion of lengths passing through a centroid of the recess is 30 to 105 μm, and a proportion of an area of the recess as seen from above is 19% to 61% with respect to an area of a surface of the current collector provided with the recess as seen from above.

EP 4 059 999 A1

[FIG. 2]

1
L2
W2
G2
22
10
11
21
G1
L1
W1
VERTICAL DIRECTION
HORIZONTAL DIRECTION

## Description

### Technical Field

The present invention relates to a lithium ion battery current collector, a production method for lithium ion battery current collector, and a lithium ion battery electrode.

### Background Art

Lithium ion (secondary) batteries have been widely used in various applications in recent years as high-capacity, compact, and lightweight secondary batteries.

In the lithium ion battery, an electrode is generally formed by applying a positive electrode active material or a negative electrode active material or the like to a positive electrode current collector or a negative electrode current collector using a binder. In addition, in a case of a bipolar battery, a bipolar electrode, which has a positive electrode layer by applying a positive electrode active material or the like using a binder on one surface of a current collector, and has a negative electrode layer by applying a negative electrode active material or the like using a binder to the opposite surface, is configured.

Conventionally, an electrode structure having improved adhesiveness between a surface of a conductive resin layer provided on the current collector and an active material layer has been proposed. In the electrode structure, a current collector, in which a conductive resin layer is formed on at least one side of a conductive base material, a surface roughness Ra of the conductive resin layer is 0.1 μm or more and 1.0 μm or less, and in a case where a film thickness of the conductive resin layer is t [μm] and an average inclination angle of unevenness on a surface of the resin layer is θa [degree], t and θa satisfy $(1/3)\ t + 0.5 \leq \theta a \leq (1/3)\ t + 10$, is used, and the electrode structure has an active material layer (see Patent Literature 1).

### Citation List

### Patent Literature

[PTL 1] International Publication No. 2013/018686

### Summary of Invention

### Technical Problem

However, in the electrode structure disclosed in Patent Literature 1, there is a problem that reduction of a contact resistance between the conductive resin layer and the active material layer is not sufficient, and the entire current collector cannot be used as a resin current collector.

An object of the present invention is to provide a current collector having a low contact resistance between the current collector and an active material layer. Solution to Problem

Aspects of the present invention relates to a lithium ion battery current collector which is used in a lithium ion battery in contact with an electrode active material at one principal surface, characterized in that the current collector is provided with a surface layer on the principal surface in contact with the electrode active material, and an uneven structure is provided on a surface in which the surface layer is in contact with the electrode active material, the uneven structure is any of a plurality of recesses composed of closed figures as seen from above, a network structure, or a pattern of recesses and protrusions, which is provided in an outermost layer of the surface layer, and a depth of the recess is 10 to 45 μm, a length of a shortest portion of lengths passing through a centroid of the recess is 30 to 105 μm, and a proportion of an area of the recess as seen from above is 19% to 61% with respect to an area of a surface of the current collector provided with the recess as seen from above; a production method for a lithium ion battery current collector including a current collector substrate and a surface layer having a network structure provided on the current collector substrate, including a step of compressing the surface layer having the network structure onto the current collector substrate; and a lithium ion battery electrode including the lithium ion battery current collector and an electrode active material particle, in which at least a part of a surface of the electrode active material particle is coated with a coating layer including a polymer compound.

### Advantageous Effects of Invention

According to the present invention, it is possible to provide a current collector having a low contact resistance between the current collector and an active material layer.

Brief Description of Drawings

Fig. 1 is a perspective view schematically showing an example of a lithium ion battery current collector.
Fig. 2 is an enlarged top view of a part of the lithium ion battery current collector shown in Fig. 1.
Fig. 3 is a perspective view schematically showing an example of a lithium ion battery current collector having a conductive filler layer.
Fig. 4 is a perspective view schematically showing an example of a lithium ion battery current collector.
Fig. 5 is a cross-sectional view taken along an A-A line of the lithium ion battery current collector shown in Fig. 4.
Fig. 6 is a perspective view schematically showing another example of a lithium ion battery current collector.
Fig. 7 is a cross-sectional view taken along a B-B line of the lithium ion battery current collector shown in Fig. 6.
Fig. 8 is a cross-sectional view schematically showing an example of a lithium ion battery current collector including a resin current collector substrate.
Fig. 9 is a cross-sectional view schematically showing an example of a lithium ion battery electrode having the lithium ion battery current collector shown in Fig. 8 and electrode active material particles.
Fig. 10 is a cross-sectional view schematically showing an example of a lithium ion battery current collector including a resin current collector substrate having a two-layer constitution.
Fig. 11 is a cross-sectional view schematically showing an example of a lithium ion battery current collector including a metal current collector substrate.
Fig. 12 is a perspective view schematically showing a state in which a recess is formed by using a mesh.
Fig. 13 is a perspective view schematically showing a state in which a surface layer is formed by using a mesh.
Fig. 14 is a perspective view schematically showing a state in which a second layer is formed on the first layer to form a surface layer.
Figs. 15A, 15B, and 15C are process diagrams schematically showing a production method for the lithium ion battery current collector according to the third embodiment.

Description of Embodiments

Preferred embodiments of the present invention will be described with reference to the accompanying drawings. In each drawing, those with the same reference sign have the same or similar constitutions.

[Lithium ion battery current collector]

The lithium ion battery current collector is a lithium ion battery current collector which is used in a lithium ion battery in contact with an electrode active material at one principal surface, characterized in that the current collector is provided with a surface layer on the principal surface in contact with the electrode active material, and an uneven structure is provided on a surface in which the surface layer is in contact with the electrode active material, the uneven structure is any of a plurality of recesses composed of closed figures as seen from above, a network structure, or a pattern of recesses and protrusions, which is provided in an outermost layer of the surface layer, and a depth of the recess is 10 to 45 μm, a length of a shortest portion of lengths passing through a centroid of the recess is 30 to 105 μm, and a proportion of an area of the recess as seen from above is 19% to 61% with respect to an area of a surface of the current collector provided with the recess as seen from above.

In the lithium ion battery current collector, the surface layer is provided on the principal surface in contact with the electrode active material. The uneven structure is provided on the surface in which the surface layer is in contact with the electrode active material.

The uneven structure has the following three specific aspects.

In a first aspect of the uneven structure, the uneven structure is a plurality of recesses composed of closed figures as seen from above.

In a second aspect of the uneven structure, the uneven structure is a network structure.

In a third aspect of the uneven structure, the uneven structure is a pattern of recesses and protrusions, which is provided in an outermost layer of the surface layer.

In a case where the lithium ion battery current collector has the uneven structure of the first aspect, a depth of the recess is 10 to 45 μm, a length of a shortest portion of lengths passing through a centroid of the recess is 30 to 105 μm, and a proportion of an area of the recess as seen from above is 19% to 61% with respect to an area of a surface of the current collector provided with the recess as seen from above.

Further, in a case where the lithium ion battery current collector has the uneven structure of the first aspect, the lithium ion battery current collector preferably has the following form.

It is preferable that the above-described recess has two or more recesses having different shapes of figures as seen from above.

It is preferable that the above-described recess has a recess having an aspect ratio of 2.0 to 4.0 and a recess having an aspect ratio of 0.25 to 0.5.

It is preferable that the above-described recess has an elliptical shape as seen from above.

It is preferable that the above-described current collector consists of a resin composition including a polymer material and a conductive filler.

It is preferable that the principal surface of the above-described current collector in contact with the above-described electrode active material has a conductive filler layer in which a large number of the above-described conductive filler is distributed.

In a case where the lithium ion battery current collector has the uneven structure of the second aspect, the lithium ion battery current collector preferably has the following form.

It is preferable that the above-described network structure is a network structure having a mesh size of 20 to 200 μm and a thickness of 30 to 80 μm.

It is preferable that the above-described current collector has a resin current collector substrate including a polymer material (2A3) and a conductive filler, the above-described surface layer having the above-described network structure is provided on the resin current collector substrate, and a softening point of the polymer material (2A3) is 100°C to 200°C.

It is preferable that the above-described surface layer consists of two layers, a first layer of the above-described surface layer consists of a resin composition including a polymer material (2A2) and a conductive filler, the polymer material (2A2) has a glass transition temperature of 35°C or lower, and a second layer laminated on the first layer has a network structure.

It is preferable that the above-described current collector has a resin current collector substrate including a polymer material (2A3) and a conductive filler, and the above-described surface layer is provided on the resin current collector substrate.

Further, in a case where the lithium ion battery current collector has the uneven structure of the third aspect, the lithium ion battery current collector preferably has the following form.

It is preferable that the above-described uneven structure is the above-described pattern of recesses and protrusions, the above-described lithium ion battery current collector has two surface layers on the principal surface in contact with the above-described electrode active material, a first layer of the above-described surface layer consists of a resin composition including a polymer material (3A1) and a conductive filler, the polymer material (3A1) has a glass transition temperature of 35°C or lower, a second layer laminated on the first layer consists of a resin composition including a polymer material (3A2) having a carboxylic acid group and a conductive filler, the second layer has a pattern of recesses and protrusions on the surface in contact with the electrode active material, the second layer is an outermost layer of the above-described surface layer and is a layer in contact with the electrode active material, and the polymer material (3A1) and the polymer material (3A2) are different materials.

It is preferable that a height of the protrusion in the above-described pattern of recesses and protrusions is 10 to 70 μm, and a surface roughness Ra is 5 to 25 μm.

It is preferable that the above-described polymer material (3A2) is a vinyl resin having an SP value of 13 to 18.

It is preferable that the above-described polymer material (3A1) is a vinyl resin having an SP value of 9 to 10.

It is preferable that the above-described lithium ion battery current collector has a resin current collector substrate including a polymer material (3A3) and a conductive filler, and has the above-described surface layer provided on the resin current collector substrate, and the first layer of the above-described surface layer is a layer in contact with the resin current collector substrate.

Hereinafter, the case where the lithium ion battery current collector has the uneven structure of the first aspect, the case where the lithium ion battery current collector has the uneven structure of the second aspect, and the case where the lithium ion battery current collector has the uneven structure of the third aspect will be described.

Further, a lithium ion battery electrode including the lithium ion battery current collector of each aspect will also be described.

First, the case where the lithium ion battery current collector has the uneven structure of the first aspect (hereinafter, also referred to as a lithium ion battery current collector of the first aspect) will be described.

In a case where the lithium ion battery current collector has the uneven structure of the first aspect, the lithium ion battery current collector is a lithium ion battery current collector which is used in a lithium ion battery in contact with an electrode active material at one principal surface, characterized in that the current collector has a depth of 10 to 45 μm on the principal surface in contact with the electrode active material and has a plurality of recesses composed of closed figures as seen from above, a length of a shortest portion of lengths passing through a centroid of the recess is

30 to 105 μm, and a proportion of an area of the recess as seen from above is 19% to 61% with respect to an area of a surface of the current collector provided with the recess as seen from above.

A layer including the principal surface in contact with the electrode active material of the lithium ion battery current collector of the first aspect is referred to as a surface layer.

The lithium ion battery current collector of the first aspect is used in contact with the electrode active material. The current collector has a depth of 10 to 45 μm on the principal surface in contact with the electrode active material and has a plurality of recesses composed of closed figures as seen from above.

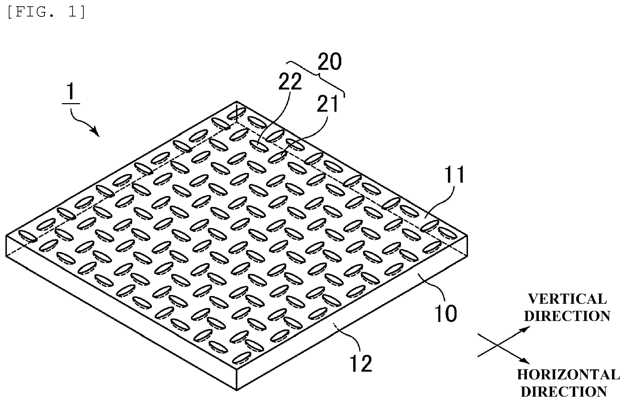

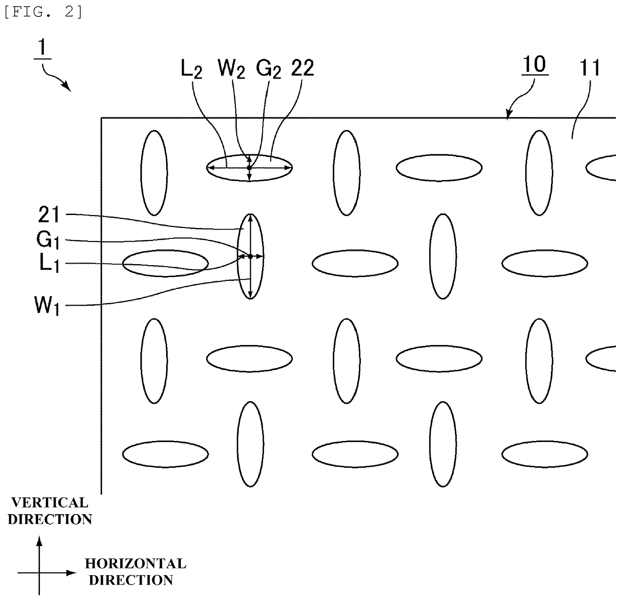

Fig. 1 is a perspective view schematically showing an example of the lithium ion battery current collector, and Fig. 2 is an enlarged top view of a part of the lithium ion battery current collector shown in Fig. 1.

A lithium ion battery current collector 1 is composed of a resin current collector layer 10, and the resin current collector layer has a principal surface 11 and a principal surface 12.

The principal surface 11 is a surface used in the lithium ion battery in contact with the electrode active material.

A plurality of recesses 20 are provided on the principal surface 11 which is a principal surface where the lithium ion battery current collector 1 is in contact with the electrode active material.

The recess 20 has a recess 21 which is an elliptical shape long in a vertical direction and a recess 22 which is an elliptical shape long in a horizontal direction.

Both the recess 21 and the recess 22 have an elliptical shape, and are composed of a closed figures as seen from above.

In a case where the recess is provided in the principal surface of the lithium ion battery current collector in contact with the electrode active material, a surface area of the principal surface increases. In this case, the area where the principal surface and the electrode active material are in contact with each other is sufficiently large, and a current collector having a low contact resistance between the current collector and an active material layer can be obtained.

Hereinafter, a shape of the recess provided on the principal surface of the lithium ion battery current collector will be described in detail.

The recess is a closed figure as seen from above, and a plurality of the recesses are provided on the principal surface of the lithium ion battery current collector.

Examples of a preferred shape of the recess include an elliptical shape, a circular shape, a polygonal shape (rectangles, squares, parallelograms, rhombuses, other quadrilaterals, triangles, pentagons, hexagons, and the like), a donut shape with curved outer circumference, and a frame shape with straight outer circumference.

The length of the shortest portion of lengths passing through a centroid of the recess is 30 to 105 μm.

In the recess 21 shown in Fig. 2, a centroid G1 is shown, and the length of the shortest portion of lengths passing through the centroid G1 is a length indicated by a double-headed arrow L1.

In the recess 22 shown in Fig. 2, a centroid G2 is shown, and the length of the shortest portion of lengths passing through the centroid G2 is a length indicated by a double-headed arrow W2.

In a case where the recess is an elliptical shape, the length of the shortest portion lengths passing through the centroid is a length of a minor axis.

In a case where the recess is a donut shape or a frame shape, a centroid in the outer peripheral figure and a length of the shortest portion of lengths passing through the centroid are determined.

In a case where the length of the shortest portion of lengths passing through the centroid of the recess is less than 30 μm, when a slurry including the electrode active material is disposed on the current collector and press-molded, the recesses are not sufficiently filled with the electrode active material, an effect of improving the surface area is not exhibited. On the other hand, in a case where the length of the shortest portion of lengths passing through the centroid of the recess is more than 105 μm, a degree of surface area improvement by providing the recess on the principal surface of the current collector is not sufficient.

A three-dimensional shape of the recess may be a shape in which the depth is constant, or may be a shape in which the depth is different in the recess. Examples of the shape in which the depth is different in the recess include a shape in which the three-dimensional shape is a semi-elliptical sphere in a case where the recess has an elliptical shape as seen from above.

The depth of the recess is 10 to 45 μm. In a case where the depth of the recess is 10 μm or more, the effect of improving the surface area by providing the recess on the principal surface of the current collector is suitably exhibited. Further, in a case where the depth of the recess exceeds 45 μm, the current collector may be cracked.

The depth of the recess is determined by a depth of the deepest part of the recess.

Regarding the area of the recess, the proportion of an area of the recess as seen from above is 19% to 61% with respect to an area of a surface of the current collector provided with the recess as seen from above.

The proportion of the area of the recess as seen from above is determined as a total value of areas of the plurality of recesses as seen from above.

In a case where the proportion of the area of the recess as seen from above is 19% to 61%, the effect of improving the surface area by providing the recess on the principal surface of the current collector is suitably exhibited.

In a case where the proportion of the area of the recess as seen from above is less than 19%, since a formation proportion of the recess is small, the effect of improving the surface area is small. Further, in a case where the proportion of the area of the recess as seen from above exceeds 61%, on the contrary, since only the recess is formed, a strength of the lithium ion battery electrode obtained by molding the current collector or the current collector together with the electrode active material is lowered, and durability in repeated charging and discharging is reduced.

A dimension per recess is preferably 30 to 290 μm in length (or width), and preferably 15 to 40 μm in depth.

The vertical length and the horizontal length may be the same or different from each other.

In a case where the recess is an elliptical shape, either the vertical length or the horizontal length is a length of the major axis, and the other is a length of the minor axis.

It is preferable that the recess has two or more recesses having different shapes of figures as seen from above.

For example, the two or more recesses having different shapes of figures as seen from above mean the following cases.

(1) in a case where types of geometric figures are different, for example, a case of being a rectangle shape and an ellipse shape

(2) in a case where dimensions of the same geometry are different, for example, a case of two types of ellipses or a case of two types of ellipses (that is, similar figures) with the same flattening but different lengths on the major and minor axis

(3) in a case where orientation of the recesses is different, for example, a case where ellipses having the same shape have a major axis oriented in the vertical direction or have a major axis oriented in the horizontal direction

The recess shown in Figs. 1 and 2 corresponds to a case where, in the case of (3) described above, the geometric figure is the same ellipse and consists of the recess 21 in which a major axis direction is oriented in the vertical direction and the recess 22 in which a major axis direction is oriented in the horizontal direction.

Since the recesses have two or more recesses having different shapes of figures as seen from above, it is possible to prevent an electrode active material layer from being displaced from the current collector due to activity of the electrode active material layer (volume change and accumulation of side reactants) by the repeated charging and discharging.

It is preferable that the recess has a recess having an aspect ratio of 2.0 to 4.0 and a recess having an aspect ratio of 0.25 to 0.5.

The aspect ratio of the recess is a ratio represented by "Dimension of recess in vertical direction/Dimension of recess in horizontal direction". In the recess shown in Fig. 2, the aspect ratio of the recess 21 is represented by W1/L1, and the aspect ratio of the recess 22 is represented by W2/L2. W1 and W2 are dimensions of each recess in the vertical direction, and L1 and L2 are dimensions of each recess in the horizontal direction.

In the dimensions shown in the drawings, the aspect ratio (W1/L1) of the recess 21 exceeds 1.0, and the aspect ratio (W2/L2) of the recess 22 is less than 1.0.

In a case of having such two types of recesses, it is preferable that the aspect ratio of the recess having a large aspect ratio is 2.0 to 4.0 and the aspect ratio of the recess having a small aspect ratio is 0.25 to 0.5.

By setting the combination of aspect ratios to such a range, it is possible to prevent the electrode active material layer from being displaced from the current collector due to activity of the electrode active material layer (volume change and accumulation of side reactants) by the repeated charging and discharging.

It is preferable that the lithium ion battery current collector consists of a resin composition including a polymer material and a conductive filler. A current collector consisting of such a resin composition is called a resin current collector.

Examples of the polymer material include polyethylene (PE), polypropylene (PP), polymethylpentene (PMP), polycycloolefin (PCO), polyethylene terephthalate (PET), polyether nitrile (PEN), polytetrafluoroethylene (PTFE), styrene butadiene rubber (SBR), polyacrylonitrile (PAN), polymethylacrylate (PMA), polymethylmethacrylate (PMMA), polyvinylidene fluoride (PVdF), an epoxy resin, a silicone resin, and a mixture thereof.

From the viewpoint of electrical stability, polyethylene (PE), polypropylene (PP), polymethylpentene (PMP), or polycycloolefin (PCO) is preferable, and polyethylene (PE), polypropylene (PP), or polymethylpentene (PMP) is more preferable.

Examples of the conductive filler include, but are not limited thereto, a metal [nickel, aluminum, stainless steel (SUS), silver, copper, titanium, or the like], carbon [graphite or carbon black (acetylene black, Ketjen black, furnace black, channel black, thermal lamp black, or the like), or the like], and a mixture thereof.

One kind of these materials may be used alone, or two or more kinds thereof may be used in combination. Moreover, an alloy or metal oxide thereof may be used. From the viewpoint of electrical stability, aluminum, stainless steel, carbon, silver, copper, titanium, a mixtures thereof is preferable, silver, aluminum, stainless steel, or carbon is more preferable, and carbon is still more preferable. Further, these conductive fillers may be those obtained by coating a conductive material (a metallic conductive filler among the above-described materials) around a particle-based ceramic material or a resin material with plating or the like.

An average particle size of the conductive filler is not particularly limited; however, it is preferably 0.01 to 10 μm, more preferably 0.02 to 5 μm, and still more preferably 0.03 to 1 μm, from the viewpoint of the electrical characteristics of the battery. In the present specification, the "average particle size of the conductive filler" means the maximum distance L among distances between any two points on the contour line of the conductive filler. As the value of the "average particle size", the average value of the particle sizes of the particles observed in several to several tens of visual fields using an observation means such as a scanning electron microscope (SEM) or a transmission electron microscope (TEM) shall be calculated and adopted.

A shape (form) of the conductive filler is not limited to the particle form, may be a form other than the particle form, and may be a form practically applied as a so-called filler-based conductive material such as carbon nanotubes.

The conductive filler may be a conductive fiber of which the shape is fibrous.

Examples of the conductive fiber include a carbon fiber such as a PAN-based carbon fiber or a pitch-based carbon fiber, a conductive fiber obtained by uniformly dispersing a metal having good conductivity or graphite in the synthetic fiber, a metal fiber obtained by making a metal such as stainless steel into a fiber, a conductive fiber obtained by coating a surface of an organic fiber coated with a metal, and a conductive fiber obtained by coating a surface of an organic fiber with a resin including a conductive substance. Among these conductive fibers, a carbon fiber is preferable. In addition, a polypropylene resin in which graphene is kneaded is also preferable.

In a case where the conductive filler is a conductive fiber, the average fiber diameter thereof is preferably 0.1 to 20 μm.

A weight proportion of the conductive filler to the current collector is preferably 10% to 50% by weight based on a weight of the current collector.

A thickness of the current collector is not particularly limited, but the thickness of the current collector is preferably 100 μm or less and more preferably 40 to 80 μm.

In a case where the thickness of the current collector is 100 μm or less, particularly 40 to 80 μm, the thickness of the current collector is thin, and a thin film can be obtained. Since such a current collector has a small volume in the battery, it is suitable for increasing battery capacity of the battery.

The thickness of the current collector is measured by a thickness of a portion where the recess is not formed.

A metal film may be provided on one principal surface of the current collector on a side where the recess is not provided. Examples of a method for providing the metal film include methods such as sputtering, electrodeposition, plating treatment, and coating. Examples of metal species constituting a metal layer include copper, nickel, titanium, silver, gold, platinum, aluminum, stainless steel, and nichrome.

The principal surface of the lithium ion battery current collector on a side where the recess is not provided is a surface where the current collector are in contact with each other in a case where the lithium ion batteries are laminated and used. By providing a metal layer on the surface, contact resistance between the current collectors at the time of laminating can be reduced.

It is preferable that the principal surface of the current collector in contact with the electrode active material has a conductive filler layer in which a large number of the conductive filler is distributed.

Examples of the conductive filler included in the conductive filler layer include the same conductive fillers included in the resin composition described above. The conductive filler included in the resin composition and the conductive filler included in the conductive filler layer may be the same type or may be different types.

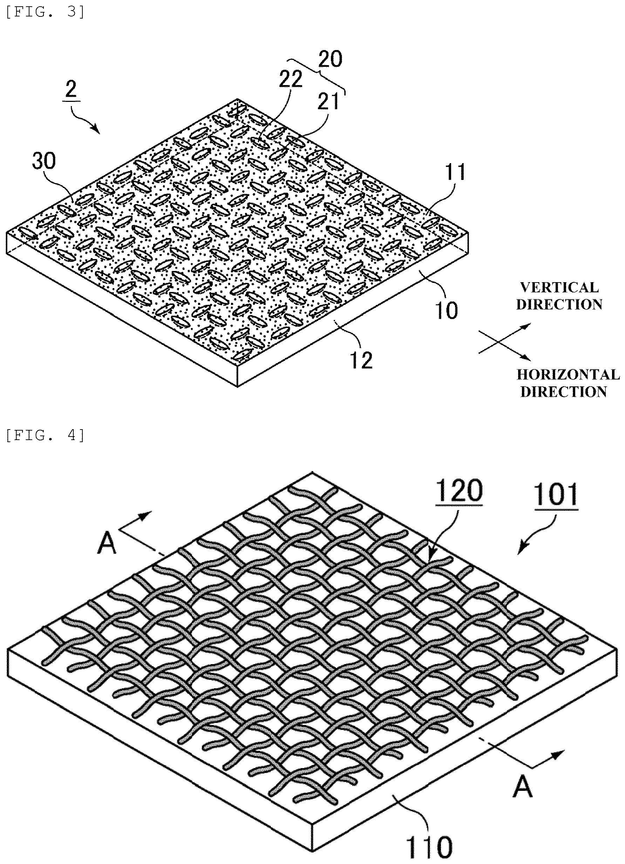

Fig. 3 is a perspective view schematically showing an example of a lithium ion battery current collector having the conductive filler layer.

A lithium ion battery current collector 2 shown in Fig. 3 has a conductive filler layer in which a large number of a conductive filler 30 is distributed on a principal surface 11.

The conductive filler layer is not a layer which is observed separately from a resin current collector layer 10, and this means that there is a portion where a large number of the conductive filler 30 is distributed on the principal surface 11 of a resin current collector layer 10.

In a case where there are many conductive fillers on the surface of the principal surface in which the recess is present compared to other portions (for example, a central portion in a thickness direction) of the resin current collector layer in the thickness direction, it can be said that the conductive filler layer is present.

The conductive filler layer may be provided on the surface of the recess in the principal surface of the current collector, or may be provided on both the surface of the recess and the surface other than the recess.

In a case where the conductive filler layer is present on the principal surface of the current collector in contact with the electrode active material, since sheet resistance of the lithium ion battery current collector can be further lowered, the contact resistance between the current collector and the active material layer can be further lowered.

Further, it is possible to suppress an increase in resistance value due to the repeated charging and discharging.

The electrode active material is in contact with the principal surface of the lithium ion battery current collector which has a plurality of recesses.

As the electrode active material, a positive electrode active material or a negative electrode active material can be used, and the electrode active material is preferably used as particulate electrode active material particles.

Examples of the positive electrode active material particles include a composite oxide of lithium and a transition metal {a composite oxide having one kind of transition metal ($LiCoO_2$, $LiNiO_2$, $LiAlMnO_4$, $LiMnO_2$, $LiMn_2O_4$, or the like), a composite oxide having two kinds of transition metal elements (for example, $LiFeMnO_4$, $LiNi_{1-x}CO_xO_2$, $LiMn_{1-y}CO_yO_2$, $LiNi_{1/3}Co_{1/3}Al_{1/3}O_2$, and $LiNi_{0.8}Co_{0.15}Al_{0.05}O_2$), a composite oxide having three or more kinds of metal elements [for example, $LiM_aM'_bM''_cO_2$ (where M, M', and M" are transition metal elements different each other and satisfy a + b + c = 1, and one examples is $LiNi_{1/3}Mn_{1/3}Co_{1/3}O_2$)], or the like the like}, a lithium-containing transition metal phosphate (for example, $LiFePO_4$, $LiCoPO_4$, $LiMnPO_4$, or $LiNiPO_4$), a transition metal oxide (for example, $MnO_2$ and $V_2O_5$), a transition metal sulfide (for example, $MoS_2$ or $TiS_2$), and a conductive polymer (for example, polyaniline, polypyrrole, polythiophene, polyacetylene, poly-p-phenylene, or polyvinyl carbazole). Two or more thereof may be used in combination.

Here, the lithium-containing transition metal phosphate may be one in which a part of transition metal sites is substituted with another transition metal.

The volume average particle size of the positive electrode active material particles is preferably 0.01 to 100 μm, more preferably 0.1 to 35 μm, and still more preferably 2 to 30 μm, from the viewpoint of the electrical characteristics of the battery.

Examples of the negative electrode active material particles include a carbon-based material [graphite, non-graphitizable carbon, amorphous carbon, a resin sintered product (for example, a sintered product obtained by sintering and carbonizing a phenol resin, a furan resin, or the like), cokes (for example, a pitch coke, a needle coke, and a petroleum coke), carbon fiber, or the like], a silicon-based material [silicon, silicon oxide ($SiO_x$), a silicon-carbon composite body (a composite body obtained by coating surfaces of carbon particles with silicon and/or silicon carbide, a composite body obtained by coating surfaces of silicon particles or silicon oxide particles with carbon and/or silicon carbide, silicon carbide, or the like), a silicon alloy (a silicon-aluminum alloy, a silicon-lithium alloy, a silicon-nickel alloy, a silicon-iron alloy, a silicon-titanium alloy, a silicon-manganese alloy, a silicon-copper alloy, a silicon-tin alloy, or the like), or the like], a conductive polymer (for example, polyacetylene or polypyrrole), a metal (tin, aluminum, zirconium, titanium, or the like), a metal oxide (a titanium oxide, a lithium-titanium oxide, or the like), a metal alloy (for example, a lithium-tin alloy, a lithium-aluminum alloy, or a lithium-aluminum-manganese alloy), or the like, and a mixture of the above and a carbon-based material.

Among them, regarding negative electrode active material particles which do not contain lithium or lithium ions in the inside thereof, a part or all of the negative electrode active material particles may be subjected to pre-doping treatment to incorporate lithium or lithium ions in advance.

Among these, a carbon-based material, a silicon-based material, and a mixture thereof is preferable from the viewpoint of battery capacity and the like. The carbon-based material is more preferably graphite, non-graphitizable carbon, or amorphous carbon, and the silicon-based material is more preferably silicon oxide or a silicon-carbon composite body.

The volume average particle size of the negative electrode active material particles is preferably 0.01 to 100 μm, more preferably 0.1 to 20 μm, and still more preferably 2 to 10 μm, from the viewpoint of the electrical characteristics of the battery.

It is preferable that at least a part of the surface of the electrode active material particles is coated with a coating layer including a polymer compound.

In a case where the electrode active material particles are coated electrode active material particles in which at least a part of the surface thereof is coated with the coating layer including a polymer compound, a change in volume of the electrode is alleviated, and expansion of the electrode can be suppressed.

A lithium ion battery electrode of a first aspect has the lithium ion battery current collector of the first aspect and the electrode active material particles, characterized in that at least a part of a surface of the electrode active material particles is coated with a coating layer including a polymer compound.

Examples of the polymer compound include a fluororesin, a polyester resin, a polyether resin, a vinyl resin, a urethane resin, a polyamide resin, an epoxy resin, a polyimide resin, a silicone resin, a phenol resin, a melamine resin, a urea resin, an aniline resin, an ionomer resin, polycarbonate, polysaccharide (sodium alginate, or the like), and a mixture thereof.

Further, as the polymer compound, those described as a non-aqueous secondary battery active material coating resin in Japanese Unexamined Patent Application, First Publication No. 2017-054703 can be suitably used.

Among these, a fluororesin, a polyester resin, a polyether resin, a vinyl resin, a urethane resin, a polyamide resin and a mixture thereof are preferable, and a vinyl resin is more preferable, from the viewpoint of wettability to and liquid absorption of an electrolyte solution.

The coating layer preferably includes a conductive auxiliary agent. As the conductive auxiliary agent, the same conductive filler as that exemplified as the conductive filler included in the resin current collector can be used.

The electrode active material layer including the electrode active material particles may include a conductive auxiliary agent in addition to the conductive auxiliary agent included in the coating layer of the coated electrode active material particles. As the conductive auxiliary agent, the same conductive auxiliary agent included in the coating layer described above can be suitably used.

The electrode active material layer is preferably a non-bound body that includes the electrode active material and does not include a binding material binding the electrode active materials to each other.

Here, in the non-bound body, position of the electrode active material is not fixed by the binding material (also referred to as a binder), and it means that the electrode active materials, and the electrode active material and the current collector are not irreversibly fixed to each other.

The electrode active material layer may include a pressure-sensitive adhesive resin.

As the pressure-sensitive adhesive resin, it is possible to suitably use, for example, a resin obtained by mixing the non-aqueous secondary battery active material coating resin described in Japanese Unexamined Patent Application, First Publication No. 2017-054703 with a small amount of an organic solvent and adjusting the glass transition temperature thereof to room temperature or lower, and those described as adhesives in Japanese Unexamined Patent Application, First Publication No. H10-255805.

Here, the pressure-sensitive adhesive resin means a resin having pressure-sensitive adhesiveness (an adhering property obtained by applying a slight pressure without using water, solvent, heat, or the like) without solidifying even in a case where a solvent component is volatilized and dried. On the other hand, a solution-drying type electrode binder, which is used as a binding material, means a binder that dries and solidifies in a case where a solvent component is volatilized, thereby firmly adhering and fixing active materials to each other.

As a result, the solution-drying type electrode binder (binding material) and the pressure-sensitive adhesive resin are different materials.

A thickness of the electrode active material layer is not particularly limited, but from the viewpoint of battery performance, is preferably 150 to 600 μm and more preferably 200 to 450 μm.

Hereinafter, the case where the lithium ion battery current collector has the uneven structure of the second aspect (hereinafter, also referred to as a lithium ion battery current collector of the second aspect) will be described.

In a case where the lithium ion battery current collector has the uneven structure of the second aspect, the lithium ion battery current collector is a lithium ion battery current collector which is used in a lithium ion battery in contact with an electrode active material at one principal surface, characterized in that the lithium ion battery current collector has a surface layer on a principal surface in contact with the electrode active material, and the surface layer has a network structure.

The lithium ion battery current collector of the second aspect is used in contact with the electrode active material. The principal surface in contact with the electrode active material has a surface layer, and the surface layer has a network structure.

It is preferable that the lithium ion battery current collector includes a current collector substrate in addition to the surface layer, and it is preferable that the surface layer is provided on the current collector substrate.

As the current collector substrate, a metal current collector substrate or a resin current collector substrate can be used.

In particular, it is preferable to use a resin current collector substrate as the current collector substrate, and it is preferable that the resin current collector substrate is a resin current collector substrate including a polymer material (2A3) and a conductive filler.

Details of the current collector substrate and the surface layer will be described in the description of each embodiment of the current collector shown below.

(First embodiment of lithium ion battery current collector of second aspect)

A lithium ion battery current collector according to a first embodiment of the lithium ion battery current collector of the second aspect consists of a resin current collector substrate and a surface layer provided on the resin current collector substrate.

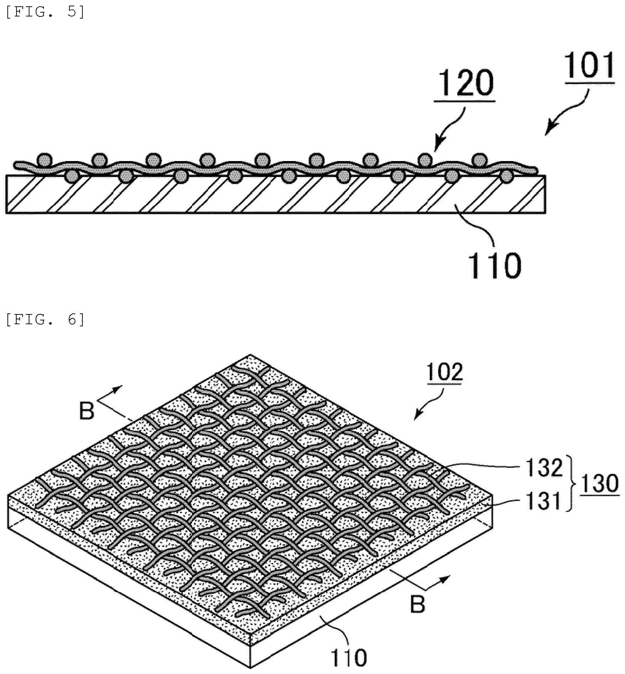

Fig. 4 is a perspective view schematically showing an example of the lithium ion battery current collector, and Fig. 5 is a cross-sectional view taken along an A-A line of the lithium ion battery current collector shown in Fig. 4.

A lithium ion battery current collector 101 shown in Fig. 4 has a resin current collector substrate 110 and a surface layer 120 provided on the resin current collector substrate 110.

The resin current collector substrate 110 includes a polymer material (2A3) and a conductive filler.

The surface layer 120 is a layer having a network structure and serves as a principal surface in contact with the electrode active material.

Examples of the polymer material (2A3) include polyethylene (PE), polypropylene (PP), polymethylpentene (PMP), polycycloolefin (PCO), polyethylene terephthalate (PET), polyether nitrile (PEN), polytetrafluoroethylene (PTFE), styrene butadiene rubber (SBR), polyacrylonitrile (PAN), polymethylacrylate (PMA), polymethylmethacrylate (PMMA), polyvinylidene fluoride (PVdF), an epoxy resin, a silicone resin, and a mixture thereof.

From the viewpoint of electrical stability, polyethylene (PE), polypropylene (PP), polymethylpentene (PMP), or polycycloolefin (PCO) is preferable, and polyethylene (PE), polypropylene (PP), or polymethylpentene (PMP) is more preferable.

An SP value of the polymer material (2A3) is preferably 7.3 to 9.3.

The SP value of the polymer material in the present specification is a solubility parameter [unit is $(cal/cm^3)^{1/2}$], and is calculated by the method described in the following document proposed by Fedors et al.

"POLYMER ENGINEERING AND SCIENCE, February, 1974, Vol. 14, No. 2, Robert F. Fedors (pages 147 to 154)"

The polymer material (2A3) is preferably a material having a softening point of 100°C to 200°C. The softening point of the polymer material is a Vicat softening temperature defined by JIS K 7206 (2016).

As the material having a softening point of 100°C to 200°C, polyethylene, polypropylene, or polymethylpentene is preferable.

As the conductive filler, the conductive filler described in the lithium ion battery current collector of the first aspect can be used, and the average particle size and shape (form) thereof can also be the same.

A weight proportion of the conductive filler to the resin current collector substrate is preferably 10% to 50% by weight based on a weight of the resin current collector substrate.

A thickness of the resin current collector substrate is not particularly limited, but the thickness of the resin current collector substrate is preferably 100 μm or less and more preferably 40 to 80 μm. In a case where the thickness of the resin current collector substrate is 100 μm or less, particularly 40 to 80 μm, the thickness of the current collector is thin, and a thin film can be obtained. Since such a current collector has a small volume in the battery, it is suitable for increasing battery capacity of the battery.

A metal film may be provided on one surface of the resin current collector substrate on a side where the surface layer is not provided. Examples of a method for providing the metal film include methods such as sputtering, electrodeposition, plating treatment, and coating.

The surface layer has a network structure. In a case where a surface layer having a network structure is provided on the principal surface in contact with the electrode active material, a surface area of the principal surface increases. In this case, the area where the principal surface and the electrode active material are in contact with each other is sufficiently large, and a current collector having a low contact resistance between the current collector and an active material layer can be obtained.

A mesh size of the network structure is preferably 20 to 200 μm, and a thickness thereof is preferably 30 to 80 μm.

Specifically, a mesh structure such as a metal mesh (SUS mesh, Cu mesh, and the like) and a resin mesh (nitrile mesh and the like) is preferable.

In a case where a metal mesh or a resin mesh is used as the network structure, any shape such as plain weave, twill weave, and tatami weave can be used.

A surface roughness Ra of the network structure portion of the surface layer is preferably 20 to 50 μm.

The surface roughness Ra can be measured according to JIS B 0601 (2013) .

In a case where the surface roughness Ra of the network structure portion of the surface layer is within the above-described range, an area where the network structure and the electrode active material are in contact with each other is sufficiently large, and resistance between the surface layer and the electrode active material can be further reduced.

As shown in Fig. 5, it is preferable that the network structure constituting the surface layer 120 bites into the resin current collector substrate 110. Since the surface layer bites into the resin current collector substrate, the surface layer and the resin current collector substrate are prevented from peeling off.

(Second embodiment of lithium ion battery current collector of second aspect)

A lithium ion battery current collector according to a second embodiment of the lithium ion battery current collector of the second aspect consists of a current collector substrate and a surface layer provided on the current collector substrate.

The surface layer consists of two layers, a first layer of the surface layer consists of a resin composition including a polymer material (2A2) and a conductive filler, the polymer material (2A2) has a glass transition temperature of 35°C or lower, and a second layer laminated on the first layer has a network structure.

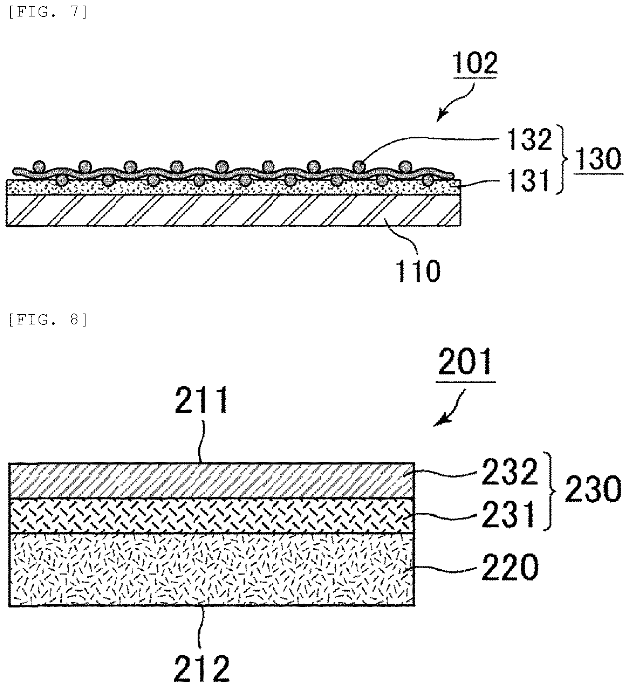

Fig. 6 is a perspective view schematically showing an example of the lithium ion battery current collector, and Fig. 7 is a cross-sectional view taken along a B-B line of the lithium ion battery current collector shown in Fig. 6.

A lithium ion battery current collector 102 shown in Fig. 6 has a resin current collector substrate 110 and a surface layer 130 provided on the resin current collector substrate 110.

The surface layer 130 consists of a first layer 131 and a second layer 132.

The first layer 131 is a layer made of a resin composition including a polymer material (2A2) and a conductive filler.

The second layer 132 has a network structure.

As the resin current collector substrate 110, the same one as the resin current collector substrate described in the section of the lithium ion battery current collector of the first embodiment can be used.

In the lithium ion battery current collector of the present embodiment, a metal current collector substrate may be used instead of the resin current collector substrate.

Examples of a material constituting the metal current collector substrate include one or more metal materials selected from the group consisting of copper, aluminum, titanium, nickel, tantalum, niobium, hafnium, zirconium, zinc, tungsten, bismuth, antimony, an alloy including one or more these metals, and a stainless alloy.

Among these materials, from the viewpoint of weight reduction, corrosion resistance, and high conductivity, a metal current collector substrate used as a positive electrode current collector is preferably aluminum, and a metal current collector substrate used as a negative electrode current collector is preferably copper.

A thickness of the metal current collector substrate is not particularly limited, but the thickness of the metal current collector substrate is preferably 100 μm or less and more preferably 40 to 80 μm.

The first layer consists of a resin composition including a polymer material (2A2) and a conductive filler.

The polymer material (2A2) is a material having a glass transition temperature of 35°C or lower.

The glass transition temperature of the polymer material in the present specification is measured according to JIS K 6240: 2011, a method of obtaining a glass transition temperature by raw rubber - differential scanning calorimetry (DSC).

In a case where the polymer material (2A2) has a glass transition temperature of 35°C or lower, the polymer material (2A2) is easily deformed at normal temperature, and the polymer material (2A2) and a member having a network structure are easily adhered to each other. Further, the first layer easily functions as an adhesive for adhering the current collector substrate and the second layer (member having a network structure).

The polymer material (2A2) is preferably a vinyl resin including a (meth)acrylic acid ester having 8 to 13 carbon atoms in a side chain as a monomer.

Examples of the (meth)acrylic acid ester having 8 to 13 carbon atoms in the side chain include octyl (meth)acrylate, nonyl (meth)acrylate, decyl (meth)acrylate, undecyl (meth)acrylate, lauryl (meth)acrylate, tridecyl (meth)acrylate, and 2-ethylhexyl (meth)acrylate.

A proportion of the (meth)acrylic acid ester having 8 to 13 carbon atoms in the side chain to the polymer material (2A2) is preferably 50% to 95% by weight.

The polymer material (2A2) may include a monomer other than the (meth) acrylic acid ester having 8 to 13 carbon atoms in the side chain.

Examples thereof include monocarboxylic acids having 3 to 15 carbon atoms, such as (meth)acrylic acid, crotonic acid, and cinnamic acid; (meth)acrylic acid esters having 7 or less carbon atoms in a side chain; and di(meth)acrylic acid esters.

Specific examples thereof include acrylic acid, methacrylic acid, methyl (meth)acrylate, ethyl (meth)acrylate, n-butyl (meth)acrylate, isobutyl (meth)acrylate, 2-hydroxyethyl (meth)acrylate, and 1,6-hexanediol di(meth)acrylate.

The polymer material (2A2) is preferably a vinyl resin having an SP value of 9 to 10.

In a case where the polymer material (2A2) is a vinyl resin having an SP value of 9 to 10, since physical properties are similar to those of the resin current collector substrate, adhesiveness between the first layer and the resin current collector substrate is improved.

It is preferable that a difference in SP value between the polymer material (2A3) constituting the resin current collector substrate and the polymer material (2A2) constituting the first layer of the surface layer is 1.0 or less.

A molecular weight (weight average molecular weight; hereinafter, also referred to as Mw) of the polymer material (2A2) is preferably 50,000 to 150,000. In a case where Mw of the polymer material (2A2) is in the range of 50,000 to 150,000, when applying a resin composition (composition for the first layer) including the polymer material (2A2) and the conductive filler to a substrate as a slurry, the resin composition can be applied well while maintaining dispersibility of the conductive filler.

The molecular weight of the polymer material in the present specification can be determined by the gel permeation chromatography (GPC) measurement under the following conditions.

Apparatus: "HLC-8120GPC" [manufactured by Tosoh Corporation]
Column: a column prepared by connecting "TSKgel GMHXL" (two columns) and "TSKgel Multipore HXL-M" (one column) [all manufactured by Tosoh Corporation]
Sample solution: 0.25% by weight tetrahydrofuran solution
Solution injection volume: 10 μL
Flow rate: 0.6 mL/min
Measurement temperature: 40°C
Detection apparatus: refractive index detector

Reference substance: standard polystyrene [manufactured by Tosoh Corporation]

As the conductive filler included in the first layer, the same conductive filler as that exemplified as the conductive filler included in the resin current collector substrate can be used.
A weight proportion of the conductive filler to the first layer is preferably 20% to 40% by weight based on a weight of the first layer.
A thickness of the first layer is not particularly limited, but the thickness (film thickness) of the first layer is preferably 3 to 10 $\mu$m.
In a case where the thickness of the first layer is 3 to 10 $\mu$m, it is possible to prevent the resin current collector substrate from curling.
The second layer is a layer having a network structure and laminated on the first layer. The second layer is a layer which is in contact with the electrode active material.
Same as the network structure of the surface layer provided in the lithium ion battery current collector of the first embodiment, in a case where the surface layer having a network structure is provided on the principal surface in contact with the electrode active material, the surface area of the principal surface increases. In this case, the area where the principal surface and the electrode active material are in contact with each other is sufficiently large, and a current collector having a low contact resistance between the current collector and an active material layer can be obtained.
A form of the network structure can be the same as the network structure of the surface layer provided in the lithium ion battery current collector of the first embodiment.
As shown in Fig. 7, it is preferable that the network structure constituting the second layer 132 bites into the first layer 131. Since the network structure constituting the second layer bites into the first layer, the first layer and the second layer are prevented from peeling off.
The electrode active material is in contact with the surface layer of the lithium ion battery current collector.
As the electrode active material, a positive electrode active material or a negative electrode active material can be used, and the electrode active material is preferably used as particulate electrode active material particles.
As the positive electrode active material particles, the positive electrode active material particles described in the lithium ion battery current collector of the first aspect can be used, and the volume average particle size thereof can also be the same.
As the negative electrode active material particles, the negative electrode active material particles described in the lithium ion battery current collector of the first aspect can be used, and the volume average particle size thereof can also be the same.
It is preferable that at least a part of the surface of the electrode active material particles is coated with a coating layer including a polymer compound.
In a case where the electrode active material particles are coated electrode active material particles in which at least a part of the surface thereof is coated with the coating layer including a polymer compound, a change in volume of the electrode is alleviated, and expansion of the electrode can be suppressed.
A lithium ion battery electrode of a second aspect has the lithium ion battery current collector of the second aspect and the electrode active material particles, characterized in that at least a part of a surface of the electrode active material particles is coated with a coating layer including a polymer compound.
As the polymer compound, the polymer compound described in the lithium ion battery current collector of the first aspect can be used.
The coating layer preferably includes a conductive auxiliary agent. As the conductive auxiliary agent, the conductive filler described in the lithium ion battery current collector of the first aspect can be used.
The electrode active material layer including the electrode active material particles may include a conductive auxiliary agent in addition to the conductive auxiliary agent included in the coating layer of the coated electrode active material particles. As the conductive auxiliary agent, the same conductive auxiliary agent included in the coating layer described above can be suitably used.
The electrode active material layer is preferably a non-bound body that includes the electrode active material and does not include a binding material binding the electrode active materials to each other.
As the non-bound body, the same non-bound body described in the lithium ion battery current collector of the first aspect can be used.
Hereinafter, the case where the lithium ion battery current collector has the uneven structure of the third aspect (hereinafter, also referred to as a lithium ion battery current collector of the third aspect) will be described.
In Japanese Unexamined Patent Application, First Publication No. 2019-087489, it is described that, by providing a carbon coat layer including a carbon material on the current collector, adhesiveness between the active material and the current collector can be improved and internal resistance can be reduced.
However, in the technique described in Japanese Unexamined Patent Application, First Publication No.

2019-087489, a polymer used in the carbon coat layer shrinks significantly during solvent drying, which may impair surface smoothness of the current collector.

Further, there may be a problem with strength of the current collector.

The lithium ion battery current collector of the third aspect is used in contact with the electrode active material. The principal surface in contact with the electrode active material has a surface layer, and a pattern of recesses and protrusions is provided on the outermost layer of the surface layer.

The lithium ion battery current collector of the third aspect is a current collector having low contact resistance between the current collector and the active material layer and having excellent strength.

In a case where the lithium ion battery current collector has the uneven structure of the third aspect, the lithium ion battery current collector is a lithium ion battery current collector which is used in a lithium ion battery in contact with an electrode active material at one principal surface, and it is preferable that the lithium ion battery current collector has two surface layers on the principal surface in contact with the electrode active material, a first layer of the surface layer consists of a resin composition including a polymer material (3A1) and a conductive filler, the polymer material (3A1) has a glass transition temperature of 35°C or lower, a second layer laminated on the first layer consists of a resin composition including a polymer material (3A2) having a carboxylic acid group and a conductive filler, the second layer has a pattern of recesses and protrusions on the surface in contact with the electrode active material, the second layer is an outermost layer of the surface layer and is a layer in contact with the electrode active material, and the polymer material (3A1) and the polymer material (3A2) are different materials.

The surface layer preferably has two surface layers.

The surface layer is a layer provided on the current collector substrate which is a main body of the lithium ion battery current collector, the first layer of the surface layer is provided on the current collector substrate, the second layer of the surface layer is laminated on the first layer, and the second layer is the outermost layer of the surface layer and is in contact with the electrode active material.

As the current collector substrate, a resin current collector substrate or a metal current collector substrate can be used.

(First embodiment of lithium ion battery current collector of third aspect)

First, a case where the lithium ion battery current collector includes a resin current collector substrate will be described.

Fig. 8 is a cross-sectional view schematically showing an example of the lithium ion battery current collector including a resin current collector substrate.

A lithium ion battery current collector 201 shown in Fig. 8 has a resin current collector substrate 220 and a surface layer 230 provided on the resin current collector substrate 220.

The resin current collector substrate 220 includes a polymer material (3A3) and a conductive filler.

The surface layer 230 consists of a first layer 231 which is a layer in contact with the resin current collector substrate 220 and a second layer 232 which is the outermost layer of the surface layer.

The lithium ion battery current collector 201 has a principal surface 211 and a principal surface 212.

One principal surface 211 is a surface consisting of the second layer 232 and is a layer which is in contact with the electrode active material.

The other principal surface 212 is a surface consisting of the resin current collector substrate 220.

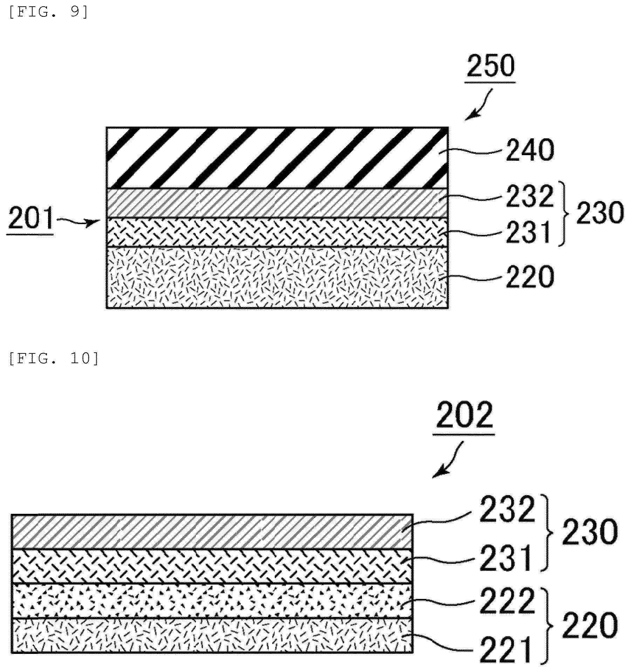

Fig. 9 is a cross-sectional view schematically showing an example of a lithium ion battery electrode having the lithium ion battery current collector shown in Fig. 8 and electrode active material particles.

A lithium ion battery electrode 250 shown in Fig. 9 is provided with the one principal surface 211 of the lithium ion battery current collector 201 shown in Fig. 8 and an electrode active material layer 240 including coated electrode active material particles.

The coated electrode active material particles are formed by coating at least a part of the surface of the electrode active material particles with a coating layer including a polymer compound (B).

Further, the coating layer may include a conductive auxiliary agent, and the electrode active material layer 240 may include a conductive auxiliary agent in addition to the coated electrode active material particles. Further, it is preferable that the electrode active material layer 240 includes an electrolyte solution.

Hereinafter, each component constituting the lithium ion battery current collector and the lithium ion battery electrode having the above-described constitution will be described.

The resin current collector substrate includes a polymer material (3A3) and a conductive filler.

Examples of the polymer material (3A3) include polyethylene (PE), polypropylene (PP), polymethylpentene (PMP), polycycloolefin (PCO), polyethylene terephthalate (PET), polyether nitrile (PEN), polytetrafluoroethylene (PTFE), styrene butadiene rubber (SBR), polyacrylonitrile (PAN), polymethylacrylate (PMA), polymethylmethacrylate (PMMA), polyvinylidene fluoride (PVdF), an epoxy resin, a silicone resin, and a mixture thereof.

From the viewpoint of electrical stability, polyethylene (PE), polypropylene (PP), polymethylpentene (PMP), or polycycloolefin (PCO) is preferable, and polyethylene (PE), polypropylene (PP), or polymethylpentene (PMP) is more preferable.

An SP value of the polymer material (3A3) is preferably 7.3 to 9.3.

The SP value of the polymer material can be determined in the same manner as the method described in the lithium ion battery current collector of the second aspect.

As the conductive filler, the conductive filler described in the lithium ion battery current collector of the first aspect can be used, and the average particle size and shape (form) thereof can also be the same.

A weight proportion of the conductive filler to the resin current collector substrate is preferably 10% to 50% by weight based on a weight of the resin current collector substrate.

A thickness of the resin current collector substrate is not particularly limited, but the thickness of the resin current collector substrate is preferably 100 μm or less and more preferably 40 to 80 μm.

In a case where the thickness of the resin current collector substrate is 100 μm or less, particularly 40 to 80 μm, the thickness of the current collector is thin, and a thin film can be obtained. Since such a current collector has a small volume in the battery, it is suitable for increasing battery capacity of the battery.

A metal film may be provided on one surface of the resin current collector substrate on a side where the surface layer is not provided. Examples of a method for providing the metal film include methods such as sputtering, electrodeposition, plating treatment, and coating.

The surface layer consists of a first layer and a second layer.

The first layer consists of a resin composition including a polymer material (3A1) and a conductive filler.

The polymer material (3A1) is a material having a glass transition temperature of 35°C or lower.

The glass transition temperature of the polymer material can be measured in the same manner as the method described in the lithium ion battery current collector of the second aspect.

The polymer material (3A1) is preferably a vinyl resin including a (meth)acrylic acid ester having 8 to 13 carbon atoms in a side chain as a monomer.

Examples of the (meth)acrylic acid ester having 8 to 13 carbon atoms in the side chain include octyl (meth)acrylate, nonyl (meth)acrylate, decyl (meth)acrylate, undecyl (meth)acrylate, lauryl (meth)acrylate, tridecyl (meth)acrylate, and 2-ethylhexyl (meth)acrylate.

A proportion of the (meth)acrylic acid ester having 8 to 13 carbon atoms in the side chain to the polymer material (3A1) is preferably 50% to 95% by weight.

The polymer material (3A1) may include a monomer other than the (meth) acrylic acid ester having 8 to 13 carbon atoms in the side chain.

Examples thereof include monocarboxylic acids having 3 to 15 carbon atoms, such as (meth)acrylic acid, crotonic acid, and cinnamic acid; (meth)acrylic acid esters having 7 or less carbon atoms in a side chain; and di(meth)acrylic acid esters.

Specific examples thereof include acrylic acid, methacrylic acid, methyl (meth)acrylate, ethyl (meth)acrylate, n-butyl (meth)acrylate, isobutyl (meth)acrylate, 2-hydroxyethyl (meth)acrylate, and 1,6-hexanediol di(meth)acrylate.

The polymer material (3A1) is preferably a vinyl resin having an SP value of 9 to 10.

In a case where the polymer material (3A1) is a vinyl resin having an SP value of 9 to 10, since physical properties are similar to those of the resin current collector substrate, adhesiveness between the first layer and the resin current collector substrate is improved.

It is preferable that a difference in SP value between the polymer material (3A3) constituting the resin current collector substrate and the polymer material (3A1) constituting the first layer of the surface layer is 1.0 or less.

A molecular weight (weight average molecular weight; hereinafter, also referred to as Mw) of the polymer material (3A1) is preferably 50,000 to 150,000. In a case where Mw of the polymer material (3A1) is in the range of 50,000 to 150,000, when applying a resin composition (composition for the first layer) including the polymer material (3A1) and the conductive filler to a substrate as a slurry, the resin composition can be applied well while maintaining dispersibility of the conductive filler.

The molecular weight of the polymer material can be determined by GPC measurement in the same manner as the method described in the lithium ion battery current collector of the second aspect.

As the conductive filler included in the first layer, the same conductive filler as that exemplified as the conductive filler included in the resin current collector substrate can be used.

A weight proportion of the conductive filler to the first layer is preferably 20% to 40% by weight based on a weight of the first layer.

A thickness of the first layer is not particularly limited, but the thickness (film thickness) of the first layer is preferably 3 to 10 μm.

In a case where the thickness of the first layer is 3 to 10 μm, it is possible to keep surface roughness of the first layer small and to prevent the substrate from curling in a case of forming the second layer.

The second layer is a layer laminated on the first layer, and consists of a resin composition including a polymer material (3A2) having a carboxylic acid group and a conductive filler.

The polymer material (3A2) includes a monomer having a carboxylic acid group or an acid anhydride group.

A polymer material including an acid anhydride group is also included in the polymer material (3A2) having a carboxylic acid group.

Examples of the monomer having a carboxylic acid group or an acid anhydride group include a (meth)acrylic acid; a monocarboxylic acid having 3 to 15 carbon atoms, such as crotonic acid and cinnamic acid; a dicarboxylic acid having 4 to 24 carbon atoms, such as (anhydrous) maleic acid, fumaric acid, (anhydrous) itaconic acid, citraconic acid, and mesaconic acid; and a trivalent, tetravalent, or higher valent polycarboxylic acid having 6 to 24 carbon atoms, such as aconitic acid.

In particular, it is preferable to include (meth)acrylic acid as a monomer. Further, a proportion of the (meth)acrylic acid to the polymer material (3A2) is preferably 30% to 95% by weight.

The polymer material (3A2) may include a monomer other than the monomer having a carboxylic acid group or an acid anhydride group.

Examples thereof include (meth)acrylic acid ester and di(meth)acrylic acid ester.

Specific examples thereof include methyl (meth)acrylate, n-butyl (meth)acrylate, isobutyl (meth)acrylate, 2-ethylhexyl (meth)acrylate, 2-hydroxyethyl (meth)acrylate, and 1,6-hexanediol di(meth)acrylate.

The polymer material (3A1) constituting the first layer and the polymer material (3A2) constituting the second layer are different materials. The polymer material (3A1) and the polymer material (3A2) are different materials, but the overall composition of the polymer material (3A1) and the polymer material (3A2) may be different, or the polymer material (3A1) and the polymer material (3A2) may each include the same monomer.

The polymer material (3A2) is preferably a vinyl resin having an SP value of 13 to 18.

When forming the second layer, in a case of using a slurry in which the polymer material (3A2) is dissolved in a solvent, it is preferable that the SP value of the solvent is close to the SP value of the polymer material (3A2) in order to improve solubility in the solvent.

In this case, since the difference from the preferred SP value (9 to 10) of the polymer material (3A1) forming the first layer is large, the solvent dissolving the polymer material (3A2) can prevent the first layer from being partially or wholly dissolved.

Therefore, the surface roughness of the surface of the second layer can be controlled.

A molecular weight (weight average molecular weight; hereinafter, also referred to as Mw) of the polymer material (3A2) is preferably 50,000 to 100,000.

As the conductive filler included in the second layer, the same conductive filler as that exemplified as the conductive filler included in the resin current collector substrate can be used.

A weight proportion of the conductive filler to the second layer is preferably 20% to 50% by weight based on a weight of the second layer.

A thickness of the second layer is not particularly limited, but the thickness (film thickness) of the second layer is preferably 10 to 70 μm.

In a case where the thickness of the second layer is 10 to 70 μm, since the active material easily enters the inside of the unevenness, performance of the lithium ion battery can be maintained well even in a case where a charging and discharging cycle is repeated.

The second layer is the outermost layer of the surface layer and is a layer in contact with the electrode active material.

The second layer has a pattern of recesses and protrusions on the surface in contact with the electrode active material.

Examples of the pattern of recesses and protrusions include a groove-like pattern provided on the surface of the second layer, a grid-like pattern, and a pattern provided with random unevenness.

By providing unevenness on the surface of the second layer in contact with the electrode active material, an area where the second layer and the electrode active material are in contact with each other is large, and resistance between the electrode active material and the second layer can be reduced.

A height of the protrusion in the pattern of recesses and protrusions included in the second layer is preferably 10 to 70 μm.

The height of the protrusion of the pattern of recesses and protrusions can be determined as a value of Rp (maximum ridge height) measured according to JIS B 0601 (2013) .

Further, a surface roughness Ra of the second layer is preferably 5 to 25 μm.

The surface roughness Ra of the second layer can be measured according to JIS B 0601 (2013).

In a case where the height of the protrusion of the pattern of recesses and protrusions and the surface roughness of the second layer are within the above-described range, the area where the second layer and the electrode active material are in contact with each other is sufficiently large, and the resistance between the electrode active material and the second layer can be further reduced.

The electrode active material is in contact with the second layer of the surface layer of the lithium ion battery current collector.

As the electrode active material, a positive electrode active material or a negative electrode active material can be used, and the electrode active material is preferably used as particulate electrode active material particles.

As the positive electrode active material particles, the positive electrode active material particles described in the lithium ion battery current collector of the first aspect can be used, and the volume average particle size thereof can also be the same.

As the negative electrode active material particles, the negative electrode active material particles described in the lithium ion battery current collector of the first aspect can be used, and the volume average particle size thereof can also be the same.

It is preferable that at least a part of the surface of the electrode active material particles is coated with a coating layer including a polymer compound (B).

In a case where the electrode active material particles are coated electrode active material particles in which at least a part of the surface thereof is coated with the coating layer including a polymer compound (B), a change in volume of the electrode is alleviated, and expansion of the electrode can be suppressed.

As the polymer compound (B), the polymer compound described in the lithium ion battery current collector of the first aspect can be used.

The coating layer preferably includes a conductive auxiliary agent. As the conductive auxiliary agent, the conductive filler described in the lithium ion battery current collector of the first aspect can be used.

The electrode active material layer including the electrode active material particles may include a conductive auxiliary agent in addition to the conductive auxiliary agent included in the coating layer of the coated electrode active material particles. As the conductive auxiliary agent, the same conductive auxiliary agent included in the coating layer described above can be suitably used.

The electrode active material layer is preferably a non-bound body that includes the electrode active material and does not include a binding material binding the electrode active materials to each other.

As the non-bound body, the same non-bound body described in the lithium ion battery current collector of the first aspect can be used.

The lithium ion battery current collector provided with the resin current collector substrate may have a constitution in which the resin current collector substrate consists of two or more resin layers.

Fig. 10 is a cross-sectional view schematically showing an example of the lithium ion battery current collector including a resin current collector substrate having a two-layer constitution.

In a lithium ion battery current collector 202 shown in Fig. 10, a resin current collector substrate 220 consists of two layers, a first film 221 and a second film 222.

Examples of the resin current collector substrate consisting of two or more resin layers include a multi-layer film obtained by preparing two or more types of films consisting of the resin composition including the polymer material (3A3) and the conductive filler, which constitutes the resin current collector substrate, and stacking and integrating the two or more types of films by heat pressing or the like.

As the material constituting each layer of the multi-layer film, the above-described polymer material (3A3) and the conductive filler can be used. It is preferable to use a combination of films in which the proportion of the polymer material (3A3) and the conductive filler is changed while the types of the polymer material (3A3) and the conductive filler are the same.

For example, it is conceivable to use a combination of a film in which the proportion of the conductive filler is increased to improve conductivity and a film in which the proportion of the conductive filler is decreased to improve strength.

In addition, the lithium ion battery current collector including the resin current collector substrate may be a constitution having a metal layer on the principal surface opposite to the principal surface in contact with the electrode active material (that is, the principal surface on the surface layer side).

The metal layer can be provided on the surface of the resin current collector substrate by a film forming method such as deposition and sputtering. Examples of metal species constituting a metal layer include copper, nickel, titanium, silver, gold, platinum, aluminum, stainless steel, and nichrome.

The principal surface of the resin current collector substrate side of the lithium ion battery current collector is a surface where the current collector are in contact with each other in a case where the lithium ion batteries are laminated and used. By providing a metal layer on the surface, contact resistance between the current collectors at the time of laminating can be reduced.

(Second embodiment of lithium ion battery current collector of third aspect)

Next, a case where the lithium ion battery current collector includes a metal current collector substrate will be described.

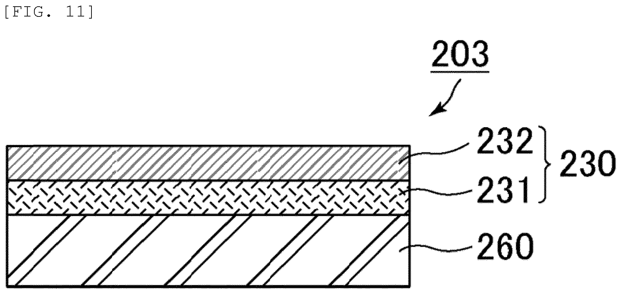

Fig. 11 is a cross-sectional view schematically showing an example of the lithium ion battery current collector including a metal current collector substrate.

A lithium ion battery current collector 203 shown in Fig. 11 has a metal current collector substrate 260 and a surface layer 230 provided on the metal current collector substrate 260.

A constitution of the surface layer 230 can be the same as that of the lithium ion battery current collector 201 of the first embodiment.

One principal surface 211 is a surface consisting of the second layer 232 and is a layer which is in contact with the electrode active material.

The other principal surface 212 is a surface consisting of the metal current collector substrate 260.

Examples of a material constituting the metal current collector substrate include one or more metal materials selected from the group consisting of copper, aluminum, titanium, nickel, tantalum, niobium, hafnium, zirconium, zinc, tungsten, bismuth, antimony, an alloy including one or more these metals, and a stainless alloy.

Among these materials, from the viewpoint of weight reduction, corrosion resistance, and high conductivity, a metal current collector substrate used as a positive electrode current collector is preferably aluminum, and a metal current collector substrate used as a negative electrode current collector is preferably copper.

A thickness of the metal current collector substrate is not particularly limited, but the thickness of the metal current collector substrate is preferably 100 μm or less and more preferably 40 to 80 μm.

Hereinafter, a production method for the lithium ion battery current collector will be described for each of the case where the lithium ion battery current collector has the uneven structure of the first aspect, the case where the lithium ion battery current collector has the uneven structure of the second aspect, and the case where the lithium ion battery current collector has the uneven structure of the third aspect.

For example, the lithium ion battery current collector of the first aspect can be produced by the following method.

A resin composition is obtained by mixing the polymer material and the conductive filler constituting the resin current collector layer, and other components as necessary.

Examples of the mixing method includes a method of obtaining a masterbatch of the conductive filler and then further mixing the masterbatch with the polymer material, a method of using a masterbatch of the polymer material, the conductive filler, and other components as necessary, and a method of collectively mixing all raw materials, and for the mixing thereof, it is possible to use a suitable known mixer with which pellet-shaped or powder-shaped components can be mixed, such as a kneader, an internal mixer, a Banbury mixer, and a roll.

The order of addition of each component at the time of mixing is not particularly limited. The obtained mixture may be further pelletized or powdered by a pelletizer or the like.

The obtained resin composition is formed into, for example, a film shape, whereby the resin current collector layer is obtained. Examples of the method of forming a material into a film shape include known film forming methods such as a T-die method, an inflation method, and a calendaring method.

Further, two or more types of resin current collector layers may be produced, and they may be stacked and heat-pressed to be integrated to obtain the resin current collector layer as a multi-layer film.

A recess is formed on one principal surface of the obtained resin current collector layer.

The recess can be formed by placing a mesh such as a metal mesh (SUS mesh and the like) and a resin mesh (nitrile mesh and the like) on the one principal surface of the resin current collector layer and heat-pressing from above and below.

In a case where the mesh is removed from the resin current collector layer after the heating press, a recess matching the shape of the mesh is formed on the one principal surface of the resin current collector layer.

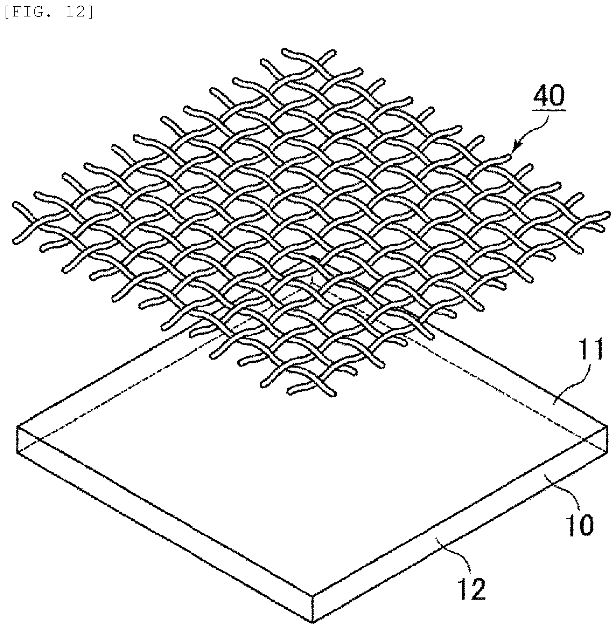

Fig. 12 is a perspective view schematically showing a state in which the recess is formed by using a mesh.

A mesh 40 is placed on one principal surface 11 of a resin current collector layer 10 and pressed to form a recess corresponding to the shape of the mesh.

In a case where a metal mesh or a resin mesh is used, any shape such as plain weave, twill weave, and tatami weave can be used.

A press temperature in the heating press is preferably 110°C to 160°C for the upper hot plate and 90°C to 120°C for the lower hot plate.

It is preferable to heat from above and below during the heating press. By heating from above and below, the recess can be uniformly formed on one principal surface of the resin current collector layer, and wrinkles can be prevented from occurring in the resin current collector layer.

In a case where the press temperature is too high, the mesh may fuse with the resin current collector layer. Further, in a case where the press temperature is too low, the formation of the recess is insufficient or non-uniform. In addition, the current collector may be wrinkled.

A press time may be a time sufficient to uniformly apply heat to the resin current collector layer, but is preferably 10 to 60 seconds. In a case where the press time is too high, the mesh may fuse with the resin current collector layer. Further, in a case where the press time is too low, the formation of the recess is insufficient or non-uniform.

A press pressure is preferably such that a load on the resin current collector layer is 300 to 1500 kN or 4.8 to 24.0 MPa.

In a case where the load is appropriate, the recess can be uniformly formed on one principal surface of the resin current collector layer, and wrinkles can be prevented from occurring in the resin current collector layer.

In a case where the load is too large, the mesh may bite deeply into the resin current collector layer and may not come off, and the recess may be too deep to reduce strength of the current collector. On the other hand, in a case where the load is too small, the formation of the recess is insufficient or non-uniform. In addition, the resin current collector layer may be wrinkled.

At the same time as the formation of the recess, or before and after the formation of the recess, a conductive filler layer can be formed.

By attaching a conductive filler to the mesh for forming the recess and heat-pressing the conductive filler so that the conductive filler touches the resin current collector layer, the conductive filler can be attached to the surface of the recess. In this case, the conductive filler layer is formed on the surface of the recess.

A method of attaching the conductive filler to the mesh is not particularly limited, and examples thereof include a method of pressing the mesh against the conductive filler, a method of applying static electricity to the resin mesh to charge the resin mesh and attaching a carbon-based filler, and a method of spraying the conductive filler dispersed in a solution of methanol onto the mesh to attach the conductive filler.

Further, by applying a dispersion liquid in which the conductive filler is dispersed in a solution to the principal surface of the resin current collector layer and drying the dispersion liquid, the conductive filler layer can be formed on the principal surface of the resin current collector layer.

Thereafter, the recess can be formed on the principal surface on which the conductive filler layer is formed.

In this case, the conductive filler layer is formed on both the surface of the recess and the surface other than the recess.

A dispersing agent may be used to disperse the conductive filler in the solution. The dispersing agent is not particularly limited, but a dispersing agent which can withstand a voltage in the lithium ion battery electrode is preferable. Among dispersing agents, examples of a dispersing agent which exhibits appropriate dispersion, can withstand voltage, and is soluble in an organic solvent include N-vinylpyrrolidone and a copolymer of acrylic acid and (meth)acrylic acid ester.

The lithium ion battery current collector can be produced by the above-described method.

A lithium ion battery electrode can be produced by forming an electrode active material layer including electrode active material particles on the principal surface having a plurality of recesses in the lithium ion battery current collector.

The electrode active material particles are preferably coated electrode active material particles in which at least a part of the surface thereof is coated with a coating layer including a polymer compound.

The coated electrode active material particles can be obtained by coating the electrode active material particles with a polymer compound. For example, the coated electrode active material particles can be obtained by putting the electrode active material particles in an all-purpose mixer and stirring the mixture, adding dropwise and mixing a resin solution including the polymer compound, mixing the conductive filler as necessary, raising the temperature while stirring, reducing the pressure, and maintaining the mixture for a predetermined time.

The coated electrode active material particles obtained above are mixed with an electrolyte solution or a solvent, and the conductive filler added thereto as necessary to produce a slurry. Thereafter, by applying the above-described slurry to the principal surface of the lithium ion battery current collector having a plurality of recesses and drying the slurry to form an electrode active material layer, the lithium ion battery electrode can be produced.

A lithium ion battery can be produced using the lithium ion battery electrode.

The lithium ion battery is obtained by combining electrodes to be counter electrodes, housing the electrodes together with a separator in a cell container, injecting an electrolyte solution, and sealing the cell container.

Examples of the separator include known separators for a lithium ion battery, such as a porous film made of polyethylene or polypropylene, a lamination film of a porous polyethylene film and a porous polypropylene, a non-woven fabric made of a synthetic fiber (a polyester fiber, an aramid fiber, or the like), a glass fiber, or the like and those above of which the surface is attached with ceramic fine particles such as silica, alumina, and titania.

A known electrolyte solution can be used as the electrolyte solution.

As an electrolyte, an electrolyte used in the known electrolyte solution can be used, and examples thereof include lithium salts of inorganic anion, such as $LiPF_6$, $LiBF_4$, $LiSbF_6$, $LiAsF_6$, $LiClO_4$, and $LiN(FSO_2)_2$, and lithium salts of organic anion, such as $LiN(CF_3SO_2)_2$, $LiN(C_2F_5SO_2)_2$, and $LiC(CF_3SO_2)_3$. Among these, $LiN(FSO_2)_2$ is preferable from the viewpoints of battery output and charging and discharging cycle characteristics.

As the solvent, a non-aqueous solvent used in the known electrolyte solution can be used, and for example, a lactone compound, a cyclic or chain-like carbonic acid ester, a chain-like carboxylic acid ester, a cyclic or chain-like ether, a phosphoric acid ester, a nitrile compound, an amide compound, a sulfone, a sulfolane, or a mixture thereof can be used.

For example, the lithium ion battery current collector of the second aspect can be produced by the following method.

A method for producing the lithium ion battery current collector of the second aspect is also a production method for the lithium ion battery current collector according to the present embodiment.

The production method for a lithium ion battery current collector according to the present embodiment, which is a production method for a lithium ion battery current collector including a current collector substrate and a surface layer having a network structure provided on the current collector substrate, is characterized in that the production method includes a step of compressing the surface layer having the network structure onto the current collector substrate.

Hereinafter, specific embodiments of the production method for the lithium ion battery current collector will be described.

(First embodiment of production method for lithium ion battery current collector)

A production method for the lithium ion battery current collector according to a first embodiment is characterized in that the current collector substrate is a resin current collector substrate, and the resin current collector substrate consists of a resin composition including a polymer material (2A3) having a softening point of 100°C to 200°C and a conductive filler, and the production method includes a step of compressing the resin current collector substrate to the surface layer while heating the resin current collector substrate to 100°C to 200°C using a heating tool.

A composition for a resin current collector substrate is obtained by mixing the polymer material (2A3) and the conductive filler constituting the resin current collector substrate, and other components as necessary.

Examples of the mixing method includes a method of obtaining a masterbatch of the conductive filler and then further mixing the masterbatch with the polymer material (2A3), a method of using a masterbatch of the polymer material (2A3), the conductive filler, and other components as necessary, and a method of collectively mixing all raw materials, and for the mixing thereof, it is possible to use a suitable known mixer with which pellet-shaped or powder-shaped components can be mixed, such as a kneader, an internal mixer, a Banbury mixer, and a roll.

The order of addition of each component at the time of mixing is not particularly limited. The obtained mixture may be further pelletized or powdered by a pelletizer or the like.

The obtained composition for a resin current collector substrate is formed into, for example, a film shape, whereby the resin current collector substrate is obtained. Examples of the method of forming a material into a film shape include known film forming methods such as a T-die method, an inflation method, and a calendaring method.

In addition, in a case where a resin current collector substrate consisting of two or more resin layers is used, a method in which two or more types of resin current collector substrates formed on a film by the above-described method are stacked and heat-pressed to be integrated into a multi-layer film can be used.

Further, a metal layer may be formed on one principal surface (principal surface which is not planned to form the surface layer) of the resin current collector substrate.

Separately, a material having a network structure is prepared.

The material having a network structure is a material which becomes the surface layer.

Specifically, a material having a mesh structure such as a metal mesh (SUS mesh, Cu mesh, and the like) and a resin mesh (nitrile mesh and the like) is preferable.

The resin current collector substrate is compressed to the surface layer while being heated to 100°C to 200°C using a heating tool.

Since the softening point of the polymer material (2A3) constituting the resin current collector substrate is 100°C to 200°C, the resin current collector substrate is softened by heating the resin current collector substrate to 100°C to 200°C using a heating tool. By placing a surface layer made of the material having a network structure on the resin current collector substrate and compressing the resin current collector substrate, the material having a network structure bites into the resin current collector substrate, and the network structure is fixed to the resin current collector substrate.

By the above-described steps, the lithium ion battery current collector according to the first embodiment is obtained.

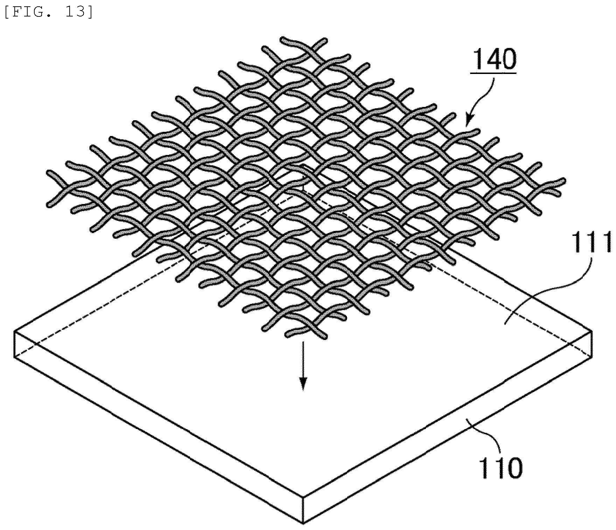

Fig. 13 is a perspective view schematically showing a state in which the surface layer is formed by using a mesh.

By placing a mesh 140 on one principal surface 111 of a resin current collector substrate 110 and pressing while heating to 100°C ~ 200°C, the mesh 140 bites into the principal surface 111 of the resin current collector substrate 110 and is fixed to form a surface layer.

It is preferable to heat from above and below during the heating press. By heating from above and below, wrinkles can be prevented from occurring in the resin current collector substrate.

Further, in a case where the press temperature is too low, the formation of the surface layer may be insufficient.

In addition, the resin current collector substrate may be wrinkled.

A press time may be a time sufficient to uniformly apply heat to the resin current collector substrate, but is preferably 10 to 60 seconds. In a case where the press time is too high, the network structure may bite into the resin current collector substrate too much. Further, in a case where the press time is too low, the formation of the surface layer is insufficient.

A press pressure is preferably such that a load on the resin current collector substrate is 10 to 40 MPa.

In a case where the load is appropriate, wrinkles can be prevented from occurring in the resin current collector substrate.

In a case where the load is too large, the network structure may bite into the resin current collector substrate too much.

On the other hand, in a case where the load is too small, the formation of the surface layer is insufficient. In addition, the resin current collector substrate may be wrinkled.

(Second embodiment of production method for lithium ion battery current collector)

A production method for the lithium ion battery current collector according to a second embodiment is characterized in that the production method includes a first layer forming step of applying a solution including a polymer material (2A2) having a glass transition temperature of 35°C or lower and a conductive filler to the current collector substrate and drying the solution to form a first layer, and a step of placing a second layer having a network structure on the first layer and compressing the layers.

First, a current collector substrate is prepared.

The current collector substrate may be a resin current collector substrate or a metal current collector substrate.

A composition for a first layer is obtained by mixing the polymer material (2A2) and the conductive filler constituting the first layer of the surface layer, and other components as necessary.

The composition for a first layer is preferably a slurry in which the polymer material (2A2) and the conductive filler are dispersed in a solvent. As the solvent, hexane, cyclohexane, toluene, acetone, trichloromethane, dichloromethane, tetrahydrofuran, or the like can be used.

Further, dipropylene glycol, tripropylene glycol, or the like may be blended as a dispersing agent.

The first layer can be formed on the current collector substrate by applying the composition for a first layer to one principal surface of the current collector substrate and drying the composition. The coating method is not particularly limited.

A coating thickness of the first layer is preferably 3 to 10 μm.

The polymer material (2A2) constituting the first layer of the surface layer is a material having a glass transition temperature of 35°C or lower.

Since the polymer material (2A2) is easily deformed at normal temperature, the second layer can be adhered to the first layer by placing the second layer having a network structure on the first layer and compressing the layers.

The first layer and the second layer can be compressed at normal temperature (approximately 15°C to 30°C) .

By the above-described steps, the lithium ion battery current collector according to the second embodiment is obtained.

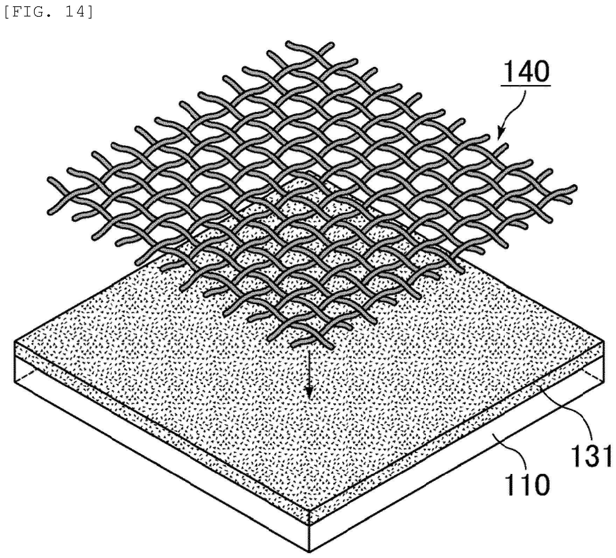

Fig. 14 is a perspective view schematically showing a state in which the second layer is formed on the first layer to form the surface layer.

A first layer 131 is formed on one principal surface 111 of a current collector substrate 110, a mesh 140 to be the second layer is placed thereon, and by pressing at normal temperature, the mesh 140 bites into the first layer 131 and is fixed to become a second layer 132, whereby a surface layer 130 is formed.

A press pressure at the time of compressing is preferably such that a load on the current collector substrate is 150 to 300 MPa.

In a case where the load is appropriate, wrinkles can be prevented from occurring in the current collector substrate.

In a case where the load is too large, the network structure may bite into the current collector substrate too much.

On the other hand, in a case where the load is too small, the formation of the surface layer is insufficient. In addition, the current collector substrate may be wrinkled.

(Third embodiment of production method for lithium ion battery current collector)

A production method for the lithium ion battery current collector according to a third embodiment is characterized in that the production method includes a first layer forming step of applying a solution including a polymer material (2A2) having a glass transition temperature of 35°C or lower and a conductive filler to a support and drying the solution to form a first layer, a surface layer forming step of placing a second layer having a network structure on the first layer and compressing the second layer to form a surface layer, and a step of peeling off the support from the surface layer, placing the first layer of the surface layer on the current collector substrate, and compressing the surface layer to the current collector substrate.

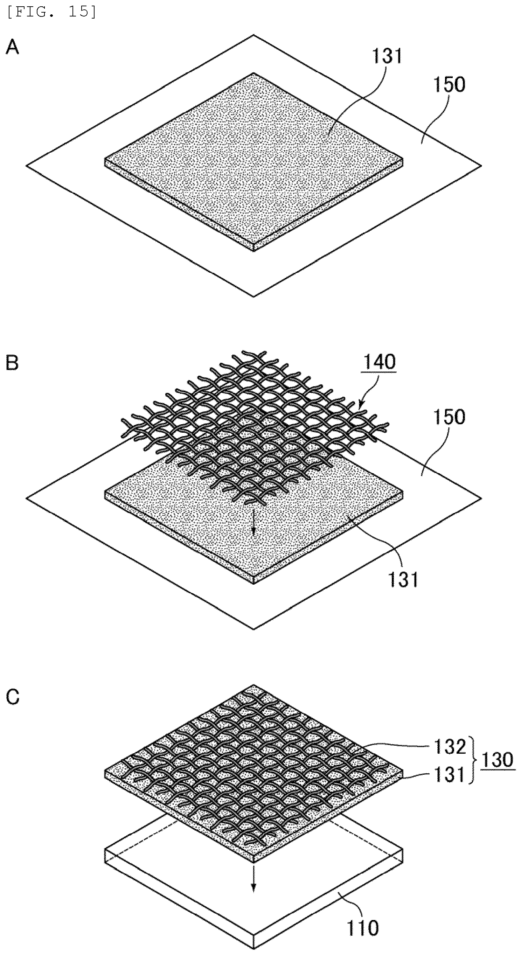

Figs. 15A, 15B, and 15C are process diagrams schematically showing the production method for the lithium ion battery current collector according to the third embodiment.

First, as shown in Fig. 15A, a support 150 is prepared, and the first layer forming step is performed in which a solution including the polymer material (2A2) and the conductive filler is applied to the support 150 and dried to form a first layer 131.

As the support, a resin film can be used, and a polyethylene film, a polypropylene film, a PET film, or the like can be used.

Further, a metal plate can also be used as the support.

As the solution for forming the first layer, the same solution as the composition for the first layer described in the section of forming the first layer in the second embodiment of the production method for the lithium ion battery current collector can be used.

Subsequently, as shown in Fig. 15B, the surface layer forming step is performed in which a mesh 140 having a network structure is placed on the first layer 131 and compressed to form a surface layer 130.

The compressing of the mesh can be performed in the same manner as the method described in the section of forming the second layer of the second embodiment of the production method for the lithium ion battery current collector.

Subsequently, the support is peeled off from the surface layer to isolate the surface layer.

As shown in Fig. 15C, the first layer 131 side of the surface layer 130 is placed on a current collector substrate 110, and the surface layer 130 is compressed to the current collector substrate 110.

The compressing of the surface layer 130 can be performed in the same manner as the method described in the section of forming the second layer of the second embodiment of the production method for the lithium ion battery current collector.

By the above-described steps, the lithium ion battery current collector according to the second embodiment is obtained.

That is, the second embodiment and third embodiment of the production method for the lithium ion battery current collector are both methods capable of obtaining the lithium ion battery current collector according to the second embodiment.

A lithium ion battery electrode can be produced by forming an electrode active material layer including electrode active material particles on the principal surface of the surface layer of the lithium ion battery current collector, which has a network structure.

The electrode active material particles are preferably coated electrode active material particles in which at least a part of the surface thereof is coated with a coating layer including a polymer compound.

The coated electrode active material particles can be obtained by coating the electrode active material particles with a polymer compound. For example, the coated electrode active material particles can be obtained by putting the electrode active material particles in an all-purpose mixer and stirring the mixture, adding dropwise and mixing a resin solution including the polymer compound, mixing the conductive filler as necessary, raising the temperature while stirring, reducing the pressure, and maintaining the mixture for a predetermined time.

The coated electrode active material particles obtained above are mixed with an electrolyte solution or a solvent, and the conductive filler added thereto as necessary to produce a slurry. Thereafter, by applying the above-described slurry to the surface layer of the lithium ion battery current collector and drying the slurry to form an electrode active material layer, the lithium ion battery electrode can be produced.

A lithium ion battery can be produced using the lithium ion battery electrode.

The lithium ion battery is obtained by combining electrodes to be counter electrodes, housing the electrodes together with a separator in a cell container, injecting an electrolyte solution, and sealing the cell container.

As the separator and the electrolyte solution, the separator and the electrolyte solution described in the lithium ion battery using the lithium ion battery current collector of the first aspect can be used.

For example, the lithium ion battery current collector of the third aspect can be produced by the following method.

First, a production of a lithium ion battery current collector including a resin current collector substrate will be described.

A composition for a resin current collector substrate is obtained by mixing the polymer material (3A3) and the conductive filler constituting the resin current collector substrate, and other components as necessary.

Examples of the mixing method includes a method of obtaining a masterbatch of the conductive filler and then further mixing the masterbatch with the polymer material (3A3), a method of using a masterbatch of the polymer material (3A3), the conductive filler, and other components as necessary, and a method of collectively mixing all raw materials, and for the mixing thereof, it is possible to use a suitable known mixer with which pellet-shaped or powder-shaped components can be mixed, such as a kneader, an internal mixer, a Banbury mixer, and a roll.

The order of addition of each component at the time of mixing is not particularly limited. The obtained mixture may be further pelletized or powdered by a pelletizer or the like.

The obtained composition for a resin current collector substrate is formed into, for example, a film shape, whereby the resin current collector substrate is obtained. Examples of the method of forming a material into a film shape include known film forming methods such as a T-die method, an inflation method, and a calendaring method.

In addition, in a case where a resin current collector substrate consisting of two or more resin layers is used, a method in which two or more types of resin current collector substrates formed on a film by the above-described method are stacked and heat-pressed to be integrated into a multi-layer film can be used.

Further, a metal layer may be formed on one principal surface (principal surface which is not planned to form the surface layer) of the resin current collector substrate.

Subsequently, a surface layer is formed on one principal surface of the resin current collector substrate.

A composition for a first layer is obtained by mixing the polymer material (3A1) and the conductive filler constituting the first layer of the surface layer, and other components as necessary.

The composition for a first layer is preferably a slurry in which the polymer material (3A1) and the conductive filler are dispersed in a solvent. As the solvent, hexane, cyclohexane, toluene, acetone, trichloromethane, dichloromethane, tetrahydrofuran, or the like can be used.

Further, dipropylene glycol, tripropylene glycol, or the like may be blended as a dispersing agent.

The first layer can be formed by applying the composition for a first layer to one principal surface of the resin current collector substrate and drying the composition. The coating method is not particularly limited.

A composition for a second layer is obtained by mixing the polymer material (3A2) and the conductive filler constituting the second layer of the surface layer, and other components as necessary.

The composition for a second layer is preferably a slurry in which the polymer material (3A2) and the conductive filler are dispersed in a solvent. As the solvent, methanol, ethanol, N,N-dimethylformamide, N-methyl-2-pyrrolidone, dimethyl sulfoxide, or the like can be used.

Further, polyethylene glycol, polyacrylic acid, polyvinylpyrrolidone, carboxymethyl cellulose, or the like may be blended as a dispersing agent.

The second layer can be formed by applying the composition for a second layer to the surface of the first layer and drying the composition. The coating method is not particularly limited.

The second layer can be formed so that the second layer itself becomes a pattern of recesses and protrusions formed on the surface of the first layer. For example, by a method of forming the composition for a second layer on the surface of the first layer by gravure printing, or a method of applying the composition for a second layer to a mask with a pattern, the second layer to be the pattern of recesses and protrusions can be formed on the surface of the first layer.

As the mask with a pattern, a metal mesh (SUS mesh and the like), a resin mesh (nitrile mesh and the like), a plate for screen printing, or the like can be used. In a case where a metal mesh or a resin mesh is used, any shape such as plain weave, twill weave, and tatami weave can be used.

Alternatively, after the formation of the second layer, the pattern of recesses and protrusions can be imparted to the surface of the second layer. The unevenness can be imparted by a method such as sandblasting and embossing on the surface of the second layer.

The lithium ion battery current collector can be produced by the above-described method.

In a case where a metal current collector substrate is used instead of the resin current collector substrate, a metal foil (metal plate) having a predetermined thickness is prepared as the metal current collector substrate.

The first layer and the second layer of the surface layer are formed on one principal surface of the prepared metal current collector substrate by the above-described method.

The lithium ion battery current collector can be produced by the above-described method.

A lithium ion battery electrode can be produced by forming an electrode active material layer including electrode active material particles on the second layer of the lithium ion battery current collector.

The electrode active material particles are preferably coated electrode active material particles in which at least a part of the surface thereof is coated with a coating layer including the polymer compound (B).

The coated electrode active material particles can be obtained by coating the electrode active material particles with the polymer compound (B). For example, the coated electrode active material particles can be obtained by putting the electrode active material particles in an all-purpose mixer and stirring the mixture, adding dropwise and mixing a resin solution including the polymer compound, mixing the conductive filler as necessary, raising the temperature while stirring, reducing the pressure, and maintaining the mixture for a predetermined time.

The coated electrode active material particles obtained above are mixed with an electrolyte solution or a solvent, and the conductive filler added thereto as necessary to produce a slurry. Thereafter, by applying the above-described slurry to the second layer of the lithium ion battery current collector and drying the slurry to form an electrode active material layer, the lithium ion battery electrode can be produced.

A lithium ion battery can be produced using the lithium ion battery electrode.

The lithium ion battery is obtained by combining electrodes to be counter electrodes, housing the electrodes together with a separator in a cell container, injecting an electrolyte solution, and sealing the cell container.

As the separator and the electrolyte solution, the separator and the electrolyte solution described in the lithium ion battery using the lithium ion battery current collector of the first aspect can be used.

Next, a resin current collector for a positive electrode and a lithium ion battery will be described.

In recent years, there has been an urgent need to reduce the carbon dioxide emission amount for environmental protection. In the automobile industry, it is expected that the introduction of an electric vehicle (EV) and a hybrid electric vehicle (HEV) reduce the carbon dioxide emission amount, and thus the development of a secondary battery for driving a motor, which holds the key to the practical application of such electric vehicles, is eagerly carried out. As the secondary battery, attention is focused on a lithium ion battery with which high energy density and high output density can be achieved.

In such a lithium ion battery, a metal foil (metal current collector foil) has been conventionally used as a current collector. In recent years, a so-called resin current collector has been proposed, which is composed of a resin to which a conductive material is added instead of the metal foil. Such a resin current collector is lighter than the metal current collector foil, and is expected to improve output per unit weight of the battery.

For example, International Publication No. 2015/005116 discloses a dispersing agent for a resin current collector, a material for a resin current collector containing a resin and a conductive filler, and a resin current collector having the material for a resin current collector.

In recent years, the lithium ion battery is required to have a higher capacity.

In the lithium ion battery using a conventional resin current collector as a resin current collector on a positive electrode side (resin current collector for a positive electrode) as disclosed in International Publication No. 2015/005116, in a case where the charging voltage is increased for the purpose of increasing the capacity, it is presumed that a side reaction occurs between a matrix resin of the resin current collector and an electrolyte solution or between the conductive filler and the electrolyte solution, and there are problems that the charging voltage cannot be raised to a predetermined voltage (the limit is approximately 4.7 V) and the irreversible capacity increases. Therefore, in the lithium ion battery using a conventional resin current collector as a resin current collector on the positive electrode side, there is room for further improvement in potential resistance and the size of the irreversible capacity.

In a resin current collector for a positive electrode described below, it is an object to provide a resin current collector for a positive electrode, in which, even in a case where the resin current collector is used as a resin current collector on a positive electrode side of a lithium ion battery, it is possible to increase a charging voltage for the purpose of increasing the capacity (charging can be performed even in a case where the charging voltage is 5 V), and it is possible to reduce an initial irreversible capacity.

By using a resin current collector in which a matrix resin includes a polymer having a specific ester compound as an essential constituent monomer and includes, as a conductive filler, aluminum and/or titanium in a specific weight proportion, even in a case where the resin current collector is used as a resin current collector on the positive electrode side of the lithium ion battery, it is possible to suppress a side reaction between the matrix resin and an electrolyte solution, which are presumed to occur in a case where a conventional resin current collector is used, or between the conductive filler and the electrolyte solution. Therefore, it is possible to increase the charging voltage and reduce the initial irreversible capacity.

That is, the resin current collector for a positive electrode is a resin current collector for a positive electrode that a conductive filler is dispersed in a matrix resin, in which the matrix resin includes a monovalent aliphatic alcohol having 1 to 12 carbon atoms and a polymer having an ester compound (A) of (meth)acrylic acid as an essential constituent monomer, the conductive filler includes aluminum and/or titanium, and a total weight proportion of aluminum and titanium is 99% by weight or more based on a weight of the conductive filler; and a lithium ion battery including the resin current collector for a positive electrode is provided.

According to the present disclosure, it is possible to provide a resin current collector for a positive electrode, in which, even in a case where the resin current collector is used as a resin current collector on a positive electrode side of a lithium ion battery, it is possible to increase a charging voltage for the purpose of increasing the capacity (charging can be performed even in a case where the charging voltage is 5 V), and it is possible to reduce an initial irreversible capacity.

[Resin current collector for positive electrode]

The resin current collector for a positive electrode described below is a resin current collector for a positive electrode that a conductive filler is dispersed in a matrix resin, in which the matrix resin includes a monovalent aliphatic alcohol having 1 to 12 carbon atoms and a polymer having an ester compound (A) of (meth)acrylic acid as an essential constituent monomer, the conductive filler includes aluminum and/or titanium, and a total weight proportion of aluminum and titanium is 99% by weight or more based on a weight of the conductive filler.

(Matrix resin)

The matrix resin includes a monovalent aliphatic alcohol having 1 to 12 carbon atoms and a polymer having an ester compound (A) of (meth)acrylic acid as an essential constituent monomer.

Examples of the monovalent aliphatic alcohol having 1 to 12 carbon atoms include monovalent branched or linear aliphatic alcohols having 1 to 12 carbon atoms, and specific examples thereof include methanol, ethanol, propanol (n-propanol and iso-propanol), butyl alcohol (n-butyl alcohol, sec-butyl alcohol, and tert-butyl alcohol), pentyl alcohol (n-pentyl alcohol, 2-pentyl alcohol, neopentyl alcohol, and the like), hexyl alcohol (1-hexanol, 2-hexanol, 3-hexanol, and the like), heptyl alcohol (n-heptyl alcohol, 1-methylhexyl alcohol, 2-methylhexyl alcohol, and the like), octyl alcohol (n-octyl alcohol, 1-methylheptanol, 1-ethylhexanol, 2-methylheptanol, 2-ethylhexanol, and the like), nonyl alcohol (n-nonyl alcohol, 1-methyloctanol, 1-ethylheptanol, 1-propylhexanol, 2-ethylheptyl alcohol, and the like), decyl alcohol (n-decyl alcohol, 1-methylnonyl alcohol, 2-methylnonyl alcohol, 2-ethyloctyl alcohol, and the like), undecyl alcohol (n-undecyl alcohol, 1-methyldecyl alcohol, 2-methyldecyl alcohol, 2-ethylnonyl alcohol, and the like), and lauryl alcohol (n-lauryl alcohol, 1-methylundecyl alcohol, 2-methylundecyl alcohol, 2-ethyldecyl alcohol, 2-butylhexyl alcohol, and the like).

The (meth)acrylic acid means acrylic acid and methacrylic acid.

Examples of the ester compound (A) include methyl (meth)acrylate, ethyl (meth)acrylate, propyl (meth)acrylate, butyl (meth)acrylate, hexyl (meth)acrylate, octyl (meth)acrylate, 2-methylhexyl (meth)acrylate, 2-ethylhexyl (meth)acrylate, decyl (meth)acrylate, and dodecyl (meth)acrylate.

Among these, from the viewpoints of availability and cost, methyl methacrylate is preferable.

One kind of the ester compound (A) may be used alone, or two or more kinds thereof may be used in combination.

The polymer having the ester compound (A) as an essential constituent monomer may include a monomer other than the ester compound (A).

Examples of the monomer other than the ester compound (A) include ethylene, propylene, styrene chloroethylene, trichlorethylene, vinyl fluoride, vinyl chloride, vinyl acetate, vinylidene chloride, (meth)acrylonitrile, and vinylidene fluoride.

Among these, at least one selected from the group consisting of vinyl chloride, vinyl acetate, vinylidene chloride, acrylonitrile, and vinylidene fluoride is preferable.

The (meth)acrylonitrile means acrylonitrile and methacrylonitrile.

The polymer having the ester compound (A) as an essential constituent monomer may be a homopolymer composed of the ester compound (A), but may be a polymer of two or more kinds of monomers.

In a case of being a polymer of two or more kinds of monomers, the polymer may be any of a random copolymer, an alternate copolymer, a block copolymer, or a graft copolymer.

A weight average molecular weight of the polymer having the ester compound (A) as an essential constituent monomer is not particularly limited, but from the viewpoints of moldability and resin strength, is preferably 50,000 to 1,000,000 and more preferably 100,000 to 500,000.

The weight average molecular weight of the polymer having the ester compound (A) as an essential constituent monomer means a weight average molecular weight measured by a gel permeation chromatography (GPC) method. Measurement conditions are as follows.

Apparatus: high-temperature gel permeation chromatograph ["Alliance GPC V2000", manufactured by Waters Corporation]
Solvent: orthodichlorobenzene
Reference substance: polystyrene
Sample concentration: 3 mg/ml
Column stationary phase: PLgel 10 $\mu$m, two MIXED-B columns connected in series [manufactured by Polymer Laboratories Inc.]
Column temperature: 135°C

A method for obtaining the polymer having the ester compound (A) as an essential constituent monomer is not particularly limited, and a known method such as radical polymerization can be appropriately selected and used.

It is preferable that the monomers constituting the matrix resin are composed of the ester compound (A) and at least one selected from the group consisting of vinyl chloride, vinyl acetate, vinylidene chloride, acrylonitrile, and vinylidene fluoride.

In a case where the matrix resin includes only the polymer having the ester compound (A) as an essential constituent monomer, the monomer constituting the matrix resin means the monomer constituting the polymer having the ester compound (A) as an essential constituent monomer. Further, in a case where the matrix resin includes a polymer other than the polymer having the ester compound (A) as an essential constituent monomer, the monomers constituting the matrix resin mean the monomer constituting the polymer having the ester compound (A) as an essential constituent monomer and the monomer constituting the polymer other than the polymer having the ester compound (A) as an essential constituent monomer.

The matrix resin may include a polymer other than the polymer having the ester compound (A) as an essential constituent monomer.

Examples of the polymer other than the polymer having the ester compound (A) as an essential constituent monomer include a polymer having, as a monomer, vinyl chloride, vinyl acetate, vinylidene chloride, (meth)acrylonitrile, vinylidene fluoride, ethylene, propylene, styrene chloroethylene, trichlorethylene, vinyl fluoride, or the like.

Among these, from the viewpoints of withstand potential and initial irreversible capacity, in the polymer other than the polymer having the ester compound (A) as an essential constituent monomer, the monomer is preferably at least one selected from the group consisting of vinyl chloride, vinyl acetate, vinylidene chloride, acrylonitrile, and vinylidene fluoride.

The polymer other than the polymer having the ester compound (A) as an essential constituent monomer may be a homopolymer composed of the above-described monomer, but may be a polymer of two or more kinds of monomers.

In a case of being a polymer of two or more kinds of monomers, the polymer may be any of a random copolymer, an alternate copolymer, a block copolymer, or a graft copolymer.

A weight average molecular weight of the polymer other than the polymer having the ester compound (A) as an essential constituent monomer is not particularly limited, but is preferably 50,000 to 1,000,000 and more preferably 100,000 to 500,000.

A method for obtaining the polymer other than the polymer having the ester compound (A) as an essential constituent monomer is not particularly limited, and a known method can be appropriately selected and used.

From the viewpoint of suitably reducing the initial irreversible capacity, a weight proportion of the ester compound (A) included in the monomers constituting the matrix resin is preferably 50% to 100% by weight based on a total weight of the monomers constituting the matrix resin.

The weight proportion of the ester compound (A) included in the monomers constituting the matrix resin is more preferably 80% to 100% by weight and still more preferably 90% to 100% by weight based on the total weight of the monomers constituting the matrix resin.

The total weight of the monomers constituting the matrix resin is a total weight of the weight of the monomer constituting the polymer having the ester compound (A) as an essential constituent monomer and the weight of the monomer constituting the polymer other than the polymer having the ester compound (A) as an essential constituent monomer.

From the viewpoint of strength, a content of the matrix resin is preferably 40% to 98% by weight and more preferably 50% to 95% by weight based on a weight of the resin current collector for a positive electrode.

(Conductive filler)

The conductive filler includes aluminum and/or titanium.

From the viewpoint of suitably reducing the initial irreversible capacity, the conductive filler preferably includes only aluminum.

The aluminum may be pure aluminum or an aluminum alloy. Further, the titanium may be pure titanium or an alloy having titanium as a main material.

A total weight proportion of the aluminum and titanium is 99% by weight or more based on a weight of the conductive filler.

In a case where the total weight proportion of the aluminum and titanium is less than 99% by weight, a conductive filler other than the aluminum or titanium serves as a side reaction source, and the side reaction between the matrix resin and the electrolyte solution or between the conductive filler and the electrolyte solution cannot be sufficiently suppressed. Therefore, the charging voltage cannot be increased for the purpose of increasing the capacity, and the initial irreversible capacity cannot be reduced.

The total weight proportion of the aluminum and titanium is preferably 99.5% by weight or more, more preferably 99.7% by weight or more, and still more preferably 100% by weight based on the weight of the conductive filler.

The above-described total weight proportion means a total weight proportion of the aluminum element and the titanium element based on the weight of the conductive filler.

That is, the above-described "total weight proportion of the aluminum and titanium is 99% by weight or more based on a weight of the conductive filler" means that, in a case where the aluminum and/or titanium is an alloy, the total weight proportion of the aluminum element and the titanium element is 99% by weight or more based on the weight of the conductive filler.

Examples of the conductive filler other than the aluminum or titanium include a metal [nickel, stainless steel (SUS), silver, copper, or the like] other than the aluminum and titanium, carbon [graphite, carbon black (acetylene black, Ketjen black, furnace black, channel black, thermal lamp black, or the like), or the like], and a mixture thereof.

A weight proportion of the conductive filler other than the aluminum or titanium is 1% by weight or less based on the weight of the conductive filler.

A shape (form) of the conductive filler is not particularly limited, and may be a spherical shape, a flake shape, a leaf shape, a dendritic shape, a plate shape, a needle shape, a rod shape, a grape shape, or the like.

An average particle size of the conductive filler is not particularly limited, but from the viewpoint of battery characteristics, is preferably approximately 0.01 to 10 μm.

The "particle size" means the maximum distance L among the distances between any two points on the contour line of the conductive filler. As the value of the "average particle size", the average value of the particle sizes of the particles observed in several to several tens of visual fields using an observation means such as a scanning electron microscope (SEM) or a transmission electron microscope (TEM) shall be calculated and adopted.

From the viewpoint of increasing the charging voltage of the lithium ion battery and viewpoint of suitably reducing the initial irreversible capacity, the weight proportion of the conductive filler is preferably 15% to 60% by weight based on the weight of the resin current collector for a positive electrode.

The weight proportion of the conductive filler is more preferably 15% to 50% by weight and still more preferably 25% to 50% by weight based on the weight of the resin current collector for a positive electrode.

(Other components)

The resin current collector for a positive electrode may include other components as necessary.

Examples of the other components include a dispersing agent, a colorant, a ultraviolet absorber, and a plasticizer (a phthalic acid skeleton-containing compound, a trimellitic acid skeleton-containing compound, a phosphate group-containing compound, an epoxy skeleton-containing compound, and the like).

As the dispersing agent, UMEX series manufactured by Sanyo Chemical Industries, Ltd., HARDLEN series and TOYO-TAC series manufactured by TOYOBO CO., LTD., or the like can be used.

As the colorant, the ultraviolet absorber, the plasticizer, and the like, known ones can be appropriately selected and used.

A total content of the other components is preferably 0.001% to 5% by weight based on the weight of the resin current collector for a positive electrode.

(Production method for resin current collector for positive electrode)

The resin current collector for a positive electrode can be produced, for example, by the following method.

First, the matrix resin, the conductive filler, and other components as necessary are mixed to obtain a material for a resin current collector.

Examples of the mixing method includes a method of obtaining a masterbatch of the conductive filler and then further mixing the masterbatch with the matrix resin, a method of using a masterbatch of the matrix resin, the conductive carbon filler, and other components as necessary, and a method of collectively mixing all raw materials, and for the mixing thereof, it is possible to use a suitable known mixer with which pellet-shaped or powder-shaped components can be mixed, such as a kneader, an internal mixer, a Banbury mixer, or a roll.

The order of addition of each component at the time of mixing is not particularly limited. The obtained mixture may be further pelletized or powdered by a pelletizer or the like.

The obtained material for a resin current collector is formed into, for example, a film shape, whereby the resin current collector for a positive electrode is obtained. Examples of the method of forming a material into a film shape include known film forming methods such as a T-die method, an inflation method, and a calendaring method. The resin current collector for a positive electrode can also be obtained by a forming method other than the film forming.

A thickness of the resin current collector for a positive electrode is not particularly limited, but is preferably 5 to 150 μm.

[Lithium ion battery]

The lithium ion battery includes the above-described resin current collector for a positive electrode.

The lithium ion battery includes an electrode including the above-described resin current collector for a positive electrode, a separator, and a negative electrode.

(Positive electrode)

The positive electrode includes a positive electrode active material layer on a surface of the above-described resin current collector for a positive electrode. The positive electrode active material layer includes positive electrode active material particles.

As the positive electrode active material particles, the positive electrode active material particles described in the lithium ion battery current collector of the first aspect can be used, and the volume average particle size thereof can also be the same.

The positive electrode active material particles may be coated positive electrode active material particles, where at least a part of a surface of the coated positive electrode active material particles is coated with a coating material including a polymer compound.

In a case where a periphery of the positive electrode active material particles is covered by a coating material, the volume change of the positive electrode is alleviated, and thus the expansion of the positive electrode can be suppressed.

As the polymer compound constituting the coating material, those described as an active material coating resin in Japanese Unexamined Patent Application, First Publication No. 2017-054703 and International Publication No. 2015-005117 can be suitably used.

The coating material may include a conductive material.

Examples of the conductive material include, but are not limited thereto, a metal [nickel, aluminum, stainless steel (SUS), silver, copper, titanium, or the like], carbon [graphite, carbon black (acetylene black, Ketjen black, furnace black, channel black, thermal lamp black, or the like), or the like], and a mixture thereof.

One kind of these conductive fillers may be used alone, or two or more kinds thereof may be used in combination.

The positive electrode active material layer may include a pressure-sensitive adhesive resin.

As the pressure-sensitive adhesive resin, the same pressure-sensitive adhesive resin described in the lithium ion battery current collector of the first aspect can be used.

The positive electrode active material layer may include a conductive auxiliary agent.

As the conductive auxiliary agent, the conductive material used for the above-described coating material can be appropriately selected and used.

A weight proportion of the conductive auxiliary agent in the positive electrode active material layer is preferably 3% to 10% by weight.

The positive electrode active material layer may include an electrolyte solution.

As the electrolyte solution, the electrolyte solution described in the lithium ion battery using the lithium ion battery current collector of the first aspect can be used.

For example, the positive electrode active material layer can be produced by a method of applying a mixture including the positive electrode active material particles and the electrolyte solution to the surface of the resin current collector for a positive electrode or a base material to remove excess electrolyte solution, a method of molding a mixture including the positive electrode active material particles and the electrolyte solution by applying pressure or the like on a base material, or the like.

In a case where the positive electrode active material layer is formed on the surface of the base material, the positive electrode active material layer may be combined with the resin current collector for a positive electrode by a method such as transferring.

The above-described mixture may include a conductive auxiliary agent or a pressure-sensitive adhesive resin, as necessary. Further, the positive electrode active material particles may be the coated positive electrode active material particles.

A thickness of the positive electrode active material layer is not particularly limited, but from the viewpoint of battery performance, is preferably 150 to 600 μm and more preferably 200 to 450 μm.

(Separator)

As the separator, the separator described in the lithium ion battery using the lithium ion battery current collector of the first aspect can be used.

(Negative electrode)

The negative electrode includes a negative electrode current collector and a negative electrode active material layer.

As the negative electrode current collector, a resin current collector (resin current collectors described in Japanese Unexamined Patent Application, First Publication No. 2012-150905 and International Publication No. 2015-005116, and the like) composed of a known metal current collector and a conductive resin composition including a conductive material and a resin can be used.

From the viewpoint of battery characteristics and the like, the negative electrode current collector is preferably a resin current collector.

A thickness of the negative electrode current collector is not particularly limited, but is preferably 5 to 150 μm.
The negative electrode active material layer includes negative electrode active material particles.
As the negative electrode active material particles, the negative electrode active material particles described in the lithium ion battery current collector of the first aspect can be used, and the volume average particle size thereof can also be the same.
The negative electrode active material particles may be coated negative electrode active material particles, where at least a part of a surface of the coated negative electrode active material particles is coated with a coating material including a polymer compound.
In a case where a periphery of the negative electrode active material particles is covered by a coating material, the volume change of the negative electrode is alleviated, and thus the expansion of the negative electrode can be suppressed.
As the coating material, the same one as the coating material described in the above positive electrode active material particles can be suitably used.
The negative electrode active material layer may include a pressure-sensitive adhesive resin.
As the pressure-sensitive adhesive resin, the same one as the pressure-sensitive adhesive resin which is an optional component of the positive electrode active material layer can be suitably used.
The negative electrode active material layer may include a conductive auxiliary agent.
As the conductive auxiliary agent, the same conductive material as the conductive filler included in the positive electrode active material layer can be suitably used.
A weight proportion of the conductive auxiliary agent in the negative electrode active material layer is preferably 2% to 10% by weight.
The negative electrode active material layer may include an electrolyte solution.
As the electrolyte solution, those described in the positive electrode active material layer can be appropriately selected and used.
For example, the negative electrode active material layer can be produced by a method of applying a mixture including the negative electrode active material particles and the electrolyte solution to the surface of the negative electrode current collector or the base material and then removing excess electrolyte solution.
In a case where the negative electrode active material layer is formed on the surface of the base material, the negative electrode active material layer may be combined with the negative electrode current collector by a method such as transferring.
The above-described mixture may include a conductive auxiliary agent, a pressure-sensitive adhesive resin, or the like, as necessary. Further, the negative electrode active material particles may be the coated negative electrode active material particles.
A thickness of the negative electrode active material layer is not particularly limited, but from the viewpoint of battery performance, is preferably 150 to 600 μm and more preferably 200 to 450 μm.

(Production method for lithium ion battery)

The above-described lithium ion battery can be produced, for example, by stacking the positive electrode, the separator, and the negative electrode in this order, and then injecting the electrolyte solution as needed.
The present specification describes the following technical ideas described in the basic application of this international application.

(1-1) A lithium ion battery current collector which is used in a lithium ion battery in contact with an electrode active material at one principal surface,

characterized in that the current collector has a depth of 10 to 45 μm on the principal surface in contact with the electrode active material and has a plurality of recesses composed of closed figures as seen from above,
a length of a shortest portion of lengths passing through a centroid of the recess is 30 to 105 μm, and
a proportion of an area of the recess as seen from above is 19% to 61% with respect to an area of a surface of the current collector provided with the recess as seen from above.

(1-2) The lithium ion battery current collector according to (1-1), in which the recess has two or more recesses having different shapes of figures as seen from above.
(1-3) The lithium ion battery current collector according to (1-1) or (1-2), in which the recess has a recess having an aspect ratio of 2.0 to 4.0 and a recess having an aspect ratio of 0.25 to 0.5.
(1-4) The lithium ion battery current collector according to any one of (1-1) to (1-3), in which the recess has an elliptical shape as seen from above.

(1-5) The lithium ion battery current collector according to any one of (1-1) to (1-4), in which the current collector consists of a resin composition including a polymer material and a conductive filler.
(1-6) The lithium ion battery current collector according to (1-5), in which the principal surface of the current collector in contact with the electrode active material has a conductive filler layer in which a large number of the conductive filler is distributed.
(1-7) A lithium ion battery electrode including:

the lithium ion battery current collector according to any one of (1-1) to (1-6); and
an electrode active material particle,
characterized in that at least a part of a surface of the electrode active material particle is coated with a coating layer including a polymer compound.

(2-1) A lithium ion battery current collector which is used in a lithium ion battery in contact with an electrode active material at one principal surface,
characterized in that the lithium ion battery current collector has a surface layer on a principal surface in contact with the electrode active material, and the surface layer has a network structure.
(2-2) The lithium ion battery current collector according to (2-1), in which the network structure is a network structure having a mesh size of 20 to 200 μm and a thickness of 30 to 80 μm.
(2-3) The lithium ion battery current collector according to (2-1) or (2-2),

in which the current collector has a resin current collector substrate including a polymer material (A3) and a conductive filler,
the surface layer is provided on the resin current collector substrate, and
a softening point of the polymer material (A3) is 100°C to 200°C.

(2-4) The lithium ion battery current collector according to (2-1) or (2-2),

in which the surface layer consists of two layers,
a first layer of the surface layer consists of a resin composition including a polymer material (A2) and a conductive filler,
the polymer material (A2) has a glass transition temperature of 35°C or lower, and
a second layer laminated on the first layer has a network structure.

(2-5) The lithium ion battery current collector according to (2-4),

in which the current collector has a resin current collector substrate including a polymer material (A3) and a conductive filler, and
the surface layer is provided on the resin current collector substrate.

(2-6) A production method for a lithium ion battery current collector including a resin current collector substrate and a surface layer having a network structure provided on the resin current collector substrate,

characterized in that the resin current collector substrate consists of a resin composition including a polymer material (A3) having a softening point of 100°C to 200°C and a conductive filler, and
the production method includes a step of compressing the resin current collector substrate to the surface layer while heating the resin current collector substrate to 100°C to 200°C using a heating tool.

(2-7) A production method for the lithium ion battery current collector including a current collector substrate and a surface layer having a network structure provided on the current collector substrate, the method further including:

a first layer forming step of applying a solution including a polymer material (A2) having a glass transition temperature of 35°C or lower and a conductive filler to the current collector substrate and drying the solution to form a first layer; and
a step of placing a second layer having a network structure on the first layer and compressing the layers.

(2-8) A production method for the lithium ion battery current collector including a current collector substrate and a surface layer having a network structure provided on the current collector substrate, the method further including:

a first layer forming step of applying a solution including a polymer material (A2) having a glass transition temperature of 35°C or lower and a conductive filler to a support and drying the solution to form a first layer;
a surface layer forming step of placing a second layer having a network structure on the first layer and compressing the second layer to form a surface layer; and
a step of peeling off the support from the surface layer, placing the first layer of the surface layer on the current collector substrate, and compressing the surface layer to the current collector substrate.

(2-9) A lithium ion battery electrode including:

the lithium ion battery current collector according to any one of (2-1) to (2-5); and
an electrode active material particle,
characterized in that at least a part of a surface of the electrode active material particle is coated with a coating layer including a polymer compound.

(3-1) A lithium ion battery current collector which is used in a lithium ion battery in contact with an electrode active material at one principal surface,

characterized in that the lithium ion battery current collector has two surface layers on the principal surface in contact with the electrode active material,
a first layer of the surface layer consists of a resin composition including a polymer material (A1) and a conductive filler and the polymer material (A1) has a glass transition temperature of 35°C or lower,
a second layer laminated on the first layer consists of a resin composition including a polymer material (A2) having a carboxylic acid group and a conductive filler,
the second layer has a pattern of recesses and protrusions on the surface in contact with the electrode active material,
the second layer is an outermost layer of the surface layer and is a layer in contact with the electrode active material, and
the polymer material (A1) and the polymer material (A2) are different materials.

(3-2) The lithium ion battery current collector according to (3-1),

in which a height of the protrusion in the pattern of recesses and protrusions included in the second layer is 10 to 70 μm, and
a surface roughness Ra is 5 to 25 μm.

(3-3) The lithium ion battery current collector according to (3-1) or (3-2), in which the polymer material (A2) is a vinyl resin having an SP value of 13 to 18.
(3-4) The lithium ion battery current collector according to any one of (3-1) to (3-3), in which the polymer material (A1) is a vinyl resin having an SP value of 9 to 10.
(3-5) The lithium ion battery current collector according to any one of (3-1) to (3-4),

in which the lithium ion battery current collector has a resin current collector substrate including a polymer material (A3) and a conductive filler, and has the surface layer provided on the resin current collector substrate, and
the first layer of the surface layer is a layer in contact with the resin current collector substrate.

(3-6) A lithium ion battery electrode including:

the lithium ion battery current collector according to any one of (3-1) to (3-5); and
an electrode active material particle,
in which at least a part of a surface of the electrode active material particle is coated with a coating layer including a polymer compound (B).

(4-1) A resin current collector for a positive electrode that a conductive filler is dispersed in a matrix resin,

in which the matrix resin includes a monovalent aliphatic alcohol having 1 to 12 carbon atoms and a polymer having an ester compound (A) of (meth)acrylic acid as an essential constituent monomer, and
the conductive filler includes aluminum and/or titanium, and a total weight proportion of aluminum and titanium is 99% by weight or more based on a weight of the conductive filler.

(4-2) The resin current collector for a positive electrode according to (4-1), in which a weight proportion of the ester compound (A) included in monomers constituting the matrix resin is 50% to 100% by weight based on a total weight of the monomers constituting the matrix resin.
(4-3) The resin current collector for a positive electrode according to (4-1) or (4-2), in which the monomers constituting the matrix resin are composed of the ester compound (A) and at least one selected from the group consisting of vinyl chloride, vinyl acetate, vinylidene chloride, acrylonitrile, and vinylidene fluoride.
(4-4) The resin current collector for a positive electrode according to any one of (4-1) to (4-3), in which a weight proportion of the conductive filler included in the resin current collector for a positive electrode is 15% to 60% by weight based on a weight of the resin current collector for a positive electrode.
(4-5) A lithium ion battery including the resin current collector for a positive electrode according to any one of (4-1) to (4-4) .

Example

Next, the present invention will be specifically described with reference to Examples; however, the present invention is not limited to Examples as long as the gist of the present invention is maintained. Unless otherwise specified, parts mean parts by weight and % means % by weight.

[Examples of lithium ion battery current collector of first aspect and related matter]

<Production of resin current collector layer>

75 parts of a polypropylene resin as a polymer material, 20 parts of acetylene black as a conductive filler, and 5 parts of a dispersing agent [product name "UMEX 1001 (an acid-modified polypropylene)", manufactured by Sanyo Chemical Industries, Ltd.] were melted and kneaded with a twin-screw extruder under the conditions of 180°C, 100 rpm, and a residence time of 5 minutes, whereby a resin composition was obtained.
The obtained resin composition was extruded from a T-die and rolled with a cooling roll of which the temperature was adjusted to 50°C, whereby a resin current collector layer (L-1) was obtained. A thickness of the obtained resin current collector layer was 50 μm.
A resin current collector layer (L-2) was obtained by using a composition having the composition shown in Table 1-1 as the resin composition in the resin current collector layer (L-1).
A resin current collector layer (L-3) as a multilayer film was obtained by stacking and heat-pressing the resin current collector layer (L-1) and the resin current collector layer (L-2) at 160°C to be integrated.
A resin current collector layer (L-4) was obtained by using a composition having the composition shown in Table 1-1 as the resin composition in the resin current collector layer (L-1).
Nickel particles were a product name "Nickel Powder Type 255, manufactured by Vale".
A resin current collector layer (L-5) was obtained by forming metal layer made of platinum on one principal surface of the resin current collector layer (L-3) by sputtering.
For the resin current collector layers (L-1) to (L-5), a thickness, a surface roughness (Ra), a penetration resistance value, and a breaking stress were determined.
For (L-5), the surface roughness of the surface on which the metal layer was not formed was measured.
The thickness of the resin current collector layer was measured using a film thickness meter [manufactured by Mitutoyo Corporation].
A method for measuring the penetration resistance value is as follows.
These physical properties are summarized in Table 1-1.

[Measurement of penetration resistance value]

The resin current collector layers were punched to φ15 mm, and the penetration resistance value of each of the resin current collector layers was measured using an electric resistance measuring instrument [IMC-0240 type, manufactured by Imoto Machinery Co., Ltd.] and a resistance meter [RM3548, manufactured by HIOKI E.E. Corporation].
The resistance value of the resin current collector layer was measured in a state in which a load of 2.16 kg was applied to the electric resistance measuring instrument, and a value 60 seconds after the load of 2.16 kg was applied was taken as the resistance value of the resin current collector layer. As indicated in the expression below, a value obtained by multiplying the area (1.77 $cm^2$) of the contact surface of the jig at the time of resistance measurement was used as the penetration resistance value ($\Omega \cdot cm^2$).

$$\text{Penetration resistance value } (\Omega\cdot\text{cm}^2) = \text{resistance value } (\Omega) \times 1.77\ (\text{cm}^2)$$

[Measurement of breaking stress]

The resin current collector layer was molded with a dumbbell punching machine according to JIS K 7127, the sample was fixed to a 1 kN load cell fixed to an autograph [AGS-X10kN manufactured by Shimadzu Corporation] and a grip for a tensile test, and the breaking stress (MPa) was defined as a value obtained by dividing a test force at a breaking point pulled at a speed of 100 mm/min by a cross-sectional area of a fracture surface.

$$\text{Breaking stress (MPa)} = \text{test force (N)}/(\text{film thickness (mm)} \times 10\ \text{(mm)})$$

[Table 1-1]

<table>
<tr><td colspan="3"></td><td>L-1</td><td>L-2</td><td>L-3</td><td>L-4</td><td>L-5</td></tr>
<tr><td rowspan="4">Resin current collector layer</td><td>Polymer material</td><td>Polypropylene resin [part by weight]</td><td>75</td><td>70</td><td rowspan="4">L-1 + L-2</td><td>60</td><td rowspan="4">Forming Pt film on one side of L-3</td></tr>
<tr><td>Conductive filler</td><td>Acetylene black [part by weight]</td><td>20</td><td>25</td><td>-</td></tr>
<tr><td>Conductive filler</td><td>Nickel particles [part by weight]</td><td>-</td><td>-</td><td>35</td></tr>
<tr><td>Dispersing agent</td><td>UMEX [part by weight]</td><td>5</td><td>5</td><td>5</td></tr>
<tr><td rowspan="4">Physical properties of resin current collector layer</td><td colspan="2">Thickness [μm]</td><td>50</td><td>48</td><td>72</td><td>52</td><td>72</td></tr>
<tr><td colspan="2">Ra [μm]</td><td>0.4</td><td>0.6</td><td>0.8</td><td>1.1</td><td>0.8</td></tr>
<tr><td colspan="2">Penetration resistance value [Ω·cm²]</td><td>10</td><td>8.5</td><td>13.1</td><td>1.2</td><td>10.9</td></tr>
<tr><td colspan="2">Breaking stress [MPa]</td><td>40</td><td>36</td><td>37</td><td>21</td><td>36</td></tr>
</table>

<Formation of recess>

(Example 1-1)

A plain weave SUS 316 mesh having a mesh size of 77 μm and a wire diameter of 50 μm was placed on the resin current collector layer (L-1), the laminate was set in a tabletop test press machine [SA-302, manufactured by TESTER SANGYO CO,. LTD.] in which a temperature of upper table was adjusted to 160°C and a temperature of lower table was adjusted to 100°C, and a pressure was adjusted so that a load on the resin current collector layer was 24.0 MPa to perform pressing for 60 seconds. In this case, a press load was 1500 kN.

After the pressing, the resin current collector layer was taken out from the press machine, and the mesh was peeled off to obtain a current collector having recesses. A shape of the obtained recess was an elliptical shape as seen from above as shown in Fig. 2, a shape of the recess having a major axis in the horizontal direction was a semi-elliptical sphere having a horizontal length/vertical length/depth of 138 μm/66 μm/28 μm, respectively, and a shape of the recess having a major axis in the vertical direction was a semi-elliptical sphere having a horizontal length/vertical length/depth of 44 μm/84 μm/14 μm, respectively.

A proportion of an area of the recess as seen from above was 28% with respect to an area of a surface of the current collector provided with the recess as seen from above.

(Example 1-2)

A current collector having recesses formed was obtained in the same manner as in Example 1-1, except that the type of the resin current collector layer was changed to (L-2), and the type of the mesh was changed to the mesh shown in Table 1-2. Production conditions of the current collector and specifications of the obtained current collector are shown in Table 1-2.

(Example 1-3)

A current collector having recesses formed was obtained in the same manner as in Example 1-1, except that, on the resin current collector layer (L-1), a CNF-adhered mesh in which carbon nanofiber (product name "VGCF-H", manufactured by Showa Denko K.K.; hereafter, abbreviated as CNF) was brought into contact with a pre-charged plain weave nitrile mesh having a mesh size of 70 μm and a wire diameter of 70 μm was placed. Production conditions of the current collector and specifications of the obtained current collector are shown in Table 1-2.

(Example 1-4)

On the resin current collector layer (L-1), a CNF dispersion liquid ultrasonically dispersed in a solution in which 0.6 parts of CNF and 0.1 parts of a polymer dispersing agent were dissolved in 30 parts of methanol was applied with a coater having a thickness of 100 μm, and was naturally dried in an atmosphere of 25°C to obtain a resin current collector layer to which the conductive filler was uniformly applied. Pressing was performed in the same manner as in Example 1-1 to obtain a current collector having recesses, except that a resin current collector to which the conductive filler was uniformly applied was used. Production conditions of the current collector and specifications of the obtained current collector are shown in Table 1-2.

(Example 1-5)

The type of the resin current collector layer was changed to (L-3), and the type of the mesh was changed to the mesh shown in Table 1-2. A current collector having recesses was obtained in the same manner as in Example 1-1, except that an AB-adhered mesh with acetylene black (hereinafter, abbreviated as AB) adhered to the mesh was placed. Production conditions of the current collector and specifications of the obtained current collector are shown in Table 1-2.

(Example 1-6)

The type of the resin current collector layer was changed to (L-4) and the type of the mesh was the same as in Example 1-1, and a Ni-adhered mesh to which nickel particles (hereinafter, abbreviated as Ni) were adhered was placed on the mesh. A current collector having recesses formed was obtained in the same manner as in Example 1-1, except that the temperature of the upper table was set to 110°C and the temperature of the lower table was set to 110°C. Production conditions of the current collector and specifications of the obtained current collector are shown in Table 1-2.

(Example 1-7)

In Example 1-3, the type of the resin current collector layer was changed to (L-5). A current collector having recesses formed was obtained in the same manner as in Example 1-3 in which other conditions were the same as in Example 1-3. Production conditions of the current collector and specifications of the obtained current collector are shown in Table 1-2.

(Example 1-8)

In Example 1-3, the press load was changed from 1500 kN to 1000 kN. A current collector having recesses formed was obtained in the same manner as in Example 1-3 in which other conditions were the same as in Example 1-3. Production conditions of the current collector and specifications of the obtained current collector are shown in Table 1-2.

(Example 1-9)

In Example 1-3, the press load was changed from 1500 kN to 500 kN. A current collector having recesses formed was obtained in the same manner as in Example 1-3 in which other conditions were the same as in Example 1-3. Production conditions of the current collector and specifications of the obtained current collector are shown in Table 1-2.

(Comparative Example 1-1)

In Example 1-1, the press load was changed from 1500 kN to 30 kN. A current collector having recesses formed was obtained in the same manner as in Example 1-1 in which other conditions were the same as in Example 1-1. Production conditions of the current collector and specifications of the obtained current collector are shown in Table 1-2.

(Comparative Example 1-2)

In Example 1-1, the press load was changed from 1500 kN to 100 kN. A current collector having recesses formed was obtained in the same manner as in Example 1-1 in which other conditions were the same as in Example 1-1. Production conditions of the current collector and specifications of the obtained current collector are shown in Table 1-2.

(Comparative Example 1-3)

In Example 1-1, the press load was changed from 1500 kN to 280 kN, and the temperature of the upper table was set to 70°C and the temperature of the lower table was set to 70°C. A current collector having recesses formed was obtained in the same manner as in Example 1-1 in which other conditions were the same as in Example 1-1. Production conditions of the current collector and specifications of the obtained current collector are shown in Table 1-2.

(Comparative Example 1-4)

In Example 1-1, the press load was changed from 1500 kN to 280 kN, and the temperature of the upper table was set to 170°C and the temperature of the lower table was set to 140°C. The pressing was performed in the same manner as in Example 1-1 in which other conditions were the same as in Example 1-1.
In Comparative Example 1-4, the mesh and the resin current collector layer were fused, whereby a desired current collector could not be obtained. Production conditions of the current collector are shown in Table 1-2.

(Comparative Example 1-5)

The type of the mesh was changed to the mesh shown in Table 1-2, and the press load was changed from 1500 kN to 2000 kN. A current collector having recesses formed was obtained in the same manner as in Example 1-1 in which other conditions were the same as in Example 1-1. Production conditions of the current collector and specifications of the obtained current collector are shown in Table 1-2.
For the current collectors obtained in each Example and Comparative Example, the penetration resistance value and the breaking stress were determined. The results are summarized in Table 1-2.
No measurement was performed for Comparative Example 1-4.

[Table 1-2]

| | Example 1-1 | Example 1-2 | Example 1-3 | Example 1-4 | Example 1-5 | Example 1-6 | Example 1-7 | Example 1-8 | Example 1-9 | Comparative Example 1-1 | Comparative Example 1-2 | Comparative Example 1-3 | Comparative Example 1-4 | Comparative Example 1-5 |
|---|---|---|---|---|---|---|---|---|---|---|---|---|---|---|
| Current collector with recesses | S-1 | S-2 | S-3 | S-4 | S-5 | S-6 | S-7 | S-8 | S-9 | S-10 | S-11 | S-12 | S-13 | S-14 |
| Resin current collector laver | L-1 | L-2 | L-1 | L-1 | L-3 | L-4 | L-5 | L-1 | L-1 | L-1 | L-1 | L-1 | L-1 | L-1 |
| Added conductive filler | - | - | CNF | CNF + dispersing agent | AB | Ni | CNF | CNF | CNF | - | - | - | - | - |
| Mesh size of mesh [μm] | 77 | 283 | 70 | 77 | 26 | 77 | 70 | 70 | 70 | 77 | 77 | 77 | 77 | 283 |
| Wire diameter of mesh [μm] | 50 | 140 | 70 | 50 | 25 | 50 | 70 | 70 | 70 | 50 | 50 | 50 | 50 | 140 |
| Material and weaving method of mesh | SUS 316 plain weave | SUS 304 plain weave | Nitrile plain weave | SUS 316 plain weave | SUS 316 twill weave | SUS 316 plain weave | Nitrile plain weave | Nitrile plain weave | Nitrile plain weave | SUS 316 plain weave | SUS 316 plain weave | SUS 316 plain weave | SUS 316 plain weave | SUS 316 twill weave |
| Press temperature (upper/lower) [°C] | 160/100 | 160/100 | 160/100 | 160/100 | 160/100 | 110/110 | 160/100 | 160/100 | 160/100 | 160/100 | 160/100 | 70/70 | 170/140 | 160/100 |
| Press load (kN) | 1500 | 1500 | 1500 | 1500 | 1500 | 1500 | 1500 | 1000 | 500 | 30 | 100 | 280 | 280 | 2000 |

(continued)

| | Example 1-1 | Example 1-2 | Example 1-3 | Example 1-4 | Example 1-5 | Example 1-6 | Example 1-7 | Example 1-8 | Example 1-9 | Comparative Example 1-1 | Comparative Example 1-2 | Comparative Example 1-3 | Comparative Example 1-4 | Comparative Example 1-5 |
|---|---|---|---|---|---|---|---|---|---|---|---|---|---|---|
| Horizontal length/vertical length/depth of recess having major axis in horizontal direction [μm] | 138/66/28 | 286/97/35 | 123/66/32 | 140/67/29 | 105/65/20 | 126/65/29 | 135/64/27 | 114/46/22 | 96/45/14 | 82/41/12 | 114/42/21 | 103/37/16 | Fused | 300/108/49 |
| Horizontal length/vertical length/depth of recess having major axis in vertical direction [μm] | 44/84/14 | 105/252/41 | 50/118/13 | 45/87/15 | 51/91/15 | 45/88/15 | 48/87/16 | 41/79/13 | 30/65/11 | 00/00/00 | 20/20/3 | 33/68/12 | | 92/276/38 |
| Proportion of area of recess as seen from above [%] | 28 | 37 | 32 | 29 | 61 | 29 | 29 | 24 | 19 | 7 | 14 | 17 | | 64 |
| Penetration resistance value [$\Omega \cdot cm^2$] | 17 | 14 | 12 | 11 | 10 | 2.6 | 13 | 16 | 13 | 10 | 11 | 21 | | 18 |
| Breaking stress [MPa] | 38 | 32 | 37 | 35 | 33 | 20 | 37 | 38 | 39 | 40 | 39 | 14 | | 4 |
| Notice | - | - | Nitrile is statically pre-charged | - | - | - | Nitrile is statically pre-charged | Nitrile is statically pre-charged | Nitrile is statically pre-charged | - | - | Non-uniform distribution of unevenness | | - |

The penetration resistance value of the current collector of each Example was higher than the penetration resistance value of the resin current collector layer before forming the recess. This is due to the fact that, in the method of measuring the penetration resistance value, the resistance increases by the amount that the recess does not touch the electrode.

As will be described later, in a case where the current collector is incorporated in a lithium ion battery and an internal resistance is measured, the effect of the current collector of each Example can be obtained.

<Synthesis of polymer compound>

95 parts of lauryl methacrylate, 4.6 parts of methacrylic acid, 0.4 parts of 1,6-hexanediol dimethacrylate, and 390 parts of toluene were charged into a four-necked flask equipped with a stirrer, a thermometer, a reflux condenser, a dropping funnel, and a nitrogen gas introduction tube, and the temperature was raised to 75°C. 10 parts of toluene, 0.200 parts of 2,2'-azobis(2,4-dimethylvaleronitrile), and 0.200 parts of 2,2'-azobis(2-methylbutyronitrile) were mixed. The obtained monomer mixture solution was continuously added dropwise to the flask over 4 hours with a dropping funnel, while blowing nitrogen thereto, to carry out radical polymerization. After the completion of the dropwise addition, a solution prepared by dissolving 0.800 parts of 2,2'-azobis(2,4-dimethylvaleronitrile) in 12.4 parts of toluene was continuously added thereto using a dropping funnel at 6 to 8 hours after the start of polymerization. Further, the polymerization was continued for 2 hours, and 488 parts of toluene was added thereto to obtain a solution of a polymer compound (B-1), having a resin solid content concentration of 30% by weight.

A polymer compound (B-2) was synthesized by changing the monomer composition as shown in Table 1-3.

For the polymer compounds (B-1) and (B-2), a molecular weight (Mw) and a glass transition temperature were determined.

These physical properties are summarized in Table 1-3.

[Table 1-3]

| | | B-1 | B-2 |
|---|---|---|---|
| Part by weight of monomer of polymer compound | 2-Ethylhexyl acrylate | - | 40 |
| | Lauryl methacrylate | 95 | 40 |
| | Methacrylic acid | 4.6 | - |
| | Acrylic acid | - | 20 |
| | 1,6-Hexanediol dimethacrvlate | 0.4 | - |
| Physical properties | Molecular weight (Mw) | 87000 | 62000 |
| | Glass transition temperature [°C] | 152 | 31 |

<Preparation of electrolyte solution>

$LiN(FSO_2)_2$(LiFSI) was dissolved in a mixed solvent of ethylene carbonate (EC) and propylene carbonate (PC) (EC: PC = 1: 1 in terms of volume ratio) at a rate of 2 mol/L, whereby an electrolyte solution for a lithium ion battery was prepared.

<Evaluation test with positive electrode>

[Production of coated positive electrode active material]

A coated positive electrode active material for a lithium ion battery using the solution of the polymer compound (B-1) as a resin solution was produced by the following method.

96.9 parts of $LiNi_{0.8}Co_{0.15}Al_{0.05}O_2$ [manufactured by TODA KOGYO CORP., volume average particle diameter: 6.4 μm] as a positive electrode active material was put into an all-purpose mixer, High Speed Mixer FS25 [manufactured by EARTHTECHNICA Co., Ltd.], the above-described resin solution was added dropwise thereto over 2 minutes with stirring at room temperature and 720 rpm, and the mixture was further stirred for 5 minutes.

Next, in a state of the mixture being stirred, 3 parts of acetylene black [DENKA BLACK (registered trade name) manufactured by Denka Company Limited] was divisionally added as a conductive auxiliary agent in 2 minutes, and stirring was continued for 30 minutes. Thereafter, the pressure was reduced to 0.01 MPa while maintaining the stirring, the temperature was subsequently raised to 150°C while maintaining the stirring and the degree of pressure reduction, and the stirring, the degree of pressure reduction, and the temperature were maintained for 8 hours to distill off volatile matter. The obtained powder was classified with a sieve having a mesh size of 212 μm to obtain a coated positive electrode active material.

[Production of positive electrode half cell]

A positive electrode active material layer was formed on the principal surface on which the recess of the lithium ion battery current collectors (S-1) to (S-12), and (S-14) was formed to produce a positive electrode.
Further, a positive electrode active material layer was formed on the principal surface of the resin current collector layer (L-1) to produce a positive electrode.
Specifically, 42 parts of the electrolyte solution and 4.2 parts of carbon fiber [DONACARBO Milled S-243 manufactured by Osaka Gas Chemicals Co., Ltd.; average fiber length: 500 μm, average fiber diameter: 13 μm, electrical conductivity: 200 mS/cm] were mixed at 2000 rpm for 5 minutes using a planetary stirring type mixing and kneading device {Awatori Rentaro [manufactured by THINKY Corporation]}. Subsequently, after adding 30 parts of the above-described electrolyte solution and 206 parts of the above-described coated positive electrode active material, the mixture was further mixed with the Awatori Rentaro at 2000 rpm for 2 minutes, and after adding 20 parts of the above-described electrolyte solution, the mixture was further mixed with the Awatori Rentaro at 2000 rpm for 1 minute. Next, after adding the above-described 2.3 parts of the electrolyte solution, the mixture was further mixed with the Awatori Rentaro at 2000 rpm for 2 minutes to produce a positive electrode slurry. The obtained positive electrode slurry was applied to one side of the lithium ion battery current collector or the resin current collector layer so that the amount of active material was 80 mg/cm$^2$, and pressing was performed at a pressure of 1.4 MPa for approximately 10 seconds to produce positive electrode half cells (15 mmφ) according to Examples 1-10 to 1-18 and Comparative Examples 1-6 to 1-10.

[Production of lithium ion battery]

The obtained positive electrode half cell was combined with a counter electrode Li metal through a separator (#3501 manufactured by Celgard, LLC), and the electrolyte solution was injected to produce a laminated cell.

[Measurement of discharge capacity]

At 45°C, a charging and discharging test was performed on the lithium ion battery by the following method using a charging and discharging measuring device "HJ-SD8" [manufactured by HOKUTO DENKO Corporation]. The results are shown in Table 1-4.
After charging to 4.2 V by a constant current and constant voltage method (0.1 C) and resting for 10 minutes, the battery was discharged to 2.6 V by a constant current method (0.1 C).
A capacity discharged at this time was defined as [discharge capacity (mAh)].

[Measurement of internal resistance]

At 45°C, the positive electrode half cell was evaluated by the following method using a charging and discharging measuring device "HJ-SD8" [manufactured by HOKUTO DENKO Corporation]. The results are shown in Table 1-4.
After charging to 4.2 V by a constant current and constant voltage method (0.1 C) and resting for 10 minutes, the battery was discharged to 2.6 V by a constant current method (0.1 C). The voltage and current after 0 seconds of discharge at 0.1 C and the voltage and current after 10 seconds of discharge at 0.1 C were measured by the constant current and constant voltage method (also referred to as a CCCV mode), and the internal resistance was calculated by the following expression. As the internal resistance is smaller, battery characteristics are better.
The voltage after 0 seconds of discharge is a voltage measured at the same time as discharge (also referred to as a discharge voltage).

[Internal resistance ($\Omega\cdot cm^2$)] = [(voltage after 0 seconds of discharge at 0.1 C) - (voltage after 10 seconds of discharge at 0.1 C)] ÷ [(current after 0 seconds of discharge at 0.1 C) - (current after 10 seconds of discharge at 0.1 C)] × [facing surface area ($cm^2$) of electrodes]

[Table 1-4]

| Positive electrode half cell | Example 1-10 | Example 1-11 | Example 1-12 | Example 1-13 | Example 1-14 | Example 1-15 | Example 1-16 | Example 1-17 | Example 1-18 | Comparative Example 1-6 | Comparative Example 1-7 | Comparative Example 1-8 | Comparative Example 1-9 | Comparative Example 1-10 |
|---|---|---|---|---|---|---|---|---|---|---|---|---|---|---|
| Lithium ion battery current collector | S-1 | S-2 | S-3 | S-4 | S-5 | S-6 | S-7 | S-8 | S-9 | L-1 | S-10 | S-11 | S-12 | S-14 |
| Polymer compound (B) | B-1 | B-1 | B-1 | B-1 | B-1 | B-1 | B-1 | B-1 | B-1 | B-1 | B-1 | B-1 | B-1 | B-1 |
| Internal resistance [$\Omega \cdot cm^2$] | 12.9 | 12.5 | 11.8 | 13.3 | 14.2 | 11.4 | 11.8 | 12.6 | 13.2 | 14.5 | 14.5 | 14.4 | 14.3 | 12.5 |
| Discharge capacity (mAh) | 16.4 | 16.4 | 16.4 | 16.4 | 16.4 | 16.4 | 16.4 | 16.4 | 16.2 | 16.4 | 16.4 | 16.4 | 15.3 | 16.4 |
| 10-cycle capacity retention rate (%) | 91.8 | 92.1 | 93.5 | 93.2 | 92.5 | 92.3 | 93.7 | 92.1 | 91.9 | 90.3 | 90.1 | 90.3 | 88.5 | Short circuit |
| Notice | - | - | - | - | - | - | - | - | - | Reference value | No change from reference value | No change from reference value | - | Hole in current collector |

The positive electrode half cell of Comparative Example 1-6 was used as a reference value.

Comparative Example 1-6 corresponded to an example in which the lithium ion battery current collector was the resin current collector layer (L-1) and a resin current collector having no unevenness on the principal surface was used.

A case where the internal resistance was clearly lower than that of Comparative Example 1-6 (less than 14.4 ($\Omega \cdot cm^2$)) and the 10-cycle capacity retention rate was higher than that of Comparative Example 1-6 was judged to be highly evaluated.

In each of the positive electrode half cells according to Examples 1-10 to 1-18, the internal resistance was lower than that of Comparative Example 1-6, and the 10-cycle capacity retention rate was higher than that of Comparative Example 1-6.

That is, it was found that, in the positive electrode half cell of each Example, the internal resistance could be reduced and the capacity retention rate after the cycle test could be increased.

<Evaluation test with negative electrode>

[Production of coated negative electrode active material]

A coated negative electrode active material for a lithium ion battery using the solution of the polymer compound (B-2) as a resin solution was produced by the following method.

100 parts of non-graphitizable carbon [CARBOTRON (registered trade name) PS(F) manufactured by Kureha Battery Materials Japan Co., Ltd.] as a negative electrode active material was put into an all-purpose mixer, High Speed Mixer FS25 [manufactured by EARTHTECHNICA Co., Ltd.], the above-described resin solution was added dropwise thereto over 2 minutes with stirring at room temperature and 720 rpm, and the mixture was further stirred for 5 minutes.

Next, in a state of the mixture being stirred, 5.1 parts of acetylene black [DENKA BLACK (registered trade name) manufactured by Denka Company Limited] was divisionally added as a conductive auxiliary agent in 2 minutes, and stirring was continued for 30 minutes. Thereafter, the pressure was reduced to 0.01 MPa while maintaining the stirring, the temperature was subsequently raised to 150°C while maintaining the stirring and the degree of pressure reduction, and the stirring, the degree of pressure reduction, and the temperature were maintained for 8 hours to distill off volatile matter. The obtained powder was classified with a sieve having a mesh size of 212 μm to obtain a coated negative electrode active material.

[Production of negative electrode half cell]

A negative electrode active material layer was formed on the principal surface on which the recess of the lithium ion battery current collectors (S-1) to (S-12) was formed to produce a negative electrode.

Further, a negative electrode active material layer was formed on the principal surface of the resin current collector layer (L-1) to produce a negative electrode.

Specifically, 150 parts of the electrolyte solution and 4.2 parts of the carbon fiber were mixed at 2000 rpm for 5 minutes using a planetary stirring type mixing and kneading device {Awatori Rentaro [manufactured by THINKY Corporation]}. Subsequently, after adding 50 parts of the above-described electrolyte solution and 206 parts of the above-described coated negative electrode active material, the mixture was further mixed with the Awatori Rentaro at 2000 rpm for 2 minutes, and after adding 20 parts of the above-described electrolyte solution, the mixture was further mixed with the Awatori Rentaro at 2000 rpm for 1 minute. Next, after adding the above-described 2.3 parts of the electrolyte solution, the mixture was further mixed with the Awatori Rentaro at 2000 rpm for 2 minutes to produce a negative electrode slurry. The obtained negative electrode slurry was applied to one side of the lithium ion battery current collector so that the amount of active material was 30.0 $mg/cm^2$, and pressing was performed at a pressure of 1.4 MPa for approximately 10 seconds to produce negative electrode half cells (16 mmφ) according to Examples 1-19 to 1-27 and Comparative Examples 1-11 to 1-14.

[Production of lithium ion battery]

The obtained negative electrode was combined with a counter electrode Li metal through a separator (#3501 manufactured by Celgard, LLC), and the electrolyte solution was injected to produce a laminated cell.

The discharge capacity and the internal resistance were measured in the same manner as in the evaluation test with the positive electrode. The results are shown in Table 1-5.

[Table 1-5]

| Negative electrode half cell | Example 1-19 | Example 1-20 | Example 1-21 | Example 1-22 | Example 1-23 | Example 1-24 | Example 1-25 | Example 1-26 | Example 1-27 | Comparative Example 1-11 | Comparative Example 1-12 | Comparative Example 1-13 | Comparative Example 1-14 |
|---|---|---|---|---|---|---|---|---|---|---|---|---|---|
| Lithium ion battery current collector | S-1 | S-2 | S-3 | S-4 | S-5 | S-6 | S-7 | S-8 | S-9 | L-1 | S-10 | S-11 | S-12 |
| Polymer compound (B) | B-2 | B-2 | B-2 | B-2 | B-2 | B-2 | B-2 | B-2 | B-2 | B-2 | B-2 | B-2 | B-2 |
| Internal resistance [$\Omega \cdot cm^2$] | 16.5 | 16.3 | 14.8 | 15.4 | 16.7 | 13.4 | 14.5 | 15.3 | 15.9 | 18.2 | 18.1 | 17.8 | 14.3 |
| Discharge capacity (mAh) | 15.4 | 15.4 | 15.4 | 15.2 | 15.1 | 15.4 | 15.4 | 15.4 | 15.4 | 15.4 | 15.4 | 15.4 | 13.7 |
| 10-cycle capacity retention rate (%) | 88.6 | 88.9 | 91.2 | 92.1 | 92.5 | 92.8 | 91.8 | 89.4 | 88.5 | 85.2 | 84.2 | 83.4 | 76.5 |
| Notice | - | - | - | - | - | - | - | - | - | Reference value | No change from reference value | No change from reference value | - |

The negative electrode half cell of Comparative Example 1-11 was used as a reference value.

Comparative Example 1-11 corresponded to an example in which the lithium ion battery current collector was the resin current collector layer (L-1) and a resin current collector having no unevenness on the principal surface was used.

A case where the internal resistance was clearly lower than that of Comparative Example 1-11 (less than 17.8 ($\Omega \cdot cm^2$)) and the 10-cycle capacity retention rate was higher than that of Comparative Example 1-11 was judged to be highly evaluated.

In each of the negative electrode half cells according to Examples 1-19 to 1-27, the internal resistance was lower than that of Comparative Example 1-11, and the 10-cycle capacity retention rate was higher than that of Comparative Example 1-11.

That is, it was found that, in the negative electrode half cell of each Example, the internal resistance could be reduced and the capacity retention rate after the cycle test could be increased.

[Examples of lithium ion battery current collector of second aspect and related matter]

<Synthesis of polymer material (2A2)>

65 parts of toluene was charged into a four-necked flask equipped with a stirrer, a thermometer, a reflux condenser, a dropping funnel, and a nitrogen gas introduction tube, and the temperature was raised to 75°C. Next, a monomer blending solution obtained by blending 27 parts of 2-ethylhexyl acrylate, 1.5 parts of isobutyl methacrylate, 1.4 parts of methacrylic acid, and 0.1 parts of 1,6-hexanediol dimethacrylate, and an initiator solution obtained by dissolving 0.03 parts of 2,2'-azobis(2,4-dimethylvaleronitrile) in 5 parts of toluene were continuously added dropwise to the four-necked flask over 2 hours under stirring by using a dropping funnel, while blowing nitrogen thereinto, to carry out radical polymerization. After completion of the dropwise addition, the temperature was raised to 75°C and the reaction was continued for 1 hour. Next, an initiator solution obtained by dissolving 0.01 parts of 2,2'-azobis(2,4-dimethylvaleronitrile) in 1 part of toluene was added thereto with a dropping funnel, and the reaction was continued for 3 hours to obtain a copolymer solution. The obtained copolymer solution was transferred to a Teflon (registered trade name) vat. Toluene was distilled off by drying under reduced pressure at 80°C and 0.09 MPa for 3 hours. Next, the temperature was raised to 100°C, and a copolymer was obtained by heating with a vacuum drier for 1 hour at 120°C and 0.01 MPa. 10 parts of the copolymer was dissolved in 40 parts of acetone to obtain a solution of a polymer material (2A2-1), having a resin concentration of 20%.

Polymer materials (2A2-2) to (2A2-4) were synthesized by changing the monomer composition as shown in Table 2-1.

For the polymer materials (2A2-1) to (2A2-4), a molecular weight (Mw), an SP value, a glass transition temperature were determined.

These physical properties are summarized in Table 2-1.

[Table 2-1]

| | | 2A2-1 | 2A2-2 | 2A2-3 | 2A2-4 |
|---|---|---|---|---|---|
| Part by weight of monomer of polymer material (2A2) | 2-Ethylhexyl acrylate | 90 | - | - | 20 |
| | Lauryl methacrylate | - | 80 | 90 | - |
| | Isobutyl methacrylate | 5 | - | 5 | - |
| | Methyl methacrylate | - | 15 | - | - |
| | Methacrylic acid | 4.6 | 4.6 | - | - |
| | Acrylic acid | - | - | 5 | 19.6 |
| | Isobornyl methacrylate | - | - | - | 60 |
| | 1,6-Hexanediol dimethacrvlate | 0.4 | 0.4 | - | 0.4 |
| Physical properties | Molecular weight (Mw) | 98000 | 91000 | 87000 | 92000 |
| | SP value $[cal/cm^3]^{1/2}$ | 9.2 | 9.2 | 9.3 | 10.4 |
| | Glass transition temperature [°C] | 22 | -40 | -50 | 98 |

<Production of resin current collector substrate>

75 parts of a polypropylene resin as a polymer material (2A3), 20 parts of acetylene black as a conductive filler, and 5 parts of a dispersing agent [product name "UMEX 1001 (an acid-modified polypropylene)", manufactured by Sanyo Chemical Industries, Ltd.] were melted and kneaded with a twin-screw extruder under the conditions of 180°C, 100 rpm, and a residence time of 5 minutes, whereby a composition for a resin current collector substrate was obtained.
The obtained composition for a resin current collector substrate was extruded from a T-die and rolled with a cooling roll of which the temperature was adjusted to 50°C, whereby a resin current collector substrate (L-1) was obtained. A thickness of the obtained resin current collector substrate was 50 μm.
A resin current collector substrate (L-2) was obtained by using a composition having the composition shown in Table 2-2 as the composition for a resin current collector substrate in the resin current collector substrate (L-1).
A resin current collector substrate (L-3) as a multi-layer film was obtained by stacking and heatpressing the resin current collector substrate (L-1) and the resin current collector substrate (L-2) at 160°C to be integrated.
A resin current collector substrate (L-4) was obtained by forming metal layer made of platinum on one principal surface of the resin current collector substrate (L-3) by sputtering.
For the resin current collector substrates (L-1) to (L-4), a thickness, a surface roughness Ra, a penetration resistance value, an SP value of the polymer material (2A3), and a breaking stress were determined.
For (L-4), the surface roughness of the surface on which the metal layer was not formed was measured.
The thickness of the resin current collector substrate was measured using a film thickness meter [manufactured by Mitutoyo Corporation].
A method for measuring the penetration resistance value is as follows.
These physical properties are summarized in Table 2-2.

[Measurement of penetration resistance value]

The resin current collector substrates were punched to φ15 mm, and the penetration resistance value of each of the resin current collector substrates was measured using an electric resistance measuring instrument [IMC-0240 type, manufactured by Imoto Machinery Co., Ltd.] and a resistance meter [RM3548, manufactured by HIOKI E.E. Corporation].
The resistance value of the resin current collector substrate was measured in a state in which a load of 2.16 kg was applied to the electric resistance measuring instrument, and a value 60 seconds after the load of 2.16 kg was applied was taken as the resistance value of the resin current collector substrate. As indicated in the expression below, a value obtained by multiplying the area (1.77 $cm^2$) of the contact surface of the jig at the time of resistance measurement was used as the penetration resistance value ($\Omega \cdot cm^2$).

$$\text{Penetration resistance value } (\Omega \cdot cm^2) = \text{resistance value } (\Omega) \times 1.77 \ (cm^2)$$

[Measurement of breaking stress]

The resin current collector substrate was molded with a dumbbell punching machine according to JIS K 7127, the sample was fixed to a 1 kN load cell fixed to an autograph [AGS-X10kN manufactured by Shimadzu Corporation] and a grip for a tensile test, and the breaking stress (MPa) was defined as a value obtained by dividing a test force at a breaking point pulled at a speed of 100 mm/min by a cross-sectional area of a fracture surface.

$$\text{Breaking stress (MPa)} = \text{test force (N)}/(\text{film thickness (mm)} \times 10 \text{ (mm)})$$

[Table 2-2]

| | | | L-1 | L-2 | L-3 | L-4 |
|---|---|---|---|---|---|---|
| Resin current collector substrate | Polymer material (2A3) | Polypropylene resin [part by weight] | 75 | 70 | L-1 + L-2 | Forming Pt film on one side of L-3 |
| | Conductive filler | Acetylene black [part by weight] | 20 | 25 | | |
| | Dispersing aqent | UMEX [part by weight] | 5 | 5 | | |
| Physical properties of resin current collector substrate | Thickness [μm] | | 50 | 48 | 72 | 72 |
| | Ra [μm] | | 0.4 | 0.6 | 0.8 | 0.8 |
| | Penetration resistance value [Ω·cm$^2$] | | 10 | 8.5 | 13.1 | 10.9 |
| | SP value of polymer material (2A3) [cal/cm$^3$]$^{1/2}$ | | 8.1 | 8.1 | 8.1 | 8.1 |
| | Breaking stress [MPa] | | 40 | 36 | 37 | 36 |

<Synthesis of polymer compound>

95 parts of lauryl methacrylate, 4.6 parts of methacrylic acid, 0.4 parts of 1,6-hexanediol dimethacrylate, and 390 parts of toluene were charged into a four-necked flask equipped with a stirrer, a thermometer, a reflux condenser, a dropping funnel, and a nitrogen gas introduction tube, and the temperature was raised to 75°C. 10 parts of toluene, 0.200 parts of 2,2'-azobis(2,4-dimethylvaleronitrile), and 0.200 parts of 2,2'-azobis(2-methylbutyronitrile) were mixed. The obtained monomer mixture solution was continuously added dropwise to the flask over 4 hours with a dropping funnel, while blowing nitrogen thereto, to carry out radical polymerization. After the completion of the dropwise addition, a solution prepared by dissolving 0.800 parts of 2,2'-azobis(2,4-dimethylvaleronitrile) in 12.4 parts of toluene was continuously added thereto using a dropping funnel at 6 to 8 hours after the start of polymerization. Further, the polymerization was continued for 2 hours, and 488 parts of toluene was added thereto to obtain a solution of a polymer compound (B-1), having a resin solid content concentration of 30% by weight.

A polymer compound (B-2) was synthesized by changing the monomer composition as shown in Table 2-3.

For the polymer compounds (B-1) and (B-2), a molecular weight (Mw), an SP value, a glass transition temperature were determined.

These physical properties are summarized in Table 2-3.

[Table 2-3]

| | | B-1 | B-2 |
|---|---|---|---|
| Part by weight of monomer of polymer compound | 2-Ethylhexyl acrylate | - | 40 |
| | Lauryl methacrylate | 95 | 40 |
| | Methacrylic acid | 4.6 | - |
| | Acrylic acid | - | 20 |
| | Isobornyl methacrylate | - | - |
| | 1,6-Hexanediol dimethacrvlate | 0.4 | - |
| Physical properties | Molecular weight (Mw) | 87000 | 62000 |
| | SP value [cal/cm$^3$]$^{1/2}$ | 9.0 | 9.9 |
| | Glass transition temperature [°C] | 152 | 31 |

<Formation of surface layer>

(Example 2-1)

The resin current collector substrate (L-1) was disposed on a PET film, a plain weave SUS 316 mesh having a mesh size of 77 μm and a wire diameter of 50 μm was disposed thereon, and a PET film was disposed thereon. Thereafter, the laminate was set in a tabletop test press machine [SA-302, manufactured by TESTER SANGYO CO,. LTD.] in which a temperature of upper table was adjusted to 170°C and a temperature of lower table was adjusted to 160°C, and a pressure was adjusted so that a load on the resin current collector substrate was 25 MPa to perform pressing for 20 seconds.

After the pressing, the laminate was taken out from the press machine and allowed to cool in a room temperature atmosphere for 10 minutes. After allowing to cool, the PET films on both sides were peeled off to obtain a current collector in which the SUS mesh as a surface layer was fused onto the resin current collector substrate. A thickness of the obtained current collector was 105 μm.

The obtained lithium ion battery current collector was defined as (D-1).

(Examples 2-2 to 2-5)

Lithium ion battery current collectors (D-2) to (D-5) were obtained by changing the resin current collector substrate and the mesh as shown in Table 2-4.

In a case where the resin current collector substrate (L-4) was used as the resin current collector substrate, a surface layer was formed on a surface on which a Pt film was not formed.

For the obtained lithium ion battery current collectors, a thickness, a surface roughness Ra of the surface layer, a penetration resistance value, and a breaking stress were determined. The results are summarized in Table 2-4.

[Table 2-4]

| | Example 2-1 | Example 2-2 | Example 2-3 | Example 2-4 | Example 2-5 |
|---|---|---|---|---|---|
| Lithium ion battery current collector | D-1 | D-2 | D-3 | D-4 | D-5 |
| Resin current collector substrate | L-1 | L-2 | L-1 | L-3 | L-4 |
| Mesh size of mesh [μm] | 77 | 283 | 77 | 77 | 77 |
| Wire diameter of mesh [μm] | 50 | 140 | 50 | 50 | 50 |
| Material and weaving method of mesh | SUS 316 plain weave | SUS 304 plain weave | Cu plain weave | SUS 316 plain weave | SUS 316 plain weave |
| Thickness [μm] | 105 | 110 | 110 | 125 | 126 |
| Ra [μm] | 43.5 | 42.8 | 39.2 | 43.6 | 44.1 |
| Penetration resistance value [$\Omega \cdot cm^2$] | 2.1 | 2.3 | 1.1 | 2.4 | 1.9 |
| Breaking stress [MPa] | 38 | 34 | 37 | 34 | 35 |

(Example 2-6)

A composition for a first layer was produced by mixing the polymer material (2A2) and the conductive filler with the constitution shown in Table 2-5.

The first layer was formed by applying the composition for a first layer to one principal surface of the resin current collector substrate (L-1) and drying the composition.

The resin current collector substrate (L-1) was disposed on a surface of the resin current collector substrate, on which the first layer was not formed, a plain weave SUS 316 mesh having a mesh size of 77 μm and a wire diameter of 50 μm was disposed thereon, and a PET film was disposed thereon. Thereafter, the laminate was set in a tabletop test press machine [SA-302, manufactured by TESTER SANGYO CO,. LTD.] in which a temperature of upper table was adjusted to 25°C and a temperature of lower table was adjusted to 25°C, and a pressure was adjusted so that a load on the resin current collector substrate was 250 MPa to perform pressing for 60 seconds.

After the pressing, the laminate was taken out from the press machine, and the PET films on both sides were peeled off to obtain a current collector in which the SUS mesh as a surface layer was adhered to the resin current collector substrate. A thickness of the obtained current collector was 161 μm.

The obtained lithium ion battery current collector was defined as (T-1).

In Table 2-5, CNF refers to carbon nanofiber (product name "VGCF-H", manufactured by Showa Denko K.K.), and Ni particles refer to a product name "Nickel Powder Type 255 (manufactured by Vale)".

(Examples 2-7 to 2-9 and Comparative Example 2-1)

Lithium ion battery current collectors (T-2) to (T-5) were obtained by changing the resin current collector substrate, the composition for a first layer, and the mesh as shown in Table 2-5.

In a case where the resin current collector substrate (L-4) was used as the resin current collector substrate, a surface layer was formed on a surface on which a Pt film was not formed.

In the lithium ion battery current collector (T-5) of Comparative Example 2-1, the mesh was not adhered to the first layer, and the mesh was only placed on the first layer.

For the obtained lithium ion battery current collectors, a thickness, a surface roughness Ra of the surface layer, a penetration resistance value, and a breaking stress were determined. The results are summarized in Table 2-5.

[Table 2-5]

<table>
<tr><th colspan="3"></th><th>Example 2-6</th><th>Example 2-7</th><th>Example 2-8</th><th>Example 2-9</th><th>Comparative Example 2-1</th></tr>
<tr><td colspan="3">Lithium ion battery current collector</td><td>T-1</td><td>T-2</td><td>T-3</td><td>T-4</td><td>T-5</td></tr>
<tr><td colspan="3">Resin current collector substrate</td><td>L-1</td><td>L-1</td><td>L-1</td><td>L-4</td><td>L-1</td></tr>
<tr><td rowspan="8">Composition for first layer</td><td rowspan="5">Polymer material (2A2)</td><td>Type and Tg (°C)</td><td>-</td><td>-</td><td>-</td><td>-</td><td>-</td></tr>
<tr><td>2A2-1 (Tg: 22°C)</td><td>70</td><td>70</td><td>-</td><td>-</td><td>-</td></tr>
<tr><td>2A2-2 (Tg:-40°C)</td><td>-</td><td>-</td><td>70</td><td>-</td><td>-</td></tr>
<tr><td>2A2-3 (Tg:-50°C)</td><td>-</td><td>-</td><td>-</td><td>70</td><td>-</td></tr>
<tr><td>2A2-4 (Tg: 98°C)</td><td>-</td><td>-</td><td>-</td><td>-</td><td>70</td></tr>
<tr><td rowspan="3">Conductive filler</td><td>Acetylene black</td><td>30</td><td>30</td><td>-</td><td>-</td><td>30</td></tr>
<tr><td>CNF</td><td>-</td><td>-</td><td>30</td><td>-</td><td>-</td></tr>
<tr><td>Ni particles</td><td>-</td><td>-</td><td>-</td><td>30</td><td>-</td></tr>
<tr><td colspan="3">Mesh size of mesh for forming second layer [μm]</td><td>77</td><td>70</td><td>70</td><td>70</td><td>45</td></tr>
<tr><td colspan="3">Wire diameter of mesh for forming second layer [μm]</td><td>50</td><td>70</td><td>70</td><td>70</td><td>40</td></tr>
<tr><td colspan="3">Material and weaving method of mesh for forming second layer</td><td>SUS 316 plain weave</td><td>Nitrile plain weave</td><td>Nitrile plain weave</td><td>Nitrile plain weave</td><td>SUS 316 twill weave</td></tr>
<tr><td colspan="3">Thickness [μm]</td><td>161</td><td>132</td><td>133</td><td>152</td><td>163</td></tr>
</table>

(continued)

| | Example 2-6 | Example 2-7 | Example 2-8 | Example 2-9 | Comparative Example 2-1 |
|---|---|---|---|---|---|
| Ra [μm] | 45.3 | 24.5 | 24.4 | 20.3 | 41.2 |
| Penetration resistance value [Ω·cm$^2$ ] | 2.5 | 4.2 | 3.6 | 2.1 | 6.4 |
| Breaking stress [MPa] | 38 | 39 | 37 | 35 | * |
| Notice | - | - | - | -measured | * Stress cannot be measured due to mesh peeling |

<Preparation of electrolyte solution>

$LiN(FSO_2)_2$(LiFSI) was dissolved in a mixed solvent of ethylene carbonate (EC) and propylene carbonate (PC) (EC: PC = 1: 1 in terms of volume ratio) at a rate of 2 mol/L, whereby an electrolyte solution for a lithium ion battery was prepared.

(Examples 2-10 to 2-14 and Comparative Examples 2-2 and 2-3)

<Evaluation test with positive electrode>

[Production of coated positive electrode active material]

A coated positive electrode active material for a lithium ion battery using the solution of the polymer compound (B-1) as a resin solution was produced by the following method.

96.9 parts of $LiNi_{0.8}CO_{0.15}Al_{0.05}O_2$ [manufactured by TODA KOGYO CORP., volume average particle diameter: 6.4 μm] as a positive electrode active material was put into an all-purpose mixer, High Speed Mixer FS25 [manufactured by EARTHTECHNICA Co., Ltd.], the above-described resin solution was added dropwise thereto over 2 minutes with stirring at room temperature and 720 rpm, and the mixture was further stirred for 5 minutes.

Next, in a state of the mixture being stirred, 3 parts of acetylene black [DENKA BLACK (registered trade name) manufactured by Denka Company Limited] was divisionally added as a conductive auxiliary agent in 2 minutes, and stirring was continued for 30 minutes. Thereafter, the pressure was reduced to 0.01 MPa while maintaining the stirring, the temperature was subsequently raised to 150°C while maintaining the stirring and the degree of pressure reduction, and the stirring, the degree of pressure reduction, and the temperature were maintained for 8 hours to distill off volatile matter. The obtained powder was classified with a sieve having a mesh size of 212 μm to obtain a coated positive electrode active material.

[Production of positive electrode half cell]

A positive electrode active material layer was formed on the surface layer of the lithium ion battery current collectors (D-1), (D-2), (D-4), (D-5), (T-1), and (T-5) to produce a positive electrode.

Further, a positive electrode active material layer was formed on the surface of the resin current collector substrate (L-1) to produce a positive electrode.

Specifically, 42 parts of the electrolyte solution and 4.2 parts of carbon fiber [DONACARBO Milled S-243 manufactured by Osaka Gas Chemicals Co., Ltd.; average fiber length: 500 μm, average fiber diameter: 13 μm, electrical conductivity: 200 mS/cm] were mixed at 2000 rpm for 5 minutes using a planetary stirring type mixing and kneading device {Awatori Rentaro [manufactured by THINKY Corporation]}. Subsequently, after adding 30 parts of the above-described electrolyte solution and 206 parts of the above-described coated positive electrode active material, the mixture was further mixed with the Awatori Rentaro at 2000 rpm for 2 minutes, and after adding 20 parts of the above-described electrolyte solution, the mixture was further mixed with the Awatori Rentaro at 2000 rpm for 1 minute. Next, after adding the above-described 2.3 parts of the electrolyte solution, the mixture was further mixed with the Awatori Rentaro at 2000 rpm for 2 minutes to produce a positive electrode slurry. The obtained positive electrode slurry was applied to one side of the lithium ion battery current collector so that the amount of active material was 80 mg/cm$^2$, and pressing was performed at a pressure of 1.4 MPa for approximately 10 seconds to produce positive electrode half cells (15 mmφ) according to Examples 2-10 to 2-14 and Comparative Examples 2-2 and 2-3.

[Production of lithium ion battery]

The obtained positive electrode half cell was combined with a counter electrode Li metal through a separator (#3501 manufactured by Celgard, LLC), and the electrolyte solution was injected to produce a laminated cell.

[Measurement of discharge capacity]

At 45°C, a charging and discharging test was performed on the lithium ion battery by the following method using a charging and discharging measuring device "HJ-SD8" [manufactured by HOKUTO DENKO Corporation]. The results are shown in Table 2-6.
After charging to 4.2 V by a constant current and constant voltage method (0.1 C) and resting for 10 minutes, the battery was discharged to 2.6 V by a constant current method (0.1 C).
A capacity discharged at this time was defined as [discharge capacity (mAh)].

[Measurement of internal resistance]

At 45°C, the positive electrode half cell was evaluated by the following method using a charging and discharging measuring device "HJ-SD8" [manufactured by HOKUTO DENKO Corporation]. The results are shown in Table 2-6.
After charging to 4.2 V by a constant current and constant voltage method (0.1 C) and resting for 10 minutes, the battery was discharged to 2.6 V by a constant current method (0.1 C). The voltage and current after 0 seconds of discharge at 0.1 C and the voltage and current after 10 seconds of discharge at 0.1 C were measured by the constant current and constant voltage method (also referred to as a CCCV mode), and the internal resistance was calculated by the following expression. As the internal resistance is smaller, battery characteristics are better.
The voltage after 0 seconds of discharge is a voltage measured at the same time as discharge (also referred to as a discharge voltage).

[Internal resistance ($\Omega \cdot cm^2$)] = [(voltage after 0 seconds of discharge at 0.1 C) - (voltage after 10 seconds of discharge at 0.1 C)] ÷ [(current after 0 seconds of discharge at 0.1 C) - (current after 10 seconds of discharge at 0.1 C)] × [facing surface area ($cm^2$) of electrodes]

[Table 2-6]

| Positive electrode half cell | Example 2-10 | Example 2-11 | Example 2-12 | Example 2-13 | Example 2-14 | Comparative Example 2-2 | Comparative Example 2-3 |
|---|---|---|---|---|---|---|---|
| Lithium ion battery current collector | D-1 | D-2 | D-4 | D-5 | T-1 | L-1 | T-5 |
| Polymer compound | B-1 | B-1 | B-1 | B-1 | B-1 | B-1 | B-1 |
| Internal resistance [$\Omega \cdot cm^2$] | 11.2 | 11.3 | 11.5 | 11.9 | 11.1 | 14.5 | 12.7 |
| Discharge capacity (mAh) | 16.4 | 16.4 | 16.4 | 16.4 | 16.4 | 16.4 | 15.8 |

(continued)

| Positive electrode half cell | Example 2-10 | Example 2-11 | Example 2-12 | Example 2-13 | Example 2-14 | Comparative Example 2-2 | Comparative Example 2-3 |
|---|---|---|---|---|---|---|---|
| 10-cycle capacity retention rate (%) | 93.4 | 93.3 | 92.9 | 92.5 | 93.8 | 90.3 | 71.3 |
| Notice | - | - | - | - | - | - | - |

The positive electrode half cell of Comparative Example 2-2 was used as a reference value.

Comparative Example 2-2 corresponded to an example in which the lithium ion battery current collector was the resin current collector substrate (L-1) and a resin current collector having no unevenness on the surface layer was used.

A case where the internal resistance was clearly lower than that of Comparative Example 2-2 (less than 14.0 ($\Omega \cdot cm^2$)) and the discharge capacity was higher than or similar to that of Comparative Example 2-2 was judged to be highly evaluated.

In each of the positive electrode half cells according to Examples 2-10 to 2-14, the internal resistance was lower than that of Comparative Example 2-2, and the discharge capacity was about the same as that of Comparative Example 2-2.

In the positive electrode half cell according to Comparative Example 2-3, the internal resistance was higher than that of Examples 2-10 to 2-14, and the discharge capacity was lower than that of Comparative Example 2-2. Further, the 10-cycle capacity retention rate was low.

That is, it was found that, in the positive electrode half cell of each Example, the internal resistance could be reduced without reducing the discharge capacity.

(Examples 2-15 to 2-19 and Comparative Examples 2-4 and 2-5)

<Evaluation test with negative electrode>

[Production of coated negative electrode active material]

A coated negative electrode active material for a lithium ion battery using the solution of the polymer compound (B-2) as a resin solution was produced by the following method.

100 parts of non-graphitizable carbon [CARBOTRON (registered trade name) PS(F) manufactured by Kureha Battery Materials Japan Co., Ltd.] as a negative electrode active material was put into an all-purpose mixer, High Speed Mixer FS25 [manufactured by EARTHTECHNICA Co., Ltd.], the above-described resin solution was added dropwise thereto over 2 minutes with stirring at room temperature and 720 rpm, and the mixture was further stirred for 5 minutes.

Next, in a state of the mixture being stirred, 5.1 parts of acetylene black [DENKA BLACK (registered trade name) manufactured by Denka Company Limited] was divisionally added as a conductive auxiliary agent in 2 minutes, and stirring was continued for 30 minutes. Thereafter, the pressure was reduced to 0.01 MPa while maintaining the stirring, the temperature was subsequently raised to 150°C while maintaining the stirring and the degree of pressure reduction, and the stirring, the degree of pressure reduction, and the temperature were maintained for 8 hours to distill off volatile matter. The obtained powder was classified with a sieve having a mesh size of 212 μm to obtain a coated negative electrode active material.

[Production of negative electrode half cell]

A negative electrode active material layer was formed on the surface layer of the lithium ion battery current collectors (D-1), (D-3), (T-2), (T-3), (T-4), and (T-5) to produce a negative electrode.

Further, a negative electrode active material layer was formed on the surface of the resin current collector substrate (L-1) to produce a negative electrode.

Specifically, 150 parts of the electrolyte solution and 4.2 parts of the carbon fiber were mixed at 2000 rpm for 5 minutes using a planetary stirring type mixing and kneading device {Awatori Rentaro [manufactured by THINKY Corporation]}. Subsequently, after adding 50 parts of the above-described electrolyte solution and 206 parts of the above-described coated negative electrode active material, the mixture was further mixed with the Awatori Rentaro at 2000 rpm for 2 minutes, and after adding 20 parts of the above-described electrolyte solution, the mixture was further mixed with the Awatori Rentaro at 2000 rpm for 1 minute. Next, after adding the above-described 2.3 parts of the electrolyte solution, the mixture was further mixed with the Awatori Rentaro at 2000 rpm for 2 minutes to produce a negative electrode slurry. The obtained negative electrode slurry was applied to one side of the lithium ion battery current collector so that the amount of active material was 30.0 mg/cm$^2$, and pressing was performed at a pressure of 1.4 MPa for approximately 10 seconds to produce negative electrode half cells (16 mmφ) according to Examples 2-15 to 2-19 and Comparative Examples 2-4 and 2-5.

[Production of lithium ion battery]

The obtained negative electrode was combined with a counter electrode Li metal through a separator (#3501 manufactured by Celgard, LLC), and the electrolyte solution was injected to produce a laminated cell.

The discharge capacity and the internal resistance were measured in the same manner as in the evaluation test with the positive electrode. The results are shown in Table 2-7.

[Table 2-7]

| Negative electrode half cell | Example 2-15 | Example 2-16 | Example 2-17 | Example 2-18 | Example 2-19 | Comparative Example 2-4 | Comparative Example 2-5 |
|---|---|---|---|---|---|---|---|
| Lithium ion battery current collector | D-1 | D-3 | T-2 | T-3 | T-4 | L-1 | T-5 |
| Polymer compound | B-2 | B-2 | B-2 | B-2 | B-2 | B-2 | B-2 |
| Internal resistance [Ω·cm$^2$] | 13.8 | 13.8 | 14.0 | 13.5 | 13.9 | 18.2 | 21.5 |
| Discharge capacity (mAh) | 15.5 | 15.6 | 15.8 | 15.9 | 16.8 | 15.4 | 14.8 |
| 10-cycle capacity retention rate (%) | 91.5 | 94.6 | 91.4 | 92.3 | 93.1 | 85.2 | 51.3 |
| Notice | - | - | - | - | - | - | - |

The negative electrode half cell of Comparative Example 2-4 was used as a reference value.

Comparative Example 2-4 corresponded to an example in which the lithium ion battery current collector was the resin current collector substrate (L-1) and a resin current collector having no unevenness on the surface layer was used.

A case where the internal resistance was clearly lower than that of Comparative Example 2-4 (less than 16.0 (Ω·cm$^2$)) and the discharge capacity was higher than or similar to that of Comparative Example 2-4 was judged to be highly evaluated.

In each of the negative electrode half cells according to Examples 2-15 to 2-19, the internal resistance was lower than that of Comparative Example 2-4, and the discharge capacity was higher than that of Comparative Example 2-4.

In the positive electrode half cell according to Comparative Example 2-5, the internal resistance was higher than that of Examples 2-15 to 2-19, and the discharge capacity was lower than that of Comparative Example 2-4. Further, the 10-cycle capacity retention rate was low.

That is, it was found that, in the negative electrode half cell of each Example, the internal resistance could be reduced and the discharge capacity could be further increased.

[Examples of lithium ion battery current collector of third aspect and related matter]

<Synthesis of polymer material (3A1)>

65 parts of toluene was charged into a four-necked flask equipped with a stirrer, a thermometer, a reflux condenser, a dropping funnel, and a nitrogen gas introduction tube, and the temperature was raised to 75°C. Next, a monomer blending solution obtained by blending 27 parts of 2-ethylhexyl acrylate, 1.5 parts of isobutyl methacrylate, 1.4 parts of methacrylic acid, and 0.1 parts of 1,6-hexanediol dimethacrylate, and an initiator solution obtained by dissolving 0.03 parts of 2,2'-azobis(2,4-dimethylvaleronitrile) in 5 parts of toluene were continuously added dropwise to the four-necked flask over 2 hours under stirring by using a dropping funnel, while blowing nitrogen thereinto, to carry out radical polymerization. After completion of the dropwise addition, the temperature was raised to 75°C and the reaction was continued for 1 hour. Next, an initiator solution obtained by dissolving 0.01 parts of 2,2'-azobis(2,4-dimethylvaleronitrile) in 1 part of toluene was added thereto with a dropping funnel, and the reaction was continued for 3 hours to obtain a copolymer solution. The obtained copolymer solution was transferred to a Teflon (registered trade name) vat. Toluene was distilled off by drying under reduced pressure at 80°C and 0.09 MPa for 3 hours. Next, the temperature was raised to 100°C, and a copolymer was obtained by heating with a vacuum drier for 1 hour at 120°C and 0.01 MPa. 10 parts of the copolymer was dissolved in 40 parts of acetone to obtain a solution of a polymer material (3A1-1), having a resin concentration of 20%.

Polymer materials (3A1-2) and (3A1-3) were synthesized by changing the monomer composition as shown in Table 3-1.

For the polymer materials (3A1-1) to (3A1-3), a molecular weight (Mw), an SP value, a glass transition temperature were determined.

These physical properties are summarized in Table 3-1.

[Table 3-1]

| | | 3A1-1 | 3A1-2 | 3A1-3 |
|---|---|---|---|---|
| Part by weight of monomer of polymer material (3A1) | 2-Ethylhexyl acrylate | 90 | - | - |
| | Lauryl methacrylate | - | 80 | 90 |
| | Isobutyl methacrylate | 5 | - | 5 |
| | Methyl methacrylate | - | 15 | - |
| | Methacrylic acid | 4.6 | 4.6 | - |
| | Acrylic acid | - | - | 5 |
| | 1,6-Hexanediol dimethacrvlate | 0.4 | 0.4 | - |
| Physical properties | Molecular weight (Mw) | 98000 | 91000 | 87000 |
| | SP value $[cal/cm^3]^{1/2}$ | 9.2 | 9.2 | 9.3 |
| | Glass transition temperature [°C] | 22 | -40 | -50 |

<Synthesis of polymer material (3A2)>

90 parts of acrylic acid, 10 parts of methyl methacrylate, and 390 parts of N,N-dimethylformamide (hereinafter, abbreviated as DMF) were charged into a four-necked flask equipped with a stirrer, a thermometer, a reflux condenser, a dropping funnel, and a nitrogen gas introduction tube, and the temperature was raised to 75°C. 10 parts of DMF and 0.200 parts of 2,2'-azobis(2,4-dimethylvaleronitrile) were mixed. The obtained monomer mixture solution was continuously added dropwise to the flask over 4 hours with a dropping funnel, while blowing nitrogen thereto, to carry out radical polymerization. After the completion of the dropwise addition, a solution prepared by dissolving 0.800 parts of 2,2'-azobis(2,4-dimethylvaleronitrile) in 12.4 parts of DMF was continuously added thereto using a dropping funnel at 6 to 8 hours after the start of polymerization. Further, the polymerization was continued for 2 hours to obtain a copolymer solution. The obtained copolymer solution was transferred to a Teflon (registered trade name) vat. A copolymer was obtained by heating with a vacuum drier for 5 hours at 140°C and 0.09 MPa to distill off DMF. 10 parts of the copolymer was dissolved in 40 parts of methanol to obtain a solution of a polymer material (3A2-1), having a resin concentration of 20%.

Polymer materials (3A2-2) to (3A2-4) were synthesized by changing the monomer composition as shown in Table 3-2.

For the polymer materials (3A2-1) to (3A2-4), a molecular weight (Mw), an SP value, a glass transition temperature were determined.

These physical properties are summarized in Table 3-2.

[Table 3-2]

| | | | 3A2-1 | 3A2-2 | 3A2-3 | 3A2-4 |
|---|---|---|---|---|---|---|
| Part by weight of monomer of polymer material (3A2) | Monomer having carboxylic acid group | Acrylic acid | 90 | 60 | 80 | 100 |
| | | Methacrylic acid | - | 30 | - | - |
| | | Anhydrous maleic acid | - | - | 10 | - |
| | Monomer not having carboxylic acid group | Methyl methacrylate | 10 | - | - | - |
| | | 2-Ethylhexyl methacrylate | - | 10 | 9.8 | - |
| | | 1,6-Hexanediol dimethacrvlate | - | - | 0.2 | - |
| Physical properties | | Molecular weight (Mw) | 72000 | 81000 | 51000 | 10000 |
| | | SP value $[cal/cm^3]^{1/2}$ | 13.6 | 13.0 | 13.4 | 14.0 |
| | | Glass transition temperature [°C] | 96 | 152 | 120 | 98 |

<Production of resin current collector substrate>

75 parts of a polypropylene resin as a polymer material (3A3), 20 parts of acetylene black as a conductive filler, and 5 parts of a dispersing agent [product name "UMEX 1001 (an acid-modified polypropylene)", manufactured by Sanyo Chemical Industries, Ltd.] were melted and kneaded with a twin-screw extruder under the conditions of 180°C, 100 rpm, and a residence time of 5 minutes, whereby a composition for a resin current collector substrate was obtained.

The obtained composition for a resin current collector substrate was extruded from a T-die and rolled with a cooling roll of which the temperature was adjusted to 50°C, whereby a resin current collector substrate (L-1) was obtained. A thickness of the obtained resin current collector substrate was 50 μm.

A resin current collector substrate (L-2) was obtained by using a composition having the composition shown in Table 3-3 as the composition for a resin current collector substrate in the resin current collector substrate (L-1).

A resin current collector substrate (L-3) as a multi-layer film was obtained by stacking and heatpressing the resin current collector substrate (L-1) and the resin current collector substrate (L-2) at 160°C to be integrated.

A resin current collector substrate (L-4) was obtained by forming metal layer made of platinum on one principal surface of the resin current collector substrate (L-3) by sputtering.

For the resin current collector substrates (L-1) to (L-4), a thickness, a surface roughness, a penetration resistance value, an SP value of the polymer material (3A3), and a breaking stress were determined.

For (L-4), the surface roughness of the surface on which the metal layer was not formed was measured.

The thickness of the resin current collector substrate was measured using a film thickness meter [manufactured by Mitutoyo Corporation].

A method for measuring the penetration resistance value is as follows.

These physical properties are summarized in Table 3-3.

[Measurement of penetration resistance value]

The resin current collector substrates were punched to cpl5 mm, and the penetration resistance value of each of the resin current collector substrates was measured using an electric resistance measuring instrument [IMC-0240 type, manufactured by Imoto Machinery Co., Ltd.] and a resistance meter [RM3548, manufactured by HIOKI E.E. Corporation].

The resistance value of the resin current collector substrate was measured in a state in which a load of 2.16 kg was applied to the electric resistance measuring instrument, and a value 60 seconds after the load of 2.16 kg was applied was taken as the resistance value of the resin current collector substrate. As indicated in the expression below, a value obtained by multiplying the area (1.77 $cm^2$) of the contact surface of the jig at the time of resistance measurement was used as the penetration resistance value ($\Omega \cdot cm^2$).

$$\text{Penetration resistance value } (\Omega\cdot cm^2) = \text{resistance value } (\Omega) \times 1.77\ (cm^2)$$

[Measurement of breaking stress]

The resin current collector was molded with a dumbbell punching machine according to JIS K 7127, the sample was fixed to a 1 kN load cell fixed to an autograph [AGS-X10kN manufactured by Shimadzu Corporation] and a grip for a tensile test, and the breaking stress (MPa) was defined as a value obtained by dividing a test force at a breaking point pulled at a speed of 100 mm/min by a cross-sectional area of a fracture surface.

$$\text{Breaking stress (MPa)} = \text{test force (N)}/(\text{film thickness (mm)} \times 10\ (\text{mm}))$$

[Table 3-3]

| | | | L-1 | L-2 | L-3 | L-4 |
|---|---|---|---|---|---|---|
| Resin current collector substrate | Polymer material (3A3) | Polypropylene resin [part by weight] | 75 | 70 | L-1 + L-2 | Forming Pt film on one side of L-3 |
| | Conductive filler | Acetylene black [part by weight] | 20 | 25 | | |
| | Dispersing agent | UMEX [part by weight] | 5 | 5 | | |
| Physical properties of resin current collector substrate | Thickness [μm] | | 50 | 48 | 72 | 72 |
| | Ra [μm] | | 0.4 | 0.6 | 0.8 | 0.8 |
| | Penetration resistance value [$\Omega\cdot cm^2$] | | 10 | 8.5 | 13.1 | 10.9 |
| | SP value of polymer material (3A3) [$cal/cm^3$]$^{1/2}$ | | 8.1 | 8.1 | 8.1 | 8.1 |
| | Breaking stress [MPa] | | 40 | 36 | 37 | 36 |

<Synthesis of polymer compound (B)>

95 parts of lauryl methacrylate, 4.6 parts of methacrylic acid, 0.4 parts of 1,6-hexanediol dimethacrylate, and 390 parts of toluene were charged into a four-necked flask equipped with a stirrer, a thermometer, a reflux condenser, a dropping funnel, and a nitrogen gas introduction tube, and the temperature was raised to 75°C. 10 parts of toluene, 0.200 parts of 2,2'-azobis(2,4-dimethylvaleronitrile), and 0.200 parts of 2,2'-azobis(2-methylbutyronitrile) were mixed. The obtained monomer mixture solution was continuously added dropwise to the flask over 4 hours with a dropping funnel, while blowing nitrogen thereto, to carry out radical polymerization. After the completion of the dropwise addition, a solution prepared by dissolving 0.800 parts of 2,2'-azobis(2,4-dimethylvaleronitrile) in 12.4 parts of toluene was continuously added thereto using a dropping funnel at 6 to 8 hours after the start of polymerization. Further, the polymerization was continued for 2 hours, and 488 parts of toluene was added thereto to obtain a solution of a polymer compound (B-1), having a resin solid content concentration of 30% by weight.

A polymer compound (B-2) was synthesized by changing the monomer composition as shown in Table 3-4.

For the polymer compounds (B-1) and (B-2), a molecular weight (Mw), an SP value, a glass transition temperature were determined.

These physical properties are summarized in Table 3-4.

[Table 3-4]

| | | B-1 | B-2 |
|---|---|---|---|
| Part by weight of monomer of polymer compound (B) | 2-Ethylhexyl acrylate | - | 40 |
| | Lauryl methacrylate | 95 | 40 |
| | Methacrylic acid | 4.6 | - |
| | Acrylic acid | - | 20 |
| | 1,6-Hexanediol dimethacrvlate | 0.4 | - |
| Physical properties | Molecular weight (Mw) | 87000 | 62000 |
| | SP value [cal/cm$^3$]$^{1/2}$ | 9.0 | 9.9 |
| | Glass transition temperature [°C] | 152 | 31 |

<Formation of first layer>

A composition for a first layer was produced by mixing the polymer material and the conductive filler with the constitution shown in Table 3-5.

The first layer was formed by applying the composition for a first layer to one principal surface of the resin current collector substrates (L-1) to (L-4) and drying the composition. The obtained substrates were defined as first layer forming substrates (S-1) to (S-9).

In a case where the resin current collector substrate (L-4) was used as the resin current collector substrate, a first layer was formed on a surface on which a Pt film was not formed.

In Table 3-5 and Table 3-6 described later, CNF refers to carbon nanofiber (product name "VGCF-H", manufactured by Showa Denko K.K.), and Ni particles refer to a product name "Nickel Powder Type 255" manufactured by Vale.

For the first layer forming substrates, a thickness, a surface roughness Ra of the surface of the first layer, a penetration resistance value, and a breaking stress were determined. These results are summarized in Table 3-5.

In the first layer forming substrate (S-8), curls were observed after drying. Further, in the first layer forming substrates (S-8) and (S-9), the breaking stress was small.

[Table 3-5]

| First layer forming substrate | | | S-1 | S-2 | S-3 | S-4 | S-5 | S-6 | S-7 | S-8 | S-9 |
|---|---|---|---|---|---|---|---|---|---|---|---|
| Resin current collector substrate | | | L-1 | L-1 | L-1 | L-2 | L-2 | L-3 | L-4 | L-1 | L-1 |
| Composition for first layer | Polymer material | 3A1-1 | 70 | - | - | 70 | - | 70 | - | - | - |
| | | 3A1-2 | - | 70 | 70 | - | - | - | 70 | - | - |
| | | 3A1-3 | - | - | - | - | 70 | - | - | - | - |
| | | 3A2-1 | - | - | - | - | - | - | - | - | 70 |
| | | 3A2-2 | - | - | - | - | - | - | - | - | - |
| | | 3A2-3 | - | - | - | - | - | - | - | - | - |
| | | 3A2-4 | - | - | - | - | - | - | - | 70 | - |
| | Conductive filler | Acetylene black | 30 | 30 | 27 | 30 | - | 30 | 30 | 30 | 30 |
| | | CNF | - | - | 3 | - | - | - | - | - | - |
| | | Ni particles | - | - | - | - | 30 | - | - | - | - |
| Thickness [μm] | | | 55 | 53 | 55 | 53 | 55 | 77 | 77 | 56 | 55 |
| Ra [μm] | | | 0.5 | 0.4 | 0.7 | 0.5 | 0.5 | 0.7 | 0.6 | 1.7 | 1.2 |
| Penetration resistance value [Ω·cm$^2$] | | | 8.8 | 8.6 | 8.3 | 7.4 | 7.1 | 11.2 | 9.1 | 8.4 | 8.9 |
| Breaking stress [MPa] | | | 37 | 37 | 35 | 33 | 32 | 34 | 34 | 15 | 19 |

(continued)

| First layer forming substrate | S-1 | S-2 | S-3 | S-4 | S-5 | S-6 | S-7 | S-8 | S-9 |
|---|---|---|---|---|---|---|---|---|---|
| Resin current collector substrate | L-1 | L-1 | L-1 | L-2 | L-2 | L-3 | L-4 | L-1 | L-1 |
| Notice | - | - | - | - | - | - | - | Curl after drying | - |

<Formation of second layer: Examples 3-1 to 3-10 and Comparative Examples 3-1 to 3-4>

A composition for a second layer was produced by mixing the polymer material and the conductive filler with the constitution shown in Table 3-6.

A plain weave SUS 316 mesh having a mesh size of 77 μm and a wire diameter of 50 μm was disposed on the surface of the first layer, the composition for a second layer was applied thereto from above, and the SUS mesh was peeled off to form a second layer having a pattern of recesses and protrusions. The mesh size, wire diameter, material, and weaving method of the second layer forming mesh were changed as shown in Table 3-6 for each Example and Comparative Example.

The obtained substrates were defined as second layer forming substrates (T-1) to (T-14).

The obtained second layer forming substrates were also lithium ion battery current collectors (T-1) to (T-14) .

For the obtained lithium ion battery current collectors, a thickness, a height Rp of the protrusion of the pattern of recesses and protrusions in the surface of the second layer, a surface roughness Ra of the surface of the second layer, a penetration resistance value, and a breaking stress were determined. These results are summarized in Table 3-6.

The lithium ion battery current collectors (T-1) to (T-10) are the lithium ion battery current collectors according to Examples 3-1 to 3-10, respectively, and the lithium ion battery current collectors (T-11) to (T-14) are the lithium ion battery current collectors according to Comparative Examples 3-1 to 3-4, respectively.

[Table 3-6]

| | | | Example 3-1 | Example 3-2 | Example 3-3 | Example 3-4 | Example 3-5 | Example 3-6 | Example 3-7 | Example 3-8 | Example 3-9 | Example 3-10 | Comparative Example 3-1 | Comparative Example 3-2 | Comparative Example 3-3 | Comparative Example 3-4 |
|---|---|---|---|---|---|---|---|---|---|---|---|---|---|---|---|---|
| Second layer forming substrate (lithium ion battery current collector) | | | T-1 | T-2 | T-3 | T-4 | T-5 | T-6 | T-7 | T-8 | T-9 | T-10 | T-11 | T-12 | T-13 | T-14 |
| First layer forming substrate | | | S-1 | S-1 | S-1 | S-1 | S-2 | S-3 | S-4 | S-5 | S-6 | S-7 | S-8 | S-8 | S-1 | S-1 |
| Composition for second layer | Polymer material | 3A1-1 | - | - | - | - | - | - | - | - | - | - | - | 70 | 70 | 70 |
| | | 3A1-2 | - | - | - | - | - | - | - | - | - | - | - | - | - | - |
| | | 3A1-3 | - | - | - | - | - | - | - | - | - | | - | - | - | - |
| | | 3A2-1 | 70 | 70 | 70 | - | 70 | - | - | 70 | 70 | 70 | 70 | - | - | - |
| | | 3A2-2 | - | - | - | 70 | - | - | - | - | - | - | - | - | - | - |
| | | 3A2-3 | - | - | - | - | - | 70 | - | - | - | - | - | - | - | - |
| | | 3A2-4 | - | - | - | - | - | - | 70 | - | - | - | - | - | - | - |
| | Conductive filler | Acetylene black | 30 | 30 | 30 | - | - | 30 | 30 | 25 | 30 | 30 | 30 | 30 | 30 | 30 |
| | | CNF | - | - | - | - | - | - | - | 5 | - | - | - | - | - | - |
| | | Ni particles | - | - | - | 30 | - | - | - | - | - | - | - | - | - | - |
| Mesh size of mesh for forming second layer [μm] | | | 77 | 77 | 283 | 283 | 45 | 77 | 77 | 70 | 77 | 77 | 77 | 77 | 77 | 45 |
| Wire diameter of mesh for forming second layer [μm] | | | 50 | 50 | 140 | 140 | 40 | 50 | 50 | 70 | 50 | 50 | 50 | 50 | 50 | 40 |
| Material and weaving method of mesh for forming second layer | | | SUS 316 plain weave | SUS 316 plain weave | SUS 304 plain weave | SUS 304 plain weave | SUS 316 twill weave | SUS 316 plain weave | SUS 316 plain weave | Nitrile plain weave | SUS 316 plain weave | SUS 316 plain weave | SUS 316 plain weave | SUS 316 plain weave | SUS 316 plain weave | SUS 316 twill weave |
| Thickness [μm] | | | 105 | 124 | 110 | 108 | 113 | 103 | 107 | 67 | 133 | 124 | - | 104 | 105 | 162 |
| Height Rp of protrusion [μm] | | | 50 | 69 | 55 | 52 | 65 | 50 | 55 | 11 | 56 | 47 | - | 49 | 50 | 107 |

(continued)

| | Example 3-1 | Example 3-2 | Example 3-3 | Example 3-4 | Example 3-5 | Example 3-6 | Example 3-7 | Example 3-8 | Example 3-9 | Example 3-10 | Comparative Example 3-1 | Comparative Example 3-2 | Comparative Example 3-3 | Comparative Example 3-4 |
|---|---|---|---|---|---|---|---|---|---|---|---|---|---|---|
| Ra [μm] | 9 | 20 | 5.5 | 5 | 23 | 9.7 | 10.2 | 5.3 | 8.5 | 8.8 | - | 15 | 4.2 | 31.5 |
| Penetration resistance value [$\Omega \cdot cm^2$] | 17 | 21 | 15 | 18 | 22 | 18 | 18 | 10 | 19 | 21 | - | 21 | 16 | 21 |
| Breaking stress [MPa] | 37 | 36 | 37 | 33 | 36 | 35 | 34 | 33 | 34 | 33 | - | 8 | 33 | 12 |
| Notice | - | - | - | - | - | - | - | Using nitrile mesh (30 μm thickness) | - | - | Cannot be measured due to curling too much | - | Unevenness is reduced due to dissolution of first laver | - |

<Preparation of electrolyte solution>

$LiN(FSO_2)_2$(LiFSI) was dissolved in a mixed solvent of ethylene carbonate (EC) and propylene carbonate (PC) (EC: PC = 1: 1 in terms of volume ratio) at a rate of 2 mol/L, whereby an electrolyte solution for a lithium ion battery was prepared.

<Evaluation test with positive electrode>

[Production of coated positive electrode active material]

A coated positive electrode active material for a lithium ion battery using the solution of the polymer compound (B-1) as a resin solution was produced by the following method.

96.9 parts of $LiNi_{0.8}Co_{0.15}Al_{0.05}O_2$ [manufactured by TODA KOGYO CORP., volume average particle diameter: 6.4 μm] as a positive electrode active material was put into an all-purpose mixer, High Speed Mixer FS25 [manufactured by EARTHTECHNICA Co., Ltd.], the above-described resin solution was added dropwise thereto over 2 minutes with stirring at room temperature and 720 rpm, and the mixture was further stirred for 5 minutes.

Next, in a state of the mixture being stirred, 3 parts of acetylene black [DENKA BLACK (registered trade name) manufactured by Denka Company Limited] was divisionally added as a conductive auxiliary agent in 2 minutes, and stirring was continued for 30 minutes. Thereafter, the pressure was reduced to 0.01 MPa while maintaining the stirring, the temperature was subsequently raised to 150°C while maintaining the stirring and the degree of pressure reduction, and the stirring, the degree of pressure reduction, and the temperature were maintained for 8 hours to distill off volatile matter. The obtained powder was classified with a sieve having a mesh size of 212 μm to obtain a coated positive electrode active material.

[Production of positive electrode half cell]

A positive electrode active material layer was formed on the second layer of the lithium ion battery current collectors (T-1) to (T-10), and (T-12) to (T-14) to produce a positive electrode.

Further, a positive electrode active material layer was formed on the surface of the resin current collector substrate (L-1) and the first layer of the first layer forming substrates (S-1) and (S-8) to produce a positive electrode.

Specifically, 42 parts of the electrolyte solution and 4.2 parts of carbon fiber [DONACARBO Milled S-243 manufactured by Osaka Gas Chemicals Co., Ltd.; average fiber length: 500 μm, average fiber diameter: 13 μm, electrical conductivity: 200 mS/cm] were mixed at 2000 rpm for 5 minutes using a planetary stirring type mixing and kneading device {Awatori Rentaro [manufactured by THINKY Corporation]}. Subsequently, after adding 30 parts of the above-described electrolyte solution and 206 parts of the above-described coated positive electrode active material, the mixture was further mixed with the Awatori Rentaro at 2000 rpm for 2 minutes, and after adding 20 parts of the above-described electrolyte solution, the mixture was further mixed with the Awatori Rentaro at 2000 rpm for 1 minute. Next, after adding the above-described 2.3 parts of the electrolyte solution, the mixture was further mixed with the Awatori Rentaro at 2000 rpm for 2 minutes to produce a positive electrode slurry. The obtained positive electrode slurry was applied to one side of the lithium ion battery current collector so that the amount of active material was 80 $mg/cm^2$, and pressing was performed at a pressure of 1.4 MPa for approximately 10 seconds to produce positive electrode half cells (15 mmφ) according to Examples 3-11 to 3-20 and Comparative Examples 3-5 to 3-10.

[Production of lithium ion battery]

The obtained positive electrode half cell was combined with a counter electrode Li metal through a separator (#3501 manufactured by Celgard, LLC), and the electrolyte solution was injected to produce a laminated cell.

[Measurement of discharge capacity]

At 45°C, a charging and discharging test was performed on the lithium ion battery by the following method using a charging and discharging measuring device "HJ-SD8" [manufactured by HOKUTO DENKO Corporation]. The results are shown in Table 3-7.

After charging to 4.2 V by a constant current and constant voltage method (0.1 C) and resting for 10 minutes, the battery was discharged to 2.6 V by a constant current method (0.1 C).

A capacity discharged at this time was defined as [discharge capacity (mAh)].

[Measurement of internal resistance]

At 45°C, the positive electrode half cell was evaluated by the following method using a charging and discharging measuring device "HJ-SD8" [manufactured by HOKUTO DENKO Corporation]. The results are shown in Table 3-7.

After charging to 4.2 V by a constant current and constant voltage method (0.1 C) and resting for 10 minutes, the battery was discharged to 2.6 V by a constant current method (0.1 C). The voltage and current after 0 seconds of discharge at 0.1 C and the voltage and current after 10 seconds of discharge at 0.1 C were measured by the constant current and constant voltage method (also referred to as a CCCV mode), and the internal resistance was calculated by the following expression. As the internal resistance is smaller, battery characteristics are better.

The voltage after 0 seconds of discharge is a voltage measured at the same time as discharge (also referred to as a discharge voltage).

[Internal resistance ($\Omega\cdot cm^2$)] = [(voltage after 0 seconds of discharge at 0.1 C) - (voltage after 10 seconds of discharge at 0.1 C)] ÷ [(current after 0 seconds of discharge at 0.1 C) - (current after 10 seconds of discharge at 0.1 C)] × [facing surface area ($cm^2$) of electrodes]

[Table 3-7]

| Positive electrode half cell | Example 3-11 | Example 3-12 | Example 3-13 | Example 3-14 | Example 3-15 | Example 3-16 | Example 3-17 | Example 3-18 | Example 3-19 | Example 3-20 | Comparative Example 3-5 | Comparative Example 3-6 | Comparative Example 3-7 | Comparative Example 3-8 | Comparative Example 3-9 | Comparative Example 3-10 |
|---|---|---|---|---|---|---|---|---|---|---|---|---|---|---|---|---|
| Lithium ion battery current collector | T-1 | T-2 | T-3 | T-4 | T-5 | T-6 | T-7 | T-8 | T-9 | T-10 | T-12 | T-13 | T-14 | L-1 | S-1 | S-8 |
| Polymer compound (B) | B-1 | B-1 | B-1 | B-1 | B-1 | B-1 | B-1 | B-1 | B-1 | B-1 | B-1 | B-1 | B-1 | B-1 | B-1 | B-1 |
| Internal resistance [$\Omega \cdot cm^2$] | 12.9 | 13. 8 | 13.5 | 13.1 | 13.9 | 13.3 | 13.2 | 13.6 | 13. 8 | 13.5 | 15.3 | 14.4 | 15.1 | 14.5 | 16.4 | 16.7 |
| Discharge capacity (mAh) | 16.4 | 16.4 | 16.4 | 16.4 | 16.4 | 16.4 | 16.4 | 16.4 | 16.2 | 16.2 | 15.8 | 16.3 | 16.1 | 16.4 | 16.3 | 15.9 |
| Notice | - | - | - | - | - | - | - | - | - | - | - | - | - | Reference value | - | - |

The positive electrode half cell of Comparative Example 3-8 was used as a reference value.

Comparative Example 3-8 corresponded to an example in which the lithium ion battery current collector was the resin current collector substrate (L-1) and a resin current collector having no unevenness on the surface layer was used.

A case where the internal resistance was clearly lower than that of Comparative Example 3-8 (less than 14.0 ($\Omega \cdot cm^2$)) and the discharge capacity was higher than or similar to that of Comparative Example 3-8 was judged to be highly evaluated.

In each of the positive electrode half cells according to Examples 3-11 to 3-20, the internal resistance was lower than that of Comparative Example 3-8, and the discharge capacity was about the same as that of Comparative Example 3-8.

That is, it was found that, in the positive electrode half cell of each Example, the internal resistance could be reduced without reducing the discharge capacity.

<Evaluation test with negative electrode>

[Production of coated negative electrode active material]

A coated negative electrode active material for a lithium ion battery using the solution of the polymer compound (B-2) as a resin solution was produced by the following method.

100 parts of non-graphitizable carbon [CARBOTRON (registered trade name) PS(F) manufactured by Kureha Battery Materials Japan Co., Ltd.] as a negative electrode active material was put into an all-purpose mixer, High Speed Mixer FS25 [manufactured by EARTHTECHNICA Co., Ltd.], the above-described resin solution was added dropwise thereto over 2 minutes with stirring at room temperature and 720 rpm, and the mixture was further stirred for 5 minutes.

Next, in a state of the mixture being stirred, 5.1 parts of acetylene black [DENKA BLACK (registered trade name) manufactured by Denka Company Limited] was divisionally added as a conductive auxiliary agent in 2 minutes, and stirring was continued for 30 minutes. Thereafter, the pressure was reduced to 0.01 MPa while maintaining the stirring, the temperature was subsequently raised to 150°C while maintaining the stirring and the degree of pressure reduction, and the stirring, the degree of pressure reduction, and the temperature were maintained for 8 hours to distill off volatile matter. The obtained powder was classified with a sieve having a mesh size of 212 μm to obtain a coated negative electrode active material.

[Production of negative electrode half cell]

A negative electrode active material layer was formed on the second layer of the lithium ion battery current collectors (T-1) to (T-10), and (T-12) to (T-14) to produce a negative electrode.

Further, a negative electrode active material layer was formed on the surface of the resin current collector substrate (L-1) and the first layer of the first layer forming substrates (S-1) and (S-8) to produce a negative electrode.

Specifically, 150 parts of the electrolyte solution and 4.2 parts of the carbon fiber were mixed at 2000 rpm for 5 minutes using a planetary stirring type mixing and kneading device {Awatori Rentaro [manufactured by THINKY Corporation]}. Subsequently, after adding 50 parts of the above-described electrolyte solution and 206 parts of the above-described coated negative electrode active material, the mixture was further mixed with the Awatori Rentaro at 2000 rpm for 2 minutes, and after adding 20 parts of the above-described electrolyte solution, the mixture was further mixed with the Awatori Rentaro at 2000 rpm for 1 minute. Next, after adding the above-described 2.3 parts of the electrolyte solution, the mixture was further mixed with the Awatori Rentaro at 2000 rpm for 2 minutes to produce a negative electrode slurry. The obtained negative electrode slurry was applied to one side of the lithium ion battery current collector so that the amount of active material was 30.0 $mg/cm^2$, and pressing was performed at a pressure of 1.4 MPa for approximately 10 seconds to produce negative electrode half cells (16 mmφ) according to Examples 3-21 to 3-30 and Comparative Examples 3-11 to 3-16.

[Production of lithium ion battery]

The obtained negative electrode was combined with a counter electrode Li metal through a separator (#3501 manufactured by Celgard, LLC), and the electrolyte solution was injected to produce a laminated cell.

The discharge capacity and the internal resistance were measured in the same manner as in the evaluation test with the positive electrode. The results are shown in Table 3-8.

[Table 3-8]

| Negative electrode half cell | Example 3-21 | Example 3-22 | Example 3-23 | Example 3-24 | Example 3-25 | Example 3-26 | Example 3-27 | Example 3-28 | Example 3-29 | Example 3-30 | Comparative Example 3-11 | Comparative Example 3-12 | Comparative Example 3-13 | Comparative Example 3-14 | Comparative Example 3-15 | Comparative Example 3-16 |
|---|---|---|---|---|---|---|---|---|---|---|---|---|---|---|---|---|
| Lithium ion battery current collector | T-1 | T-2 | T-3 | T-4 | T-5 | T-6 | T-7 | T-8 | T-9 | T-10 | T-12 | T-13 | T-14 | L-1 | S-1 | S-8 |
| Polymer compound (B) | B-2 | B-2 | B-2 | B-2 | B-2 | B-2 | B-2 | B-2 | B-2 | B-2 | B-2 | B-2 | B-2 | B-2 | B-2 | B-2 |
| Internal resistance [$\Omega \cdot cm^2$] | 13. 8 | 13. 8 | 14.0 | 13.5 | 13.9 | 13.3 | 13.6 | 14.4 | 14.5 | 14.3 | 17.9 | 18.5 | 18.7 | 18.2 | 18.6 | 16.5 |
| Discharge capacity (mAh) | 17.2 | 17.0 | 16.9 | 17.0 | 17.1 | 16.9 | 16.9 | 16.5 | 16.9 | 17.0 | 15.6 | 15.1 | 14.9 | 15.4 | 15.3 | 12.2 |
| Notice | - | - | - | - | - | - | - | - | - | - | - | - | - | Reference value | - | - |

The positive electrode half cell of Comparative Example 3-14 was used as a reference value.

Comparative Example 3-14 corresponded to an example in which the lithium ion battery current collector was the resin current collector substrate (L-1) and a resin current collector having no unevenness on the surface layer was used.

A case where the internal resistance was clearly lower than that of Comparative Example 3-14 (less than 16.0 ($\Omega \cdot cm^2$)) and the discharge capacity was higher than or similar to that of Comparative Example 3-14 was judged to be highly evaluated.

In each of the negative electrode half cells according to Examples 3-21 to 3-30, the internal resistance was lower than that of Comparative Example 3-14, and the discharge capacity was higher than that of Comparative Example 3-14.

That is, it was found that, in the negative electrode half cell of each Example, the internal resistance could be reduced and the discharge capacity could be further increased.

[Examples of resin current collector for positive electrode and related matter]

<Example 4-1>

50 parts of polymethyl methacrylate [PMMA, product name "Methyl methacrylate (polymer)", manufactured by NACALAI TESQUE, INC.] as a matrix resin and 50 parts of aluminum [product name "Aluminum (powder)", manufactured by NACALAI TESQUE, INC.] as a conductive filler were melted and kneaded with a twin-screw extruder under the conditions of 180°C, 100 rpm, and a residence time of 5 minutes, whereby a material of a resin current collector for a positive electrode was obtained. The obtained material of a resin current collector for a positive electrode was rolled by a hot press machine to produce a resin current collector for a positive electrode.

A weight proportion of the ester compound (A) included in monomers constituting the matrix resin was 100% by weight based on the total weight of the monomers constituting the matrix resin.

<Example 4-2>

A resin current collector for a positive electrode was produced in the same manner as in Example 4-1, except that 50 parts of titanium [product name "Titanium/powder", manufactured by The Nilaco Corporation] was used as the conductive filler.

A weight proportion of the ester compound (A) included in monomers constituting the matrix resin was 100% by weight based on the total weight of the monomers constituting the matrix resin.

<Example 4-3>

A resin current collector for a positive electrode was produced in the same manner as in Example 4-1, except that 25 parts of polymethyl methacrylate [PMMA, product name "Methyl methacrylate (polymer)", manufactured by NACALAI TESQUE, INC.] and 25 parts of polyvinyl chloride [PVC, product name "Polyvinyl chloride", manufactured by FUJIFILM Wako Pure Chemical Corporation] were used as the matrix resin.

A weight proportion of the ester compound (A) included in monomers constituting the matrix resin was 50% by weight based on the total weight of the monomers constituting the matrix resin.

<Example 4-4>

A resin current collector for a positive electrode was produced in the same manner as in Example 4-1, except that 10 parts of polymethyl methacrylate [PMMA, product name "Methyl methacrylate (polymer)", manufactured by NACALAI TESQUE, INC.] and 40 parts of polyvinyl chloride [PVC, product name "Polyvinyl chloride", manufactured by FUJIFILM Wako Pure Chemical Corporation] were used as the matrix resin.

A weight proportion of the ester compound (A) included in monomers constituting the matrix resin was 20% by weight based on the total weight of the monomers constituting the matrix resin.

<Example 4-5>

A resin current collector for a positive electrode was produced in the same manner as in Example 4-1, except that 25 parts of aluminum [product name "Aluminum (powder)", manufactured by NACALAI TESQUE, INC.] and 25 parts of titanium [product name "Titanium/powder", manufactured by The Nilaco Corporation] were used as the conductive filler.

A weight proportion of the ester compound (A) included in monomers constituting the matrix resin was 100% by weight based on the total weight of the monomers constituting the matrix resin.

<Example 4-6>

A resin current collector for a positive electrode was produced in the same manner as in Example 4-1, except that 49.5 parts of aluminum [product name "Aluminum (powder)", manufactured by NACALAI TESQUE, INC.] and 0.5 parts of carbon black [ENSACO, product name "E-250G", manufactured by Imerys G&C Japan] were used as the conductive filler.

A weight proportion of the ester compound (A) included in monomers constituting the matrix resin was 100% by weight based on the total weight of the monomers constituting the matrix resin.

<Comparative Example 4-1>

A resin current collector for a positive electrode was produced in the same manner as in Example 4-1, except that 50 parts of polypropylene [PP, product name "SunAllomer PC684S", manufactured by SunAllomer Ltd.] was used as the matrix resin.

A weight proportion of the ester compound (A) included in monomers constituting the matrix resin was 0% by weight based on the total weight of the monomers constituting the matrix resin.

<Comparative Example 4-2>

A resin current collector for a positive electrode was produced in the same manner as in Example 4-1, except that 50 parts of polypropylene [PP, product name "SunAllomer PC684S", manufactured by SunAllomer Ltd.] was used as the matrix resin, and 50 parts of carbon black [ENSACO, product name "E-250G", manufactured by Imerys G&C Japan] were used as the conductive filler.

A weight proportion of the ester compound (A) included in monomers constituting the matrix resin was 0% by weight based on the total weight of the monomers constituting the matrix resin.

<Comparative Example 4-3>

A resin current collector for a positive electrode was produced in the same manner as in Example 4-1, except that 50 parts of carbon black [ENSACO, product name "E-250G", manufactured by Imerys G&C Japan] were used as the conductive filler.

A weight proportion of the ester compound (A) included in monomers constituting the matrix resin was 100% by weight based on the total weight of the monomers constituting the matrix resin.

<Comparative Example 4-4>

A resin current collector for a positive electrode was produced in the same manner as in Example 4-1, except that 48 parts of aluminum [product name "Aluminum (powder)", manufactured by NACALAI TESQUE, INC.] and 2 parts of carbon black [ENSACO, product name "E-250G", manufactured by Imerys G&C Japan] were used as the conductive filler.

A weight proportion of the ester compound (A) included in monomers constituting the matrix resin was 100% by weight based on the total weight of the monomers constituting the matrix resin.

<Production of evaluation battery>

Half cells using the resin current collectors for a positive electrode produced in Examples 4-1 to 4-6 and Comparative Examples 4-1 to 4-4 were produced by the following method, respectively.

From a positive electrode side, a carbon-coated aluminum foil [product name "Carbon-coated aluminum foil", manufactured by TOYO ALUMINIUM K.K.], a resin current collector for a positive electrode (thickness: 0.5 mm, 6.25 $cm^2$), a separator [product name "#3501", manufactured by Celgard, LLC], a lithium metal foil (6.25 $cm^2$) [product name "Lithium foil (thickness 0.5 mm)", manufactured by Honjo Metal Co., Ltd.], and a copper foil (6.25 $cm^2$) [product name "Electrolytic copper foil (thickness 0.2 mm)", manufactured by FURUKAWA ELECTRIC CO., LTD.] were stacked in this order, and an electrolyte solution was injected thereto to produce a half cell.

As the electrolyte solution, an electrolyte solution including 1 M of $LiN(FSO_2)_2$ as an electrolyte and including, as a solvent, ethylene carbonate and propylene carbonate in a weight proportion of 1:1 was used.

<Measurement of initial irreversible capacity in 5 V charging>

Using the produced half cell, constant current charging and discharging was performed at 10 μA with an upper limit voltage of 5.0 V.

It was confirmed whether each of the half cells could be charged to 5.0 V. Further, in a case where the half cell could be charged to 5.0 V, an initial irreversible capacity (mAh/g) was measured from a difference between the initial charge capacity and the initial discharge capacity. The results are shown in Table 4-1.

[Table 4-1]

| | Matrix resin | | Conductive filler composition | | Initial irreversible capacity in 5 V charging (mAh/g) |
|---|---|---|---|---|---|
| | Type | Blending amount (part by weight) | Type | Blending amount (part by weight) | |
| Example 4-1 | PMMA | 50 | Aluminum | 50 | 51 |
| Example 4-2 | PMMA | 50 | Titanium | 50 | 55 |
| Example 4-3 | PMMA/ PVC | 25/25 | Aluminum | 50 | 59 |
| Example 4-4 | PMMA/PVC | 10/40 | Aluminum | 50 | 64 |
| Example 4-5 | PMMA | 50 | Aluminum/ titanium | 25/25 | 53 |
| Example 4-6 | PMMA | 50 | Aluminum/ carbon black | 49.5/0.5 | 58 |
| Comparative Example 4-1 | PP | 50 | Aluminum | 50 | 84 |
| Comparative Example 4-2 | PP | 50 | Carbon black | 50 | Cannot be charged in 5 V |
| Comparative Example 4-3 | PMMA | 50 | Carbon black | 50 | Cannot be charged in 5 V |
| Comparative Example 4-4 | PMMA | 50 | Aluminum/ carbon black | 48/2 | 90 |

From Examples, it was confirmed that, by using a resin current collector for a positive electrode, in which a matrix resin includes a polymer having a specific ester compound as an essential constituent monomer and includes, as a conductive filler, aluminum and/or titanium in a specific weight proportion, the charging voltage could be increased and the initial irreversible capacity could be reduced.

Industrial Applicability

The lithium ion battery current collector described above is a current collector in which contact resistance between the current collector and the active material layer can be reduced. Therefore, a lithium ion battery including an electrode using the current collector is suitable for use as a battery for electric vehicles, hybrid electric vehicles, and the like, and portable electronic devices.

Further, the resin current collector for a positive electrode described in the present specification is particularly useful as a resin current collector for a positive electrode for lithium ion batteries used in mobile phones, personal computers, hybrid vehicles, and electric vehicles.

Reference Signs List

1, 2: lithium ion battery current collector
10: resin current collector layer

11, 12: principal surface
20: recess
21: recess which is long in vertical direction and has elliptical shape
22: recess which is long in horizontal direction and has elliptical shape
30: conductive filler
40: mesh
101, 102: lithium ion battery current collector
110: resin current collector substrate (current collector substrate)
111: one principal surface
120: surface layer
130: surface layer
131: first layer
132: second layer
140: mesh
150: support
201, 202, 203: lithium ion battery current collector
211, 212: principal surface
220: resin current collector substrate
221: first film
222: second film
230: surface layer
231: first layer
232: second layer
240: electrode active material layer
250: lithium ion battery electrode
260: metal current collector substrate

**Claims**

**1.** A lithium ion battery current collector which is used in a lithium ion battery in contact with an electrode active material at one principal surface,

wherein the current collector is provided with a surface layer on the principal surface in contact with the electrode active material, and an uneven structure is provided on a surface in which the surface layer is in contact with the electrode active material,
the uneven structure is any of a plurality of recesses composed of closed figures as seen from above, a network structure, or a pattern of recesses and protrusions, which is provided in an outermost layer of the surface layer, and
a depth of the recess is 10 to 45 μm, a length of a shortest portion of lengths passing through a centroid of the recess is 30 to 105 μm, and a proportion of an area of the recess as seen from above is 19% to 61% with respect to an area of a surface of the current collector provided with the recess as seen from above.

**2.** The lithium ion battery current collector according to Claim 1, wherein the recess has two or more recesses having different shapes of figures as seen from above.

**3.** The lithium ion battery current collector according to Claim 1 or 2, wherein the recess has a recess having an aspect ratio of 2.0 to 4.0 and a recess having an aspect ratio of 0.25 to 0.5.

**4.** The lithium ion battery current collector according to any one of Claims 1 to 3, wherein the recess has an elliptical shape as seen from above.

**5.** The lithium ion battery current collector according to any one of Claims 1 to 4, wherein the current collector consists of a resin composition including a polymer material and a conductive filler.

**6.** The lithium ion battery current collector according to Claim 5, wherein the principal surface of the current collector in contact with the electrode active material has a conductive filler layer in which a large number of the conductive filler is distributed.

7. The lithium ion battery current collector according to Claim 1, wherein the network structure is a network structure having a mesh size of 20 to 200 μm and a thickness of 30 to 80 μm.

8. The lithium ion battery current collector according to Claim 1 or 7,

   wherein the current collector has a resin current collector substrate including a polymer material (2A3) and a conductive filler,
   the surface layer having the network structure is provided on the resin current collector substrate, and
   a softening point of the polymer material (2A3) is 100°C to 200°C.

9. The lithium ion battery current collector according to Claim 1, 7, or 8,

   wherein the surface layer consists of two layers,
   a first layer of the surface layer consists of a resin composition including a polymer material (2A2) and a conductive filler,
   the polymer material (2A2) has a glass transition temperature of 35°C or lower, and
   a second layer laminated on the first layer has a network structure.

10. The lithium ion battery current collector according to Claim 9,

   wherein the current collector has a resin current collector substrate including a polymer material (2A3) and a conductive filler, and
   the surface layer is provided on the resin current collector substrate.

11. The lithium ion battery current collector according to Claim 1,

   wherein the uneven structure is the pattern of recesses and protrusions,
   the lithium ion battery current collector has two surface layers on the principal surface in contact with the electrode active material,
   a first layer of the surface layer consists of a resin composition including a polymer material (3A1) and a conductive filler,
   the polymer material (3A1) has a glass transition temperature of 35°C or lower,
   a second layer laminated on the first layer consists of a resin composition including a polymer material (3A2) having a carboxylic acid group and a conductive filler,
   the second layer has a pattern of recesses and protrusions on a surface in contact with the electrode active material,
   the second layer is an outermost layer of the surface layer and is a layer in contact with the electrode active material, and
   the polymer material (3A1) and the polymer material (3A2) are different materials.

12. The lithium ion battery current collector according to Claim 11,

   wherein a height of the protrusion in the pattern of recesses and protrusions is 10 to 70 μm, and
   a surface roughness Ra is 5 to 25 μm.

13. The lithium ion battery current collector according to Claim 11 or 12, wherein the polymer material (3A2) is a vinyl resin having an SP value of 13 to 18.

14. The lithium ion battery current collector according to any one of Claims 11 to 13, wherein the polymer material (3A1) is a vinyl resin having an SP value of 9 to 10.

15. The lithium ion battery current collector according to any one of Claims 11 to 14,

   wherein the lithium ion battery current collector has a resin current collector substrate including a polymer material (3A3) and a conductive filler, and has the surface layer provided on the resin current collector substrate, and
   the first layer of the surface layer is a layer in contact with the resin current collector substrate.

**16.** A production method for a lithium ion battery current collector including a current collector substrate and a surface layer having a network structure provided on the current collector substrate, the method comprising:
a step of compressing the surface layer having the network structure onto the current collector substrate.

**17.** The production method for a lithium ion battery current collector according to Claim 16,

wherein the current collector substrate is a resin current collector substrate, and the resin current collector substrate consists of a resin composition including a polymer material (2A3) having a softening point of 100°C to 200°C and a conductive filler, and
the production method further comprises a step of compressing the resin current collector substrate to the surface layer while heating the resin current collector substrate to 100°C to 200°C using a heating tool.

**18.** The production method for a lithium ion battery current collector according to Claim 16, the method further comprising:

a first layer forming step of applying a solution including a polymer material (2A2) having a glass transition temperature of 35°C or lower and a conductive filler to the current collector substrate and drying the solution to form a first layer; and
a step of placing a second layer having a network structure on the first layer and compressing the second layer.

**19.** The production method for a lithium ion battery current collector according to Claim 16, the method further comprising:

a first layer forming step of applying a solution including a polymer material (2A2) having a glass transition temperature of 35°C or lower and a conductive filler to a support and drying the solution to form a first layer;
a surface layer forming step of placing a second layer having a network structure on the first layer and compressing the second layer to form a surface layer; and
a step of peeling off the support from the surface layer, placing the first layer of the surface layer on the current collector substrate, and compressing the surface layer to the current collector substrate.

**20.** A lithium ion battery electrode comprising:

the lithium ion battery current collector according to any one of Claims 1 to 15; and
an electrode active material particle,
wherein at least a part of a surface of the electrode active material particle is coated with a coating layer including a polymer compound.

[FIG. 1]

20
22
21
1
11
10
12
VERTICAL DIRECTION
HORIZONTAL DIRECTION

[FIG. 2]

1
L2 W2 G2 22
10
11
21
G1
L1
W1
VERTICAL DIRECTION
HORIZONTAL DIRECTION

[FIG. 3]

20
22
21
2
30
11
10
12
VERTICAL DIRECTION
HORIZONTAL DIRECTION

[FIG. 4]

120
101
A
A
110

[FIG. 5]

120
101
110

[FIG. 6]

102
B
132
130
131
B
110

[FIG. 7]

102
132
130
131
110

[FIG. 8]

201
211
232
230
231
220
212

[FIG. 9]

250
240
232
201
230
231
220

[FIG. 10]

202
232
230
231
222
220
221

[FIG. 11]

203
232
230
231
260

[FIG. 12]

40
11
10
12

[FIG. 13]

140
111
110

[FIG. 14]

140
131
110

[FIG. 15]

A
131
150

B
140
150
131

C
132
131
130
110

# INTERNATIONAL SEARCH REPORT

International application No.
PCT/JP2020/042598

A. CLASSIFICATION OF SUBJECT MATTER
C08L 33/06(2006.01)i; H01M 4/13(2010.01)i; H01M 4/36(2006.01)i; H01M 4/62(2006.01)i; H01M 4/66(2006.01)i; H01M 4/70(2006.01)i; C08K 3/08(2006.01)i
FI: H01M4/70 A; H01M4/66 A; H01M4/13; H01M4/36 C; H01M4/62 Z; C08K3/08; C08L33/06
According to International Patent Classification (IPC) or to both national classification and IPC

B. FIELDS SEARCHED

Minimum documentation searched (classification system followed by classification symbols)
C08L33/06; H01M4/64-4/84; H01M4/00-4/62; C08K3/08

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2012-089407 A (FUJIKURA LTD.) 10 May 2012 (2012-05-10) entire text, all drawings | 1-20 |
| A | JP 2019-160777 A (PANASONIC IP MANAGEMENT CO., LTD.) 19 September 2019 (2019-09-19) entire text, all drawings | 1-20 |
| A | JP 11-073947 A (RICOH CO., LTD.) 16 March 1999 (1999-03-16) entire text, all drawings | 1-20 |
| A | JP 2000-243403 A (MATSUSHITA ELECTRIC INDUSTRIAL CO., LTD.) 08 September 2000 (2000-09-08) entire text, all drawings | 1-20 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 04 January 2021 (04.01.2021) | 19 January 2021 (19.01.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No. PCT/JP2020/042598

C (Continuation). DOCUMENTS CONSIDERED TO BE RELEVANT

| Category* | Citation of document, with indication, where appropriate, of the relevant passages | Relevant to claim No. |
|---|---|---|
| A | JP 2011-151279 A (SONY CORP.) 04 August 2011 (2011-08-04) entire text, all drawings | 1-20 |
| A | JP 2007-059387 A (MATSUSHITA ELECTRIC INDUSTRIAL CO., LTD.) 08 March 2007 (2007-03-08) entire text, all drawings | 1-20 |
| A | JP 2010-262843 A (FURUKAWA ELECTRIC CO., LTD.) 18 November 2010 (2010-11-18) entire text, all drawings | 1-20 |
| A | JP 2010-080432 A (PANASONIC CORP.) 08 April 2010 (2010-04-08) entire text, all drawings | 1-20 |
| A | JP 2019-057474 A (UACJ CORPORATION) 11 April 2019 (2019-04-11) entire text, all drawings | 1-20 |
| A | WO 2019/097830 A1 (PANASONIC IP MANAGEMENT CO., LTD.) 23 May 2019 (2019-05-23) entire text, all drawings | 1-20 |
| A | WO 2019/151063 A1 (SHARP CORP.) 08 August 2019 (2019-08-08) entire text, all drawings | 1-20 |
| A | WO 2011/093015 A1 (PANASONIC CORP.) 04 August 2011 (2011-08-04) entire text, all drawings | 1-20 |

Form PCT/ISA/210 (continuation of second sheet) (January 2015)

**INTERNATIONAL SEARCH REPORT**
Information on patent family members

International application No.
PCT/JP2020/042598

| Patent Documents referred in the Report | Publication Date | Patent Family | Publication Date |
|---|---|---|---|
| JP 2012-089407 A | 10 May 2012 | (Family: none) | |
| JP 2019-160777 A | 19 Sep. 2019 | US 2019/0280339 A1 the whole document EP 3537522 A1 the whole document | |
| JP 11-073947 A | 16 Mar. 1999 | (Family: none) | |
| JP 2000-243403 A | 08 Sep. 2000 | (Family: none) | |
| JP 2011-151279 A | 04 Aug. 2011 | US 2012/0021280 A1 the whole document | |
| JP 2007-059387 A | 08 Mar. 2007 | US 2009/0104529 A1 the whole document | |
| JP 2010-262843 A | 18 Nov. 2010 | (Family: none) | |
| JP 2010-080432 A | 08 Apr. 2010 | US 2011/0111277 A1 the whole document | |
| JP 2019-057474 A | 11 Apr. 2019 | (Family: none) | |
| WO 2019/097830 A1 | 23 May 2019 | US 2019/0252688 A1 the whole document | |
| WO 2019/151063 A1 | 08 Aug. 2019 | (Family: none) | |
| WO 2011/093015 A1 | 04 Aug. 2011 | US 2012/0301783 A1 the whole document | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2013018686 A
- JP 2017054703 A
- JP H10255805 A
- JP 2019087489 A
- WO 2015005116 A
- JP 2015005117 A
- JP 2012150905 A
- JP 2015005116 A


### Non-patent literature cited in the description


- **ROBERT F. FEDORS.** *POLYMER ENGINEERING AND SCIENCE,* February 1974, vol. 14 (2), 147-154